# EUROPEAN PATENT APPLICATION

(11) **EP 2 908 236 A1**
(43) Date of publication of application: **19.08.2015**
(21) Application number: 15153072.2
(22) Date of filing: 29.01.2015
(51) Int. Cl.: G06F 3/0487

(54) **Electronic device and index display method thereof**

(30) Priority: 13.02.2014 KR 20140016600; 28.02.2014 KR 20140024383
(71) Applicant: Samsung Electronics Co., Ltd, Gyeonggi-do 443-742 (KR)
(72) Inventor: Hwang, Seong-Hee, Gyeongsangbuk-do (KR)
(74) Representative: HGF Limited

(57) **Abstract**

An electronic device is provided. The electronic device includes a flexible display, a detector, and a controller. The detector detects bending of the flexible display. The controller displays contents on the flexible display, and displays first contents related to the contents on a bending region where the bending has been detected based on a signal output from the detector.

## Description

### TECHNICAL FIELD

The present disclosure relates to an electronic device including a flexible display and an index display method thereof.

### BACKGROUND

Aided by development of an electronic technology, various types of display devices are under development. Display devices such as a television (TV), a personal computer (PC), a laptop computer, a tablet PC, a mobile phone, a Motion Picture Experts Group (MPEG-1 or MPEG-2) Audio Layer III (MP3) player, and the like, are widely distributed, so that they are used in most of households.

Recently, to meet needs of a user who desires newer and more various functions, efforts for developing a display device in a newer form is being made. That is a so-called next generation display.

An example of the next generation display device is a flexible display. A flexible display means a display having a characteristic that the display's shape may be transformed like paper.

Since a user may transform the shape of the flexible display by exerting force on the flexible display and bending the same, the flexible display may be used for various purposes. For example, the flexible display may be implemented as a portable device such as a mobile phone, a tablet PC, a laptop computer, an electronic device, a PDA, an MP3 player, and the like.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide an electronic device and a control method thereof, that may display various indexes depending on the size, position, and direction of bending in a flexible display.

In accordance with an aspect of the present disclosure, a method for controlling an electronic device is provided. The method may include displaying contents including a plurality of items on a flexible display functionally connected to the electronic device, detecting bending of the flexible display, and displaying first contents related to the contents on a bending region in response to the bending.

In accordance with another aspect of the present disclosure, a method for controlling an electronic device is provided. The method includes displaying contents on a flexible display functionally connected with the electronic device, detecting a first bending at the electronic device, displaying a plurality of items related to the contents and having a hierarchical structure on a bending region in response to the first bending, detecting a second bending of the flexible display with one of the plurality of items selected, and displaying one of an upper layer item or a lower layer item of the selected item in response to a direction of the second bending.

In accordance with another aspect of the present disclosure, a method for controlling an electronic device is provided. The method includes displaying a first page among contents formed of a plurality of pages on a flexible display functionally connected with the electronic device, detecting first bending of the flexible display, displaying first contents including information for exploring a specific item among a plurality of items included in the first page on a bending region where the first bending has been detected in response to the first bending, detecting second bending of the flexible display with the first contents displayed, displaying second contents including information for exploring a specific item among a plurality of items included in a second page among the contents on a bending region where the second bending has been detected in response to the second bending, and switching the contents to the second page and displaying the same.

In accordance with another aspect of the present disclosure, a method for controlling an electronic device is provided. The method includes displaying first page among contents comprising a plurality of pages on a flexible display functionally connected with an electronic device;, detecting bending of the flexible display, displaying, when a position where the bending has been detected is a first region of the flexible display, first contents related to a next page of the first page on the first region, and displaying, when the position where the bending has been detected is a second region of the flexible display, second contents related to a previous page of the first page on the second region of the flexible display.

In accordance with another aspect of the present disclosure, an electronic device is provided. The electronic device includes a flexible display, a detector configured to detect bending of the flexible display, and to output a signal corresponding thereto and a controller configured to display contents including a plurality of items on the flexible display, and to display first contents related to the contents on a region where the bending has been detected based on the signal

In accordance with another aspect of the present disclosure, an electronic device is provided. The electronic device includes a flexible display, a detector configured to detect bending of the flexible display, and to output a signal corresponding thereto, and a controller configured to display contents on the flexible display, to detect a first bending of the flexible display based on a signal output from the detector, to display a plurality of items related to the contents and having a hierarchical structure on a region where the first bending has been detected, to detect a second bending of the flexible display with one of the plurality of items selected, and to display an upper layer item or a lower layer item of the selected item in response to a direction of the second bending.

In accordance with another aspect of the present disclosure, an electronic device is provided. The electronic device includes a bendable flexible display configured to display contents, a detector configured to detect bending in at least a partial region of the flexible display, and to output a corresponding signal thereto, and a controller configured to determine an attribute including at least one of a direction, a pressure, a speed, or a size related to the bending based on the signal, to display, when the attribute is a first attribute, first contents related to the contents on the at least partial region or another region of the flexible display, and to display, when the attribute is a second attribute, second contents related to the contents on the at least partial region or another region of the flexible display.

In accordance with another aspect of the present disclosure, an electronic device is provided. The electronic device includes a flexible display, a detector configured to detect bending of the flexible display, and a controller configured to display a first page among contents configured using a plurality of pages on the flexible display, to detect first bending of the flexible display from the detector, to display first contents including information for exploring a specific item among a plurality of items included in the first page on a bending region where the first bending has been detected in response to the first bending, to detect second bending of the flexible display with the first contents displayed, to display second contents including information for exploring a specific item among a plurality of items included in a second page among the contents on a bending region where the second bending has been detected in response to the second bending, and to switch the contents to the second page and displaying the same.

In accordance with another aspect of the present disclosure, a method for displaying an index in an electronic device including a flexible display is provided. The method includes displaying contents on the flexible display, detecting bending of the flexible display, and displaying a first index related to the contents on a region where the bending has been detected in response to the bending.

In accordance with another aspect of the present disclosure, an electronic device is provided. The electronic device includes a flexible display, and a controller configured to display a first page among contents including a plurality of pages on the flexible display, detecting bending of the flexible display, to display, when a position where the bending has been detected is a first region of the flexible display, first contents related to a next page of the first page on the first region, and to display, the position where the bending has been detected is a second region of the flexible display, second contents related to a previous page of the first page on the second region.

Other aspects, advantages and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram illustrating configuration of a flexible display device according to an embodiment of the present disclosure;
FIG. 2 is a view illustrating a state where a corner portion has been shape-transformed according to an embodiment of the present disclosure;
FIG. 3 is a view illustrating a state where an edge portion has been shape-transformed according to an embodiment of the present disclosure;
FIGS. 4A, 4B, 4C, and 4D are views illustrating regions where shape transformation may be performed according to an embodiment of the present disclosure;
FIGS. 5A and 5B are views illustrating an example of a shape transformation direction according to an embodiment of the present disclosure;
FIGS. 6A, 6B, 6C, and 6D are views for discriminating a shape transformation degree according to an embodiment of the present disclosure;
FIG. 7 is a view illustrating an example of configuration of a display unit according to an embodiment of the present disclosure;
FIGS. 8, 9, 10, 11, 12, 13, 14, 15, 16, 17, 18, 19, 20, 21, 22, 23, 24, 25, 26, 27, 28, 29, and 30 are views illustrating configuration of a display unit whose shape may be transformed and a method for detecting shape transformation according to an embodiment of the present disclosure;
FIG. 31 is a block diagram illustrating configuration of a flexible display device according to various embodiments of the present disclosure according to an embodiment of the present disclosure;
FIG. 32 is a view illustrating an example of program configuration stored in a storage of FIG. 31 according to an embodiment of the present disclosure;
FIG. 33 is a view illustrating a process where a user turns a page; according to an embodiment of the present disclosure
FIGS. 34A, 34B, 34C, 34D, and 34E are views illustrating a first index is displayed on a region where bending has been detected in a flexible display according to an embodiment of the present disclosure;
FIGS. 35 and 36 are flowcharts illustrating a process where a first index and a second index are represented depending on a size of bending in a flexible display device according to an embodiment of the present disclosure;
FIGS. 37A, 37B, and 37C are views illustrating a process where a first index and a second index are represented depending on bending of a flexible display device according to an embodiment of the present disclosure;
FIG. 38 is a flowchart illustrating a process for displaying a first index or a second index depending on a bending direction in a flexible display device according to an embodiment of the present disclosure;
FIGS. 39A, 39B, and 39C are views illustrating a first index or a second index is displayed depending on bending direction of a flexible display according to an embodiment of the present disclosure;
FIG. 40 is a flowchart illustrating a process for moving between hierarchies in an item list having a hierarchical structure depending on a direction of bending according to an embodiment of the present disclosure;
FIGS. 41A, 41B, and 41C are a view illustrating a list of an upper layer or a lower layer depending on a direction of bending of a flexible display according to an embodiment of the present disclosure;
FIGS. 42A, 42B, and 42C are views illustrating that bending is detected with an item selected, and displaying an upper layer list or a lower layer list on a flexible display depending on a direction of bending according to an embodiment of the present disclosure;
FIG. 43 is a flowchart illustrating a process for displaying a first index and a second index depending on a size of bending according to an embodiment of the present disclosure;
FIGS. 44A, 44B, 44C, 44D, 44E, 44F, 44G, 44H, 44I, and 44J are views illustrating a region where contents are displayed is transformed when a first index and a second index are displayed on a flexible display according to an embodiment of the present disclosure;
FIGS. 45A, 45B, 45C, and 45D are flowcharts illustrating a process for displaying a first index and a second index depending on a direction of bending and movement of a bending line in a flexible display according to an embodiment of the present disclosure;
FIGS. 46A, 46B, 46C, 46D, and 46E are views illustrating a process where a first index, a second index, a third index and/or a fourth index are displayed depending on movement of a bending line according to an embodiment of the present disclosure;
FIG. 47 is a flowchart illustrating a processing process when detecting bending and a touch in a flexible display according to an embodiment of the present disclosure;
FIGS. 48A, 48B, 48C, 48D, and 48E are views illustrating a process where first bending and second bending occur in a flexible display, and a first index and a second index are displayed in response thereto according to an embodiment of the present disclosure;
FIGS. 49A, 49B, 49C, and 49D are views illustrating an example of displaying different indexes on bending regions, respectively, depending on contents displayed on a flexible display and a bending position according to an embodiment of the present disclosure;
FIGS. 50A, 50B, and 50C are views illustrating another example of displaying different indexes on bending regions, respectively, depending on contents displayed on a flexible display and a bending position according to an embodiment of the present disclosure; and
FIGS. 51A, 51B, 51C, and 51D are views illustrating yet another example of displaying different indexes on bending regions, respectively, depending on contents displayed on a flexible display and a bending position according to an embodiment of the present disclosure.

Throughout the drawings, like reference numerals will be understood to refer to like parts, components and structures.

### DETAILED DESCRIPTION

The following description with reference to the accompanying drawings is provided to assist in a comprehensive understanding of various embodiment of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein may be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

A touch is not limited to contact between a flexible display and a user's body or an input unit that may touch (for example, a touch pen), but may include a non-contact (for example, may include hovering where a detectable interval between a flexible display and a user's body or an input unit is 30 mm or less). A non-contact interval detectable at the flexible display may change depending on performance or a structure of an electronic device.

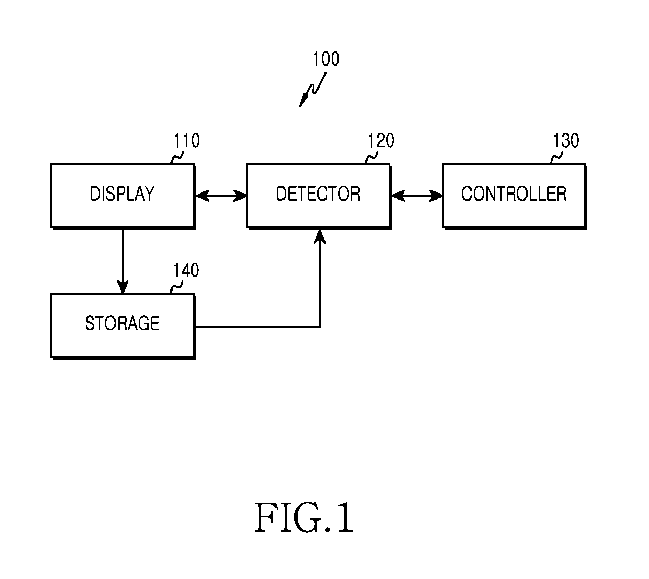

FIG. 1 is a block diagram illustrating configuration of a flexible display device according to an embodiment of the present disclosure. The flexible display device may be an electronic device including a flexible display. The flexible display device has a flexible characteristic. Accordingly, when force is exerted from the outside, the shape of the flexible display device is transformed depending on the magnitude and action direction of the force. The flexible display device may be implemented as various types of display devices such as a mobile phone, a tablet PC, a laptop MP3 player, an electronic frame, a TV, a monitor, a digital watch, a wearable device, and the like.

Referring to FIG. 1, the flexible display device 100 includes a display unit 110, a detector 120, a controller 130, and a storage 140.

The display unit 110 is a flexible display, has a flexible characteristic, and displays various screens such as a contents reproduction screen or a background screen including an icon, an application execution screen, a broadcasting reception screen, and the like, under control of the controller 130.

The detector 120 detects whether the shape of the display unit 110 is transformed. Shape transformation means a state bent by force exerted to the flexible display device 100. The shape transformation may be differently called bending. More specifically, when a curvature radius is equal to or greater than a predetermined value, the shape transformation may be called general bending, and when the curvature radius is less than the predetermined value, the shape transformation may be called folding. However, for convenience in description, the present specification names both the general bending and the folding bending.

Besides, depending on various conditions such as a position, a direction, an angle, intensity, velocity, maintaining time, a frequency, and the like, where shape transformation has been performed, a kind of the shape transformation may be discriminated, which is descried below specifically.

The detector 120 may include a touch sensor, and detect a touch occurring on the display unit 110.

The storage 140 may store various kinds of programs used by the flexible display device 100, contents, user setting information, authentication information, and other various information.

The controller 130 controls an overall operation of the flexible display device 100 depending on a characteristic of shape transformation detected by the detector 120.

Specifically, when a first shape transformation state is detected, the controller 130 stores information regarding an operation state of the flexible display device 100 in the storage 140. The first shape transformation state means a state where the flexible display device 100 has been transformed to a shape set in advance. For example, a state where the flexible display device 100 is bent and the bent state is maintained for a time set in advance may be the first shape transformation state. The controller 130 may store information at a point of starting to detect the shape transformation, and may store information at a point where it has been determined that the shape transformation is maintained for a predetermined time or more, of course.

When the flexible display device 100 is executing an application, the controller 130 may store information regarding the application being executed and the execution screen in the storage 140. Alternatively, when the flexible display device 100 is reproducing multimedia contents such as a moving picture or an audio file, the controller 130 may store information of the multimedia contents, and information regarding a reproduction degree, and the like, in the storage 140. Alternatively, when the flexible display device 100 is displaying an arbitrary screen, the controller 130 may store information regarding the screen being displayed in the storage 140. Besides, information regarding various operation states of the flexible display device 100 is stored in the storage 140.

To determine whether the first shape transformation state has occurred as described above, when shape transformation is detected, the controller 130 checks whether the shape transformation state is maintained for a time set in advance. Here, the maintaining of the shape transformation state means that the bent state continues without more bending or release of the bent state. For convenience in description, the present specification names a state where shape transformation is performed and then maintained for a predetermined time or more a bending & hold gesture. Also, a state where shape transformation is performed but is not maintained and is immediately unfolded to the original state is named a bending & flat gesture. An operation of being unfolded to the original state may be named unfolding and unbending besides flat. The detector 120 may determine whether flat has occurred by sensing an unfolded angle, position, direction, intensity, velocity, and the like.

In the case where a shape transformation state is maintained, that is, it is determined that a bending & hold gesture is performed, the controller 130 performs an operation corresponding to the shape transformation state. An operation performed at this point may be implemented variously depending on an embodiment. An example of this operation is described specifically in the latter portion.

Alternatively, in the case where a bending & flat gesture where a shape transformation state is not maintained and is immediately unfolded to the original state is performed, the controller 130 may perform an operation corresponding to the bending & flat gesture. An operation corresponding to the bending & hold gesture and an operation corresponding to the bending & flat gesture may be set differently.

When a second shape transformation state is detected while a first shape transformation state is detected and a corresponding function is performed, the controller 130 ends the function that has been performed, and restores to an operation state that has been performed before the shape transformation. The second shape transformation state may be set variously. For example, the second shape transformation state may be a state where the first shape transformation state is released and the flexible display device 100 is unfolded flat again. Alternatively, a case where a bending & flat gesture or a bending & hold gesture is additionally performed under a state where the first shape transformation state has been performed may be defined as the second shape transformation state.

When the second shape transformation state is detected, the controller 130 may restore to the original operation state by utilizing information stored in the storage 140.

In contrast, in the case where a bending and flat gesture has been performed, the controller 130 does not restore to the original operation state even under a state where shape transformation has not been performed. For example, in the case where a bending & flat gesture is performed while contents are reproduced and a contents change function corresponds to the bending & flat gesture, the controller 130 changes the contents to the next contents or previous contents according to the bending & flat gesture and reproduces the same.

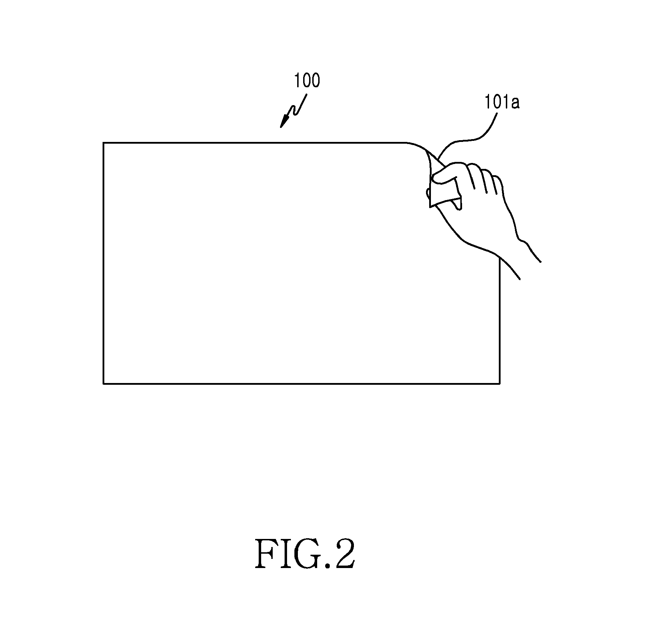

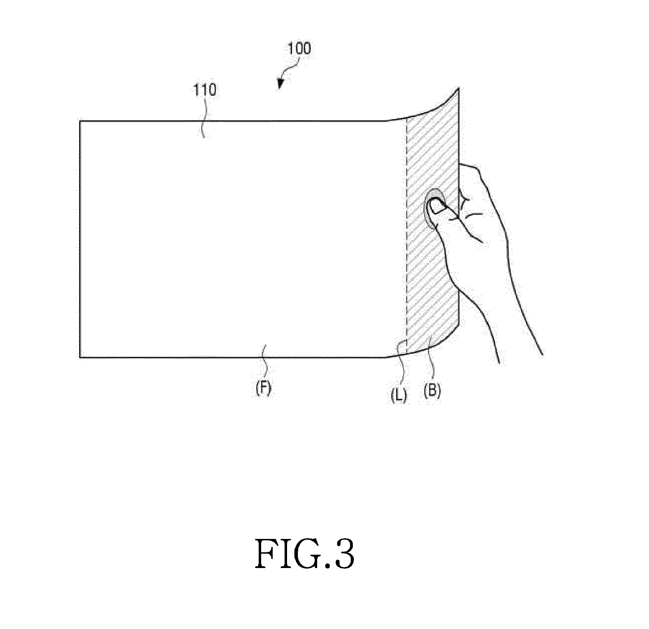

FIGS. 2 and 3 illustrate an example of shape transformation performed in various portions of the flexible display device according to an embodiment of the present disclosure.

Referring to FIG. 2, a user grips the right upper corner 101a of the flexible display device 100 and bends the same, and then maintains the state.

Referring to FIG. 3, a bent state of the edge portion of the flexible display device 100 is maintained according to an embodiment of the present disclosure. When bending is performed in the upward direction with the right edge portion of the flexible display device 100 gripped, a bending region B is formed. Accordingly, an entire region of the display unit 110 is divided into the bending region B where bending is detected, a flat region F where bending is not detected, and a boundary line L thereof. The boundary line L between the bending region B and the flat region F may be called differently a bending line.

When a bending degree and the bending region are not changed and are maintained for a time set in advance (e.g., 0.5 seconds) with the bending detected, the controller 130 determines a bending & hold gesture has been performed and performs a corresponding operation. An operation content may change depending on an operation state of the flexible display device 100 of a point at which the bending has started.

Though FIGS. 2 and 3 illustrate the case where bending is performed in the corner portion and the edge portion, the bending may be performed in various positions. A position where bending is performed may be classified into a corner region, an edge region, a center region, a diagonal region, and the like, so that a user may clearly discriminate an input.

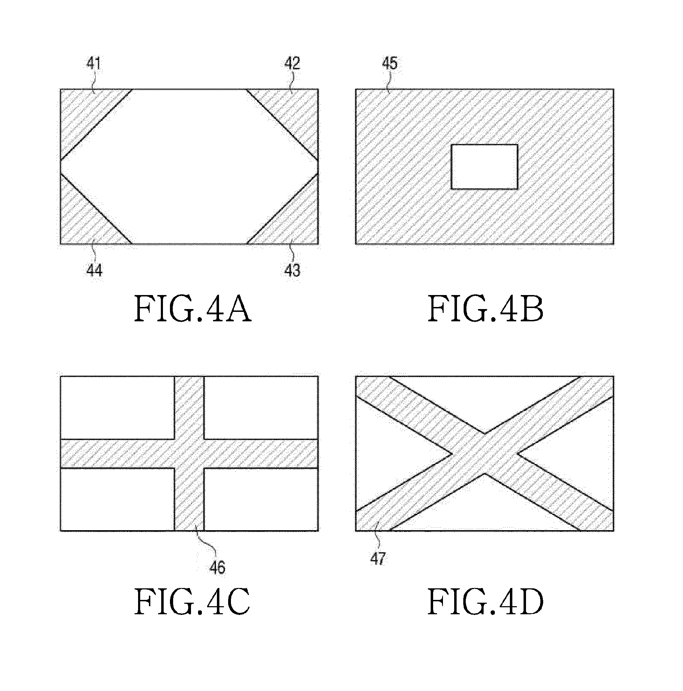

FIGS. 4A, 4B, 4C and 4D are a view explaining a position where bending may be performed according to an embodiment of the present disclosure.

Referring to FIGS. 4A, 4B, 4C and 4D, the position where bending may be performed may be classified into twelve positions in total such as up/down/left/right corner regions, up/down/left/right edge regions, a vertical center region, a horizontal center region, a left diagonal region, and a right diagonal region. Therefore, the position where bending may be performed may be classified into twelve positions depending on a position where a bending line is formed without detailed discrimination of the slope of the bending line or a position thereof. That is, even when bending is not performed along an accurate line, as long as the bending is performed within a region having a predetermined area, a corresponding operation may be performed.

Referring to FIG. 4A a case of designating four up/down/left/right corner regions 41, 42, 43, 44 as bending regions is illustrated. In the case where a bending detection region is set, as long as a bending & hold gesture or a bending & flat gesture is performed within an arbitrary corner region, a function corresponding to the corner region and the gesture kind is performed. For example, when a bending & hold gesture is performed in a corner portion, a function corresponding to each corner region among functions that may be provided by an application currently being executed is performed.

Referring to FIG. 4B, a case of designating an edge region 45 excluding a center portion as a bending detection region is illustrated. When bending is performed in the edge portion on the up/down/left/right sides, a function corresponding to a gesture is performed. For example, when a bending & hold gesture is performed in the edge region, the controller 130 opens an option region in the bent portion. Various types of objects such as a message input window, an alarm window, a menu bar, an information window, a soft keyboard, an image edit tool, a contents list, a clip board, and the like, may be displayed on the option region. The image edit tool may include various kinds of tools for editing an image such as a pen, an eraser, a brush, a compass, a ruler, paint palette, and the like. The menu bar means a bar interface where various kinds of menus for controlling a screen displayed on an existing region are listed at least one line.

Referring to FIG. 4C, a case of designating a bending detection region 46 for detecting bending crosses the center is illustrated.

Referring to FIG. 4D, a case of designating a bending detection region 47 for detecting bending in a diagonal direction is illustrated. Referring to FIGS. 4C and 4D, when bending is performed across the center in the vertical direction or horizontal direction or bending is performed across the center in the diagonal direction, a function corresponding to the gesture is performed. For example, when a bending and & hold gesture is performed on a position of FIG. 4C or 4D, a high rank function influencing the flexible display device or an overall screen is performed. The high rank function includes a function of turning on or turning off the power of the flexible display device, or a function of turning on or turning off only the screen, a function of ending an application currently being executed, and the like.

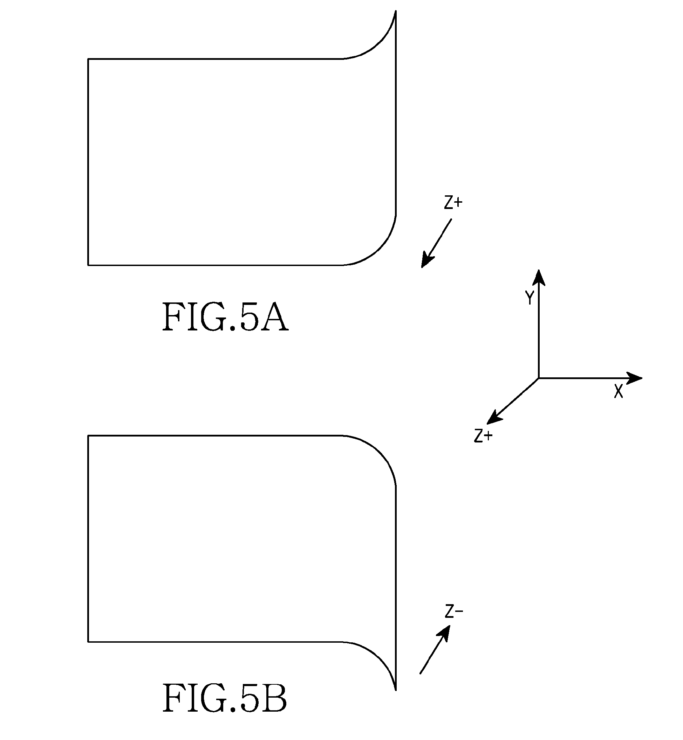

FIGS. 5A and 5B illustrates an example of a bending direction according to an embodiment of the present disclosure.

Referring to FIG. 5A, a direction coming from the surface of the display unit 110 of the flexible display device 100 may be defined as a Z+ direction.

Referring to FIG. 5B, a direction going to the surface of the display unit 110 may be defined as a Z- direction. That is, the Z+ direction is a direction in which the surface of the display unit 110 is folded into the inside, and the Z- direction means a direction in which the surface of the display unit 110 is folded to the outside. Depending on setting, addition and an increase feedback may be provided to bending in the Z+ direction, and reduction and a release feedback may be provided to bending in the Z- direction. For example, feedback such as a channel number increase, a sound volume increase, switching to the next contents, fast forward, switching to the next page, and the like, may be provided for bending in the Z+ direction, and feedback such as a channel number reduction, a sound volume reduction, switching to previous contents, rewind, switching to a previous page, and the like, may be provided for bending in the Z- direction.

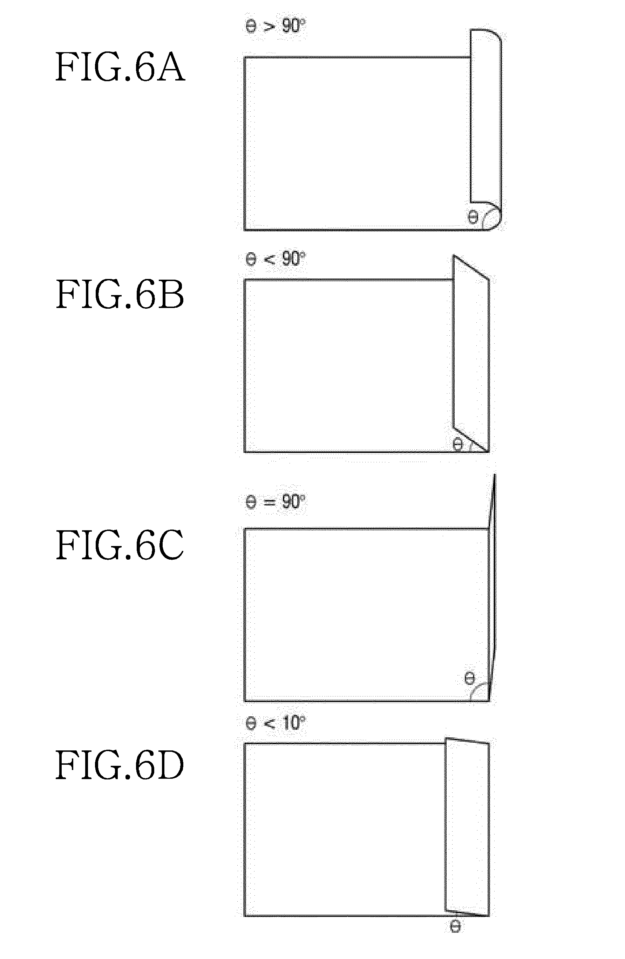

FIGS. 6A, to 6D illustrates an example of a bending angle.

Referring to FIG. 6A illustrates a state where bending is performed gently according to an embodiment of the present disclosure. In the case where a user may discriminate an input, a bending angle may be classified into an acute angle, an obtuse angle, 90 degrees, less than 10 degrees, and the like, and functions may correspond to respective angles. That is, different functions may correspond, respectively, to a case where a bending angle θ exceeds 90 degrees.

Referring to FIG. 6B, a case where a bending angle θ is less than 90 degrees (that is, 10-90 degrees).

Referring to FIG. 6C, a case where a bending angle θ is 90 degrees, a case where the display unit is completely bent and the bending angle is less than 10 degrees, and the like.

Referring to FIG. 6D, case where the bending angle is less than 10 degrees has been illustrated, the angle range may be variously set. A case where bending is performed to a level of FIG. 6B or 6D may be named folding.

The display unit 110 may be shape-transformed in various shapes at various positions as described above.

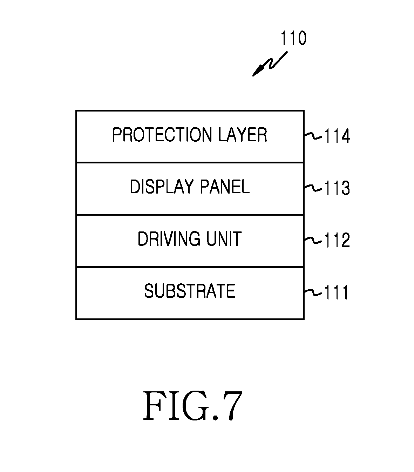

FIG. 7 illustrates an example of configuration of the display unit 110 having a flexible characteristic according to an embodiment of the present disclosure.

Referring to FIG. 7, the display unit 110 includes a substrate 111, a driving unit 112, a display panel 113, and a protection layer 114. Also, the display unit 110 may include a touch input unit (not shown). The touch input unit may include a touch sensor.

A flexible display device means a device that may be warped, bent, folded, or rolled like paper while maintaining a display characteristic of an existing flat display device. Therefore, the flexible display device should be manufactured on a flexible substrate.

Specifically, the substrate 111 may be implemented using a plastic substrate (for example, a polymer film) that may be transformed by external pressure.

The plastic substrate has a structure where a base film is double-sided with barrier coating. The base film may be implemented using various resins such as Polyimide (PI), Polycarbonite (PC), Polyethyleneterephtalate (PET), Polyethersulfone (PES), Polythylenenaphthalate (PEN), Fiber Reinforced Plastic (FRP), and the like. Also, the barrier coating may be performed on surfaces of the base film opposite to each other, and an organic film or an inorganic film may be used for maintaining flexibility.

For the substrate 111, a material having a flexible characteristic such as a thin glass layer or a metal foil, and the like, besides a plastic substrate may be used.

The driving unit 112 drives the display panel 113. Specifically, the driving unit 112 applies a driving voltage to a plurality of pixels forming the display panel 113, and may be implemented using a-si TFT, low temperature poly silicon (LTPS) TFT, organic TFT (OTFT), and the like. The driving unit 112 may be implemented in various shapes depending on an implementation form of the display panel 113.

For example, the display panel 113 may include an organic luminous body formed of a plurality of pixel cells and an electrode layer covering both sides of the organic luminous body. In this case, the driving unit 112 may include a plurality of transistors corresponding to respective pixel cells of the display panel 113. The controller 130 applies an electric signal to a gate of each transistor to allow a pixel cell connected to a transistor to emit light. Accordingly, the display panel 113 may display various kinds of screens.

Alternatively, the display panel 113 may be implemented using an EL, an electrophoretic display (EPD), an electrochromic display (ECD), a liquid crystal display (LCD), an AMLCD, a plasma display panel (PDP), and the like, besides an organic light emitting diode. However, in case of an LCD, a separate backlight is required because the LCD cannot emit light in itself. An LCD that does not use a backlight uses ambient light. Therefore, to use the LCD display panel 113 without a backlight, a condition such as the outside environment where an amount of light is sufficient should be met.

The protection layer 114 protects the display panel 113. For example, for the protection layer 114, materials such as ZrO, CeO₂, and ThO₂ may be used. The protection layer 114 may be manufactured in a transparent film shape to cover the entire surface of the display panel 113.

Meanwhile, unlike the illustration of FIG. 2, the display unit 110 may be implemented using electronic paper. The electronic paper is a display that applies a characteristic of general ink to paper, and is different from a general flat display in that it uses reflected light. Meanwhile, the electronic paper may change a figure or a character using a twist ball or using electro-phoresis that uses a capsule.

Meanwhile, in the case where the display unit 110 is formed of an element of a transparent material, the display unit 110 may be implemented as a display device having a transparent characteristic while it is bendable. For example, in the case where the substrate 111 is implemented using a polymer material such as plastics having a transparent characteristic, the driving unit 112 is implemented using a transparent transistor, and the display panel 113 is implemented using a transparent organic light-emitting layer and a transparent electrode, the display device may have transparency.

A transparent transistor means a transistor manufactured by replacing opaque silicon of an existing thin film transistor with a transparent material such as a transparent zinc oxide, titanium oxide, and the like. Also, for a transparent electrode, a new material such as indium tin oxide (ITO) or graphene may be used. Graphene means a material where carbon atoms are connected with one another to form a honeycombed plane structure and having a transparent characteristic. Besides, a transparent organic light-emitting layer may be implemented using various materials.

The display unit 110 may be formed on an overall area or a partial area of the flexible display device 100. The detector 120 may be prepared inside the display unit 110 to detect whether the shape of the display unit 110 is transformed. Also, the detector 120 may be prepared outside the display unit 110. Also, a portion of the detector 120 may be prepared inside the display unit 110 and another portion of the detector 120 may be prepared outside the display unit 110. For example, a touch sensor and a bend sensor may be prepared inside the display unit 110, and a geomagnetic sensor, a gyro sensor, an acceleration sensor, a pressure sensor, a proximity sensor, and a grip sensor may be prepared outside the display unit 110.

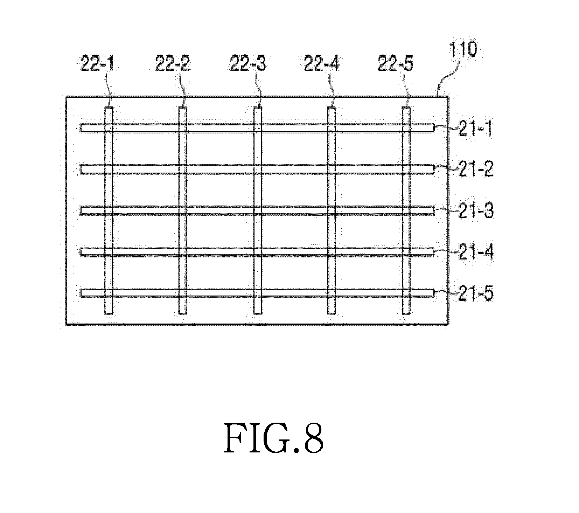

FIGS. 8 to 30 are views explaining a kind of shape transformation detectable at a flexible display device and a detecting method thereof according to an embodiment of the present disclosure.

The flexible display device 100 may detect shape transformation using various structures. For example, the detector 120 may include a bend sensor disposed on one surface such as the front side or the backside of the display unit 110, or a bend sensor disposed on both sides. The controller 130 may detect shape transformation using a value sensed by the bend sensor of the detector 120.

Here, the bend sensor means a sensor having a characteristic that may be bent in itself and whose resistance value changes depending on a bent degree. The bend sensor may be implemented in various forms such as an optical fiber bending sensor, a pressure sensor, a strain gauge, and the like.

The detector 120 may detect a resistance value of the bend sensor using the magnitude of a voltage applied to the bend sensor or the magnitude of a current flowing through the bend sensor, and detect a shape transformation state at a position of the relevant bend sensor depending on the magnitude of the resistance value.

Though FIG. 8 illustrates a state where the bend sensor is mounted on the front side of the display unit 110, this is a mere example and the bend sensor may be mounted on the backside of the display unit 110, and mounted on both sides. Also, the shape, the number, and the disposed position of the bend sensors may be changed variously. For example, one bend sensor or a plurality of bend sensors may be coupled to the display unit 110. Here, though one bend sensor may detect one bending data, one bend sensor may have a plurality of sensing channels for detecting a plurality of shape transformation states.

FIG. 8 illustrates an example where bend sensors of a plurality of bar shapes are arranged in the horizontal direction and the vertical direction to form a lattice shape according to an embodiment of the present disclosure.

Referring to FIG. 8, a bend sensor includes bend sensors 21-1 to 21-5 listed in a first direction and bend sensors 22-1 to 22-5 listed in a second direction perpendicular to the first direction. The respective bend sensors may be separated and disposed with a predetermined interval.

The bend sensors 21-1 to 21-5 and 22-1 to 22-5 are disposed in a group of 5 in the horizontal direction and the vertical direction, respectively, this is a mere example and the number of bend sensors may change depending on the size, and the like, of the flexible display device, of course. As described above, disposing the bend sensors in the horizontal direction and the vertical direction is for detecting shape transformation performed on an overall region of the flexible display device. In the case where only a portion of the flexible display device has a flexible characteristic or shape transformation needs to be detected for only a portion, the bend sensor may be disposed on the relevant portion.

The respective bend sensors 21-1 to 21-5 and 22-1 to 22-5 may be implemented in a form of an electric resistance sensor that uses electric resistance or a micro optical fiber sensor that uses a transformation rate of an optical fiber. Hereinafter, for convenience in description, description is made on a case where the bend sensor is implemented using an electric resistance sensor.

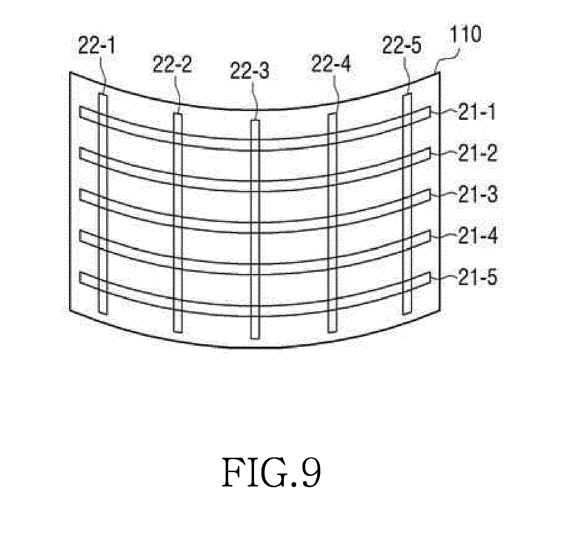

Referring to FIG. 9, in the case where shape transformation is performed such that a center region positioned at the center of the left/right edges of the flexible display device 100 faces downward direction, tensile force by the shape transformation is exerted to the bend sensors 21-1 to 21-5 disposed in the horizontal direction. Accordingly, resistance values of the respective bend sensors 21-1 to 21-5 disposed in the horizontal direction change. The detector 120 may detect a change in an output value output from the respective bend sensors 21-1 to 21-5 to detect that the flexible display device has been bent horizontally with respect to the center of the display surface.

The state where the center region of the flexible display device has been bent vertically downward (hereinafter, referred to as a Z- direction) with respect to the display surface, even a case where the center region of the flexible display device has been bent vertically upward (hereinafter, referred to as a Z+ direction) with respect to the display surface may be detected based on a change in output values of the bend sensors 21-1 to 21-5 in the horizontal direction.

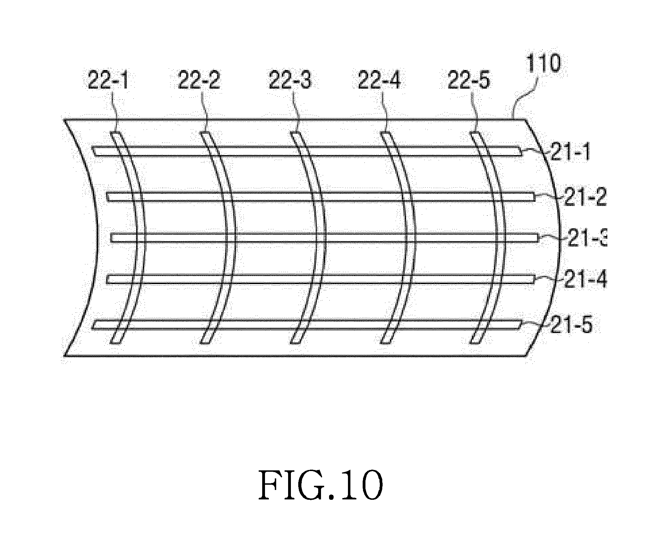

Referring to FIG. 10, a state where shape transformation has been performed in a Z+ direction is illustrated.

In the case where bending is performed such that a center region positioned at the center of the up/down edges of the flexible display device 100 faces upward direction, tensile force is exerted to the bend sensors 22-1 to 22-5 disposed in the vertical direction. The detector 120 may detect shape transformation in the vertical direction based on output values of the bend sensors 22-1 to 22-5 disposed in the vertical direction. Bending of the Z+ direction, bending of the Z- direction may be detected using the bend sensors 22-1 to 22-5 disposed in the vertical direction, of course.

In case of shape transformation of a diagonal direction, since tensile force is exerted to all of the bend sensors disposed in the horizontal direction and the vertical direction, the shape transformation of the diagonal direction may be detected based on output values of the bend sensors disposed in the horizontal direction and the vertical direction.

Hereinafter, a specific method for detecting respective transformation shapes such as general bending, folding, and rolling, and the like. using a bend sensor is described.

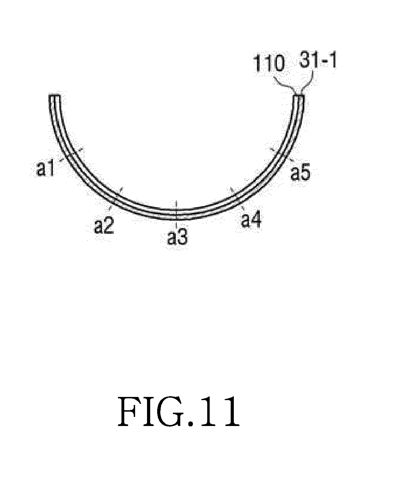

FIGS. 11 to 13 are views explaining a method for detecting shape transformation in a flexible display device using a bend sensor according to an embodiment of the present disclosure.

Referring to FIG. 11, a cross-sectional view of a flexible display device 100 when the flexible display device has been shape-transformed is illustrated.

When the flexible display device 100 is shape-transformed, a bend sensor disposed on one side or both sides of the flexible display device is bent together, has a resistance value corresponding to intensity of exerted tensile force, and outputs an output value corresponding thereto.

For example, when the flexible display device 100 is shape-transformed, a bend sensor 31-1 disposed on the backside of the flexible display device 100 is also bent, and outputs a resistance value corresponding to the magnitude of exerted tensile force.

In this case, the intensity of the tensile force increases in proportion to a shape transformation degree. For example, when bending is performed, a shape transformation degree of the center region becomes largest. Therefore, largest tensile force is exerted to the bend sensor 31-1 disposed at a point a3 which is the center region, and accordingly the bend sensor 31-1 has a largest resistance value. In contrast, a shape transformation degree becomes weak toward the outer direction. Accordingly, the bend sensor 31-1 has a resistance value lower than that of the point a3 toward points a2 and a1 or points a4 and a5 from the point a3.

When a resistance value output from the bend sensor has a maximum value at a specific point and an output resistance value becomes small gradually toward both directions, the detector 120 may determine a region where the maximum resistance value has been detected is a region whose shape has been transformed most greatly. Also, the detector 120 may determine a region whose resistance value does not change is a flat region where shape transformation has not been performed, and determine a region whose resistance value has changed by a predetermined magnitude or more is a region where any bending has been performed.

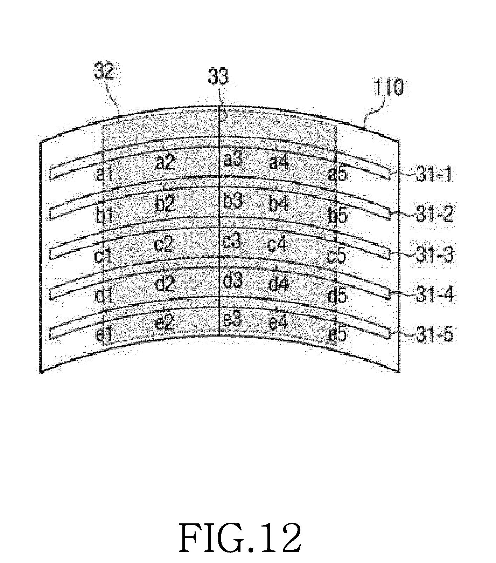

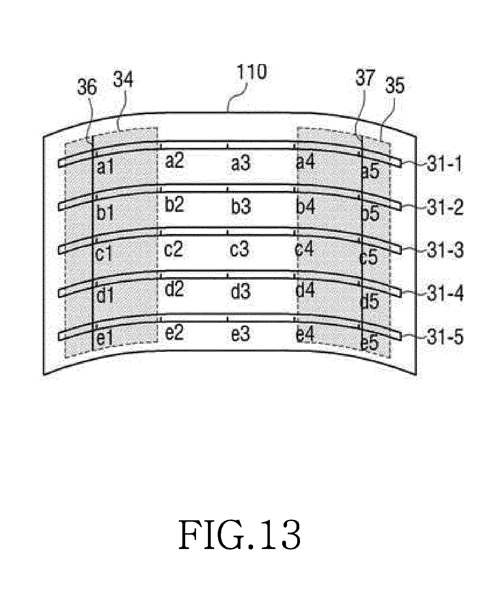

FIGS. 12 and 13 are views explaining a method for defining a bending region according to an embodiment of the present disclosure. Since FIGS. 12 and 13 are views for explaining a case where a flexible display device is bent in the horizontal direction with respect to the front side, bend sensors disposed in the vertical direction are not illustrated for convenience in description. Also, though reference numerals of respective bend sensors are used differently for each drawing for convenience description, actually, the bend sensors of the structure illustrated in FIG. 8 may be used as they are.

A bending region means a region where the flexible display device has been warp and bent. Since the bend sensor is bent together by shape transformation, the bending region may be defined as all points where a bend sensor that outputs a resistance value different from that of the original state has been disposed.

The detector 120 may detect the size of a bending line, the direction of the bending line, the position of the bending line, the number of bending lines, the frequency of the bending, a bending speed in which a shape changes, the size of a bending region, the position of the bending region, the number of bending regions, and the like, based on relation between points where a resistance value change has been detected.

Specifically, when a distance between points where a resistance value change has been detected is within a distance set in advance, the detector 120 detects the points that output the resistance value as one bending region. In contrast, when points separated by the distance set in advance exist among the points where a resistance value change has been detected, different bending regions are classified and defined with reference to these points.

More specific description is made with reference to FIGS. 12 and 13.

FIG. 12 is a view explaining a method for detecting one bending region according to an embodiment of the present disclosure.

Referring to FIG. 12, the flexible display device 100 is bent, points a1 to a5 of the bend sensor 31-1, points b1 to b5 of a bend sensor 31-2, points c1 to c5 of a bend sensor 31-3, points d1 to d5 of a bend sensor 31-4, points e1 to e5 of a bend sensor 31-5 have resistance values different from those of the original states.

In this case, points where a resistance value change has been detected by the respective bend sensors 31-1 to 31-5 are positioned within the distance set in advance and successively disposed.

Therefore, the detector 120 detects a region 32 including all of the points a1 to a5 of the bend sensor 31-1, the points b1 to b5 of the bend sensor 31-2, the points c1 to c5 of the bend sensor 31-3, the points d1 to d5 of the bend sensor 31-4, the points e1 to e5 of the bend sensor 31-5 as one bending region.

FIG. 13 is a view explaining a method for detecting a plurality of bending regions according to an embodiment of the present disclosure.

Referring to FIG. 13, depending on bending of the flexible display device, points a1, a2 and a4, a5 of the bend sensor 31-1, points b1, b2 and b4, b5 of the bend sensor 31-2, points c1, c2 and c4, c5 of the bend sensor 31-3, points d1, d2 and d4, d5 of the bend sensor 31-4, points e1, e2 and e4, e5 of the bend sensor 31-5 have resistance values different from those of the original states.

The points a1, a2 and a4, a5 of the bend sensor 31-1 are successive when seen from each point, but since a point a3 exists between the points a2 and a4, the points a2 to a4 are not successive. Therefore, when considering that a distance between the points a2 to a4 is separated by a distance set in advance, a region from the point a1 to the point a2 and a region from the point a4 to the point a5 may be divided into different bending regions. Also, likewise, respective points of the other bend sensors 31-2 to 31-5 may be divided.

Therefore, the flexible display device 100 may define a region 34 including all of the points a1 and a2 of the bend sensor 31-1, the points b1, b2 of the bend sensor 31-2, the points c1, c2 of the bend sensor 31-3, the points d1, d2 of the bend sensor 31-4, the points e1, e2 of the bend sensor 31-5 as one bending region, and may define a region 35 including all of the points a4, a5 of the bend sensor 31-1, the points b4, b5 of the bend sensor 31-2, the points c4, c5 of the bend sensor 31-3, the points d4, d5 of the bend sensor 31-4, the points e4, e5 of the bend sensor 31-5 as another bending region.

A bending region may include a bending line. The bending line may be defined as a line connecting points from which a largest resistance value has been detected in each bending region.

For example, in FIG. 12, a line 33 connecting the point a3 that outputs a largest resistance value, the point b3 that outputs a largest resistance value in the bend sensor 31-2, the point c3 that outputs a largest resistance value in the bend sensor 31-3, the point d3 that outputs a largest resistance value in the bend sensor 31-4, and the point e3 that outputs a largest resistance value in the bend sensor 31-5 in the bending region 33 may be defined as a bending line. FIG. 7 illustrates a state where a bending line is formed in the vertical direction in the center region of a display surface.

Also, in FIG. 13, a line 36 connecting the point a1 that outputs a largest resistance value, the point b1 that outputs a largest resistance value in the bend sensor 31-2, the point c1 that outputs a largest resistance value in the bend sensor 31-3, the point d1 that outputs a largest resistance value in the bend sensor 31-4, and the point e1 that outputs a largest resistance value in the bend sensor 31-5 in the bending region 34 may be one bending line. Also, a line 37 connecting the point a5 that outputs a largest resistance value, the point b5 that outputs a largest resistance value in the bend sensor 31-2, the point c5 that outputs a largest resistance value in the bend sensor 31-3, the point d5 that outputs a largest resistance value in the bend sensor 31-4, and the point e5 that outputs a largest resistance value in the bend sensor 31-5 in the bending region 35 may be another bending line. That is, FIG. 13 illustrates a state where the two vertical bending lines are formed in the neighborhood of the left/right edge portion of the display surface.

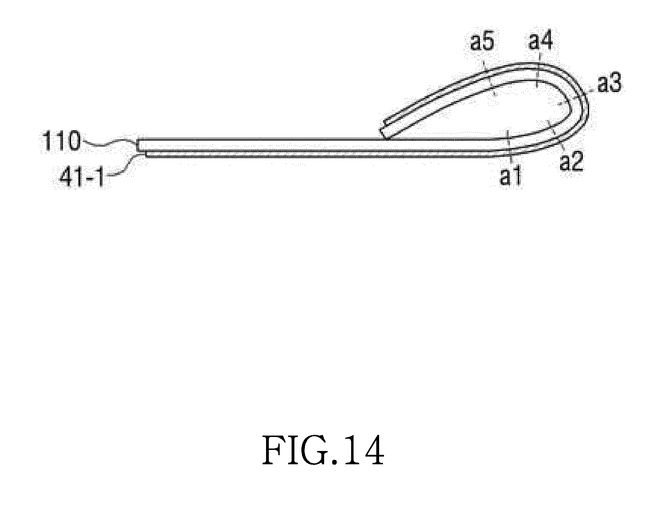

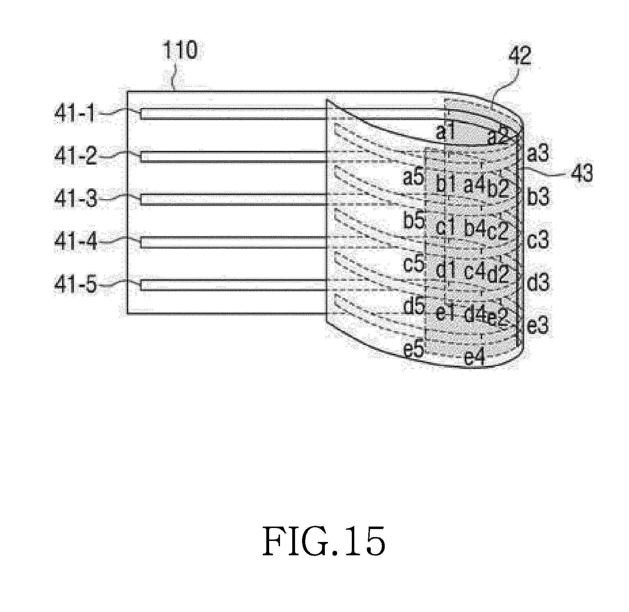

FIGS. 14 and 15 are views explaining an example of a method for detecting a state where a flexible display device has been folded according to an embodiment of the present disclosure.

Referring to FIG. 14, a cross-sectional view of a state where the flexible display device 100 has been folded is illustrated.

When the flexible display device is folded, bend sensors disposed on one side or both sides of the flexible display device are bent together and have a resistance value corresponding to intensity of exerted tensile force.

Referring to FIG. 14, the flexible display device 100 is folded such that the right edge region faces the center, a bend sensor 41-1 disposed on the backside of the flexible display device 100 is also bent and outputs a resistance value corresponding to the magnitude of exerted tensile force.

That is, like a case of general bending, the bend sensor 41-1 has a largest resistance value at a point a3 where the intensity of exerted tensile force is largest, and has a small resistance value toward both directions. That is, the bend sensor 41-1 has a resistance value smaller than that of the point a3 as a point moves to points a2, a1 or points a4, a5 from the reference point a3.

When folding where the flexible display device is bent by a predetermined bending angle or more is performed, a resistance value of a predetermined magnitude or more is sensed at a point corresponding to the bending line. Therefore, the controller 130 may determine whether the bending is folding or general bending depending on the magnitude of a resistance value.

Alternatively, if bending is possible such that the surfaces of the flexible display device 100 contact each other, the controller 130 may determine whether the bending is folding by considering whether a touch is also performed. That is, when the right edge of the flexible display device 100 is bent in the Z+ direction and folded to the front side, the regions separated from each other contact on the front side of the flexible display device 100. In this case, a touch is detected from one region of the display surface, and a change degree of a resistance value becomes greater than a case of general bending. Accordingly, the controller 130 calculates a distance from the edge boundary where the bending has been performed up to the bending line, and then when a touch is detected at a point separated by the calculated distance in the opposite direction from the bending line, the controller 130 may determine folding has been performed.

FIG. 15 is a view explaining a method for determining a folding region according to an embodiment of the present disclosure. Since FIG. 15 is a view explaining a case where a flexible display device has been folded in the horizontal direction from the front side, bend sensors disposed in the vertical direction have not been illustrated for convenience in description.

A folding region is a bent region formed as the flexible display device is folded, and may be defined as one or two or more regions including all points of bend sensors that output a resistance value different from that of the original state as the bend sensor is bent like a case of bending. Since a method of defining and classifying folding regions is the same as the case of the bending region, description thereof is omitted.

Referring to FIG. 15, a region 42 including points whose output resistance value is different from that of the original state, that is, all of points a1 to a5 of the bend sensor 41-1, points b1 to b5 of a bend sensor 41-2, points c1 to c5 of a bend sensor 41-3, points d1 to d5 of a bend sensor 41-4, and points e1 to e5 of a bend sensor 41-5 may be defined as one folding region.

A folding region is divided into two regions with reference to a folding line. The folding line may be defined as a line connecting points that output a largest resistance value in each folding region. The folding line may be used as the same meaning as the bending line.

A line 43 connecting a point a3 that outputs a largest resistance value in the bend sensor 41-1, a point b3 that outputs a largest resistance value in the bend sensor 41-2, a point c3 that outputs a largest resistance value in the bend sensor 41-3, a point d3 that outputs a largest resistance value in the bend sensor 41-4, and a point e3 that outputs a largest resistance value in the bend sensor 41-5 becomes a folding line.

When folding is detected, the controller 130 may perform an operation different from an operation corresponding to general bending. For example, the controller 130 may perform an operation of displaying different contents screens for respective folding regions, and the like.

Meanwhile, the flexible display device 100 may be rolled like paper as described above. The controller 130 may determine whether rolling has been performed using a result detected by the detector 120.

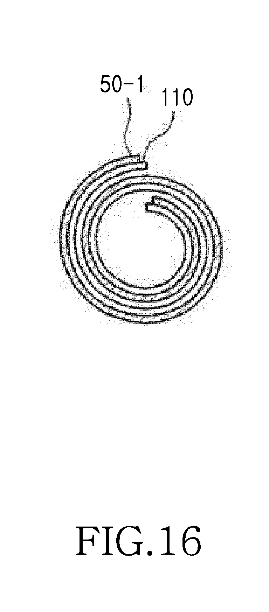

FIGS. 16 to 18 are views for explaining a method for detecting rolling at a flexible display device according to an embodiment of the present disclosure.

Rolling means a state where the flexible display device has been rolled. Rolling may be also determined with reference to a bending angle. For example, a state where bending of a predetermined bending angle or more is detected over a predetermined region may be defined as rolling. In contrast, a state where bending of less than a predetermined bending angle is detected in a relatively small region compared to rolling may be defined as folding. The above-described general bending, folding, rolling, and the like, may be determined based on a curvature radius besides a bending angle.

Also, a state where the cross-section of the rolled flexible display device 100 has a shape substantially similar to a circle or an ellipse regardless of a curvature radios may be defined as rolling.

Referring to FIG. 16, a cross-sectional view of a state where the flexible display device has been rolled is illustrated. Like the above description, when the flexible display device 100 is rolled, tensile force is exerted to a bend sensor disposed on one side or both sides of the flexible display device.

In this case, since intensities of tensile forces exerted to the bend sensors are similar to each other within a predetermined range, resistance values output from the bend sensors are also similar to each other within a predetermined range.

For rolling to be performed, bending should be performed by a predetermined curvature or more. Also, when rolling is performed, a bending region greater than that of general bending or folding is formed. Accordingly, when it is detected that bendings of a predetermined bending angle or more have been successively performed on a region of a predetermined size or more, the controller 130 may determine a rolling state. Also, under the rolling state, the front side and the backside of the flexible display device contact each other. For example, when the edge on one side of the flexible display device 100 is bent in the Z+ direction and rolled into the inside of the display surface, the display surface, that is, the front side and the backside where a bend sensor 50-1 has been disposed contact each other.

Therefore, in another example different from the above example, the controller 130 may determine whether the bending is rolling depending on whether the front side and the backside of the flexible display device contact each other. In this case, the detector 120 may use a touch sensor. When resistance values output from bend sensors are similar to each other within a predetermined range and touches are detected by touch sensors disposed on the front side and the backside of the flexible display device, respectively, the controller 130 may determine that the flexible display device has been rolled. Alternatively, the controller 130 may determine whether the flexible display device has been bent and whether some regions of the flexible display device contact each other or close to each other using a magnet and a magnetic field sensor, a light sensor, or a proximity sensor, and the like, instead of the touch sensor.

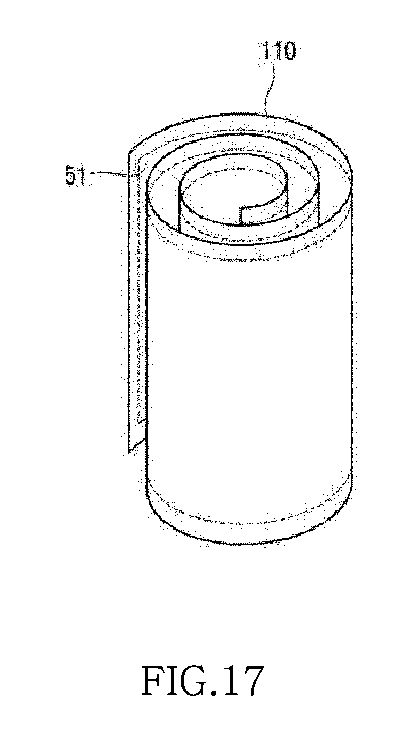

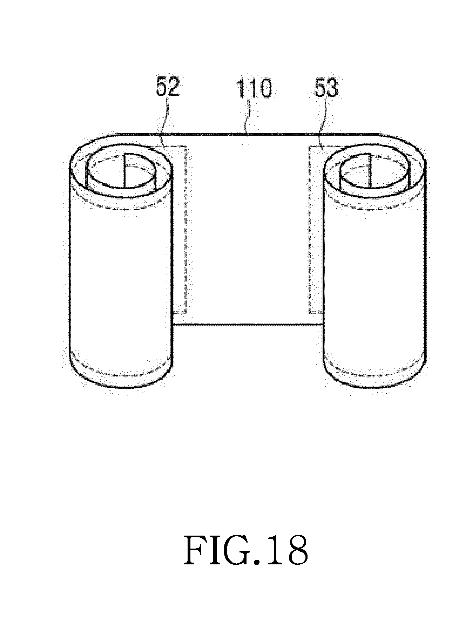

FIGS. 17 and 18 are views explaining a method for defining a rolling region according to an embodiment of the present disclosure. The rolling region means an entire region where a flexible display device is bent and becomes a rolled state. Like a case of general bending and folding, the rolling region may be defined as one or two or more regions including all points of bend sensors that output resistance values different from those of the original states. Since a method of defining and classifying rolling regions is the same as the case of the bending region and the folding region, description thereof is omitted.

Referring to FIG. 17, when the flexible display device 100 is rolled on the whole, the entire region 51 of the flexible display device 100 may be defined as a rolled region.

Referring to FIG. 18, in a case where the flexible display device 100 is partially rolled and points that output resistance values different from those of the original states are separated by a distance set in advance, partial regions 52 and 53 of the flexible display device may be defined as different rolling regions.

As described above, the flexible display device 100 may be bent in various shapes, and the controller 130 may detect each shape transformation state based on a detection result of the detector 120. Also, the controller 130 may detect in what shape, in which position, in which direction, and in what degree shape transformation has been performed based on the detection result of the detector 120.

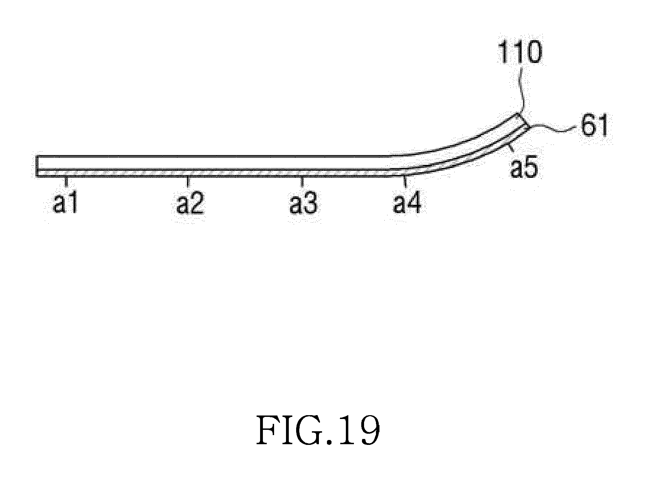

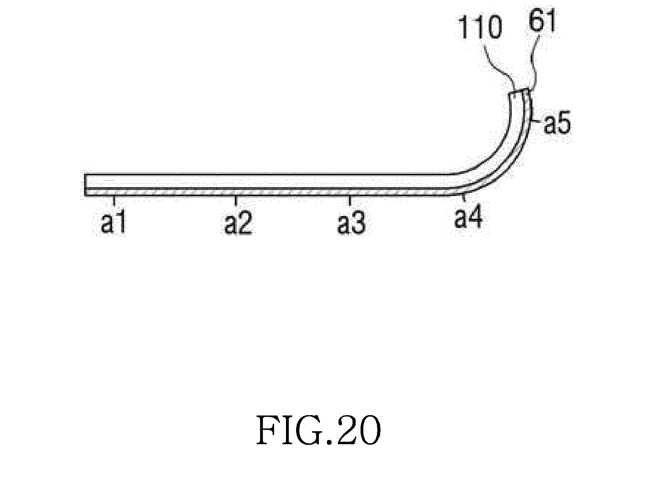

FIGS. 19 and 20 are views for explaining a method for determining a shape transformation degree according to an embodiment of the present disclosure.

Referring to FIGS. 19 and 20, a flexible display device determines a degree in which the flexible display device has been bent using a change in the magnitude of a resistance value output from a bend sensor every predetermined interval.

Specifically, the controller 130 calculates a difference between a resistance value of a point that outputs a largest resistance value and a resistance value output from a point separated from the point by a predetermined distance in a bend sensor.

Also, the controller 130 may determine a bent degree using the calculated resistance value difference. Specifically, the flexible display device 100 may classify bent degrees to a plurality of levels, and map each level to a resistance value having a predetermined range and store the same.

Accordingly, the flexible display device may determine a bent degree of the flexible display device depending on a level among the plurality of levels where the calculated resistance values have been classified according to a bent degree.

For example, as illustrated in FIGS. 19 and 20, the flexible display device may determine a bent degree based on a difference between a resistance value output from a point a5 that outputs a largest resistance value in a bend sensor 61 provided to the backside of the flexible display device and a resistance value output from a point a4 separated by a predetermined distance.

Specifically, the flexible display device may determine a level to which the resistance value difference calculated belongs among the plurality of levels stored in advance, and determine a shape transformation degree corresponding to the determined level. Here, the shape transformation degree may be expressed by a bending angle or bending strength.

Since a shape transformation degree of the embodiment illustrated in FIG. 20 is greater than that of the embodiment illustrated in FIG. 19, a difference between a resistance value output from a point a5 and a resistance value output from a point a4 in a bend sensor in the embodiment illustrated in FIG. 20 becomes greater than a difference between a resistance value output from a point a5 and a resistance value output from a point a4 in a bend sensor in the embodiment illustrated in FIG. 19. Accordingly, when bending is performed as in FIG. 20, the controller 130 may determine shape transformation degree is greater.

The controller 130 may perform a proper operation depending on a shape transformation degree. For example, in case of performing a channel zapping operation, when a shape transformation degree is large, the controller 130 may make a channel zapping speed fast or increase a channel zapping range even more. In contrast, when the shape transformation degree is low, the controller 130 may perform channel zapping more slowly or on a smaller number of channel basis. The controller 130 may perform an operation differently depending on a shape transformation degree during an operation such as a volume control or contents switching, and the like.

As described above, a shape transformation direction of the flexible display device 100 may change such as the Z+ direction or the Z- direction.

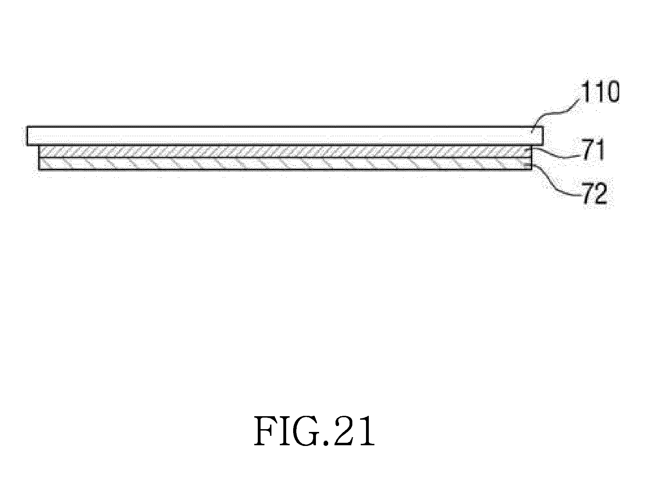

A shape transformation direction may be also sensed in various methods. For example, two bend sensors are disposed to overlap each other, and a bending direction may be determined depending on a difference in the magnitude change of a resistance value of each bend sensor. A method for detecting a bending direction using overlapping bend sensors is described with reference to FIGS. 21 to 23.

FIGS. 21 to 23 exemplarily explain a case of general bending. However, the case of bending is also applicable to cases of folding and rolling, of course.

Referring to FIG. 21, two bend sensors 71 and 72 may be prepared on one side of the display unit 110 such that they overlap each other. In this case, when bending is performed in one direction, different resistance values of the upper bend sensor 71 and the lower bend sensor 72 are detected at a point where the bending has been performed. Therefore, when the resistance values of the two bend sensors 71 and 72 at the same point are compared, the bending direction may be known.

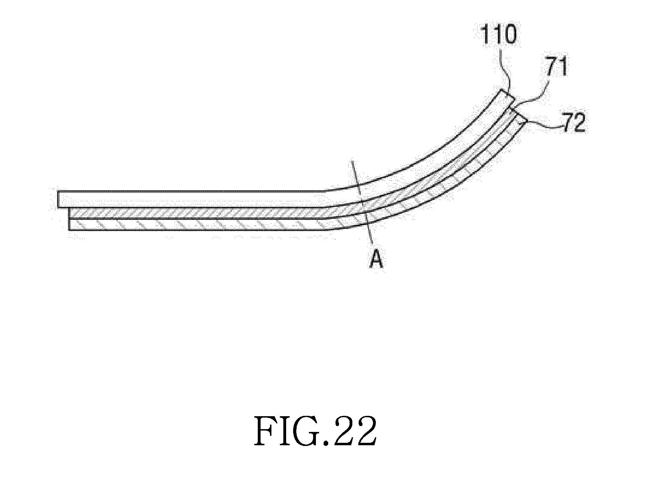

Referring to FIG. 22, when the flexible display device 100 is bent in the Z+ direction, tensile force of greater intensity is exerted to the lower bend sensor 72 rather than the upper bend sensor 71 at a point A corresponding to a bending line.

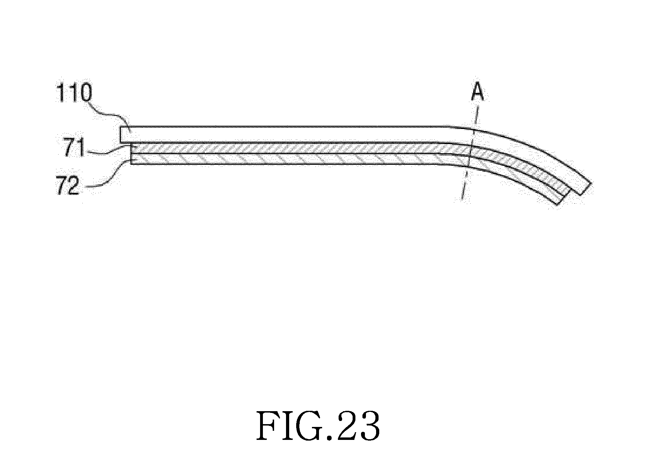

Referring to FIG. 23, when the flexible display device 100 is bent in the backside direction, tensile force of greater intensity is exerted to the upper bend sensor 71 rather than the lower bend sensor 72.

Therefore, the controller 130 may detect a bending direction by comparing resistance values of the two bend sensors 71 and 72 corresponding to the point A.

Though FIGS. 21 to 23 illustrate a state where two bend sensors are disposed on one side of the display unit 110 such that they overlap each other, the bend sensors may be disposed on both sides of the display unit 110.

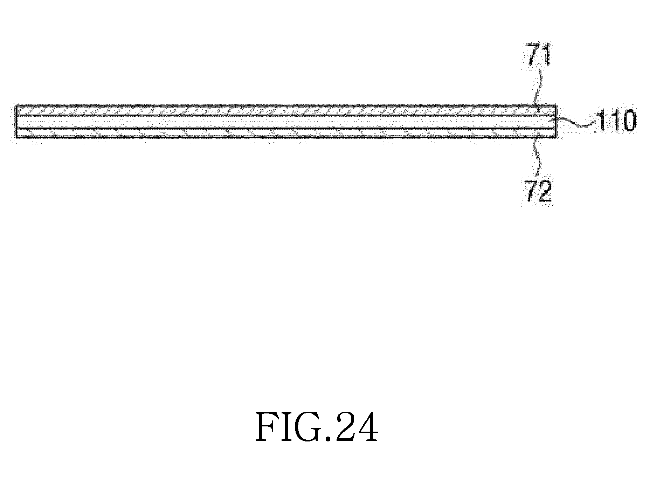

FIG. 24 illustrates a state where two bend sensors 71 and 72 are disposed on both sides of the display unit 110 according to an embodiment of the present disclosure. Accordingly, when the flexible display device 100 is bent in a first direction, that is, the Z+ direction perpendicular to the screen, the bend sensor disposed on a first side of both sides of the display unit 110 receives compressing force. In contrast, the bend sensor disposed on a second side receives tensile force. Inversely, when the flexible display device 100 is bent in a second direction which is the opposite to the first direction, that is, bent in the Z- direction, the bend sensor disposed on a second side receives compressing force. In contrast, the bend sensor disposed on the first side receives tensile force. As described above, values detected by the two bend sensors are different depending on a bending direction, and the controller 130 may discriminate a bending direction depending on a detection characteristic of the value.

Meanwhile, though FIGS. 21 to 24 have explained that a bending direction is detected using the two bend sensors, the bending direction may be discriminated using only a strain gauge disposed on one side of the display unit 110. That is, since compressing force or tensile force is exerted to the strain gauge disposed on one side depending on a bending direction thereof, when a characteristic of an output value thereof is determined, the bending direction may be known.

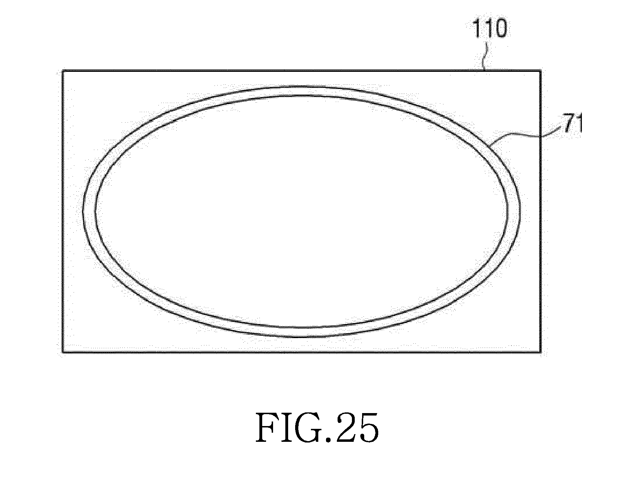

FIG. 25 illustrates an example of configuration of disposing one bend sensor on one side of a display unit to detect bending according to an embodiment of the present disclosure.

Referring to FIG. 25, a bend sensor 71 may be implemented in a closed curve shape forming a circle or a quadrangle or other polygons and disposed on the edge portion of the display unit 110. The controller 130 may determine a point where an output value change is detected on the closed curve as a bending region. Besides, the bend sensor may be coupled to the display unit 110 in an open curve shape such as S, Z, and other zigzags.

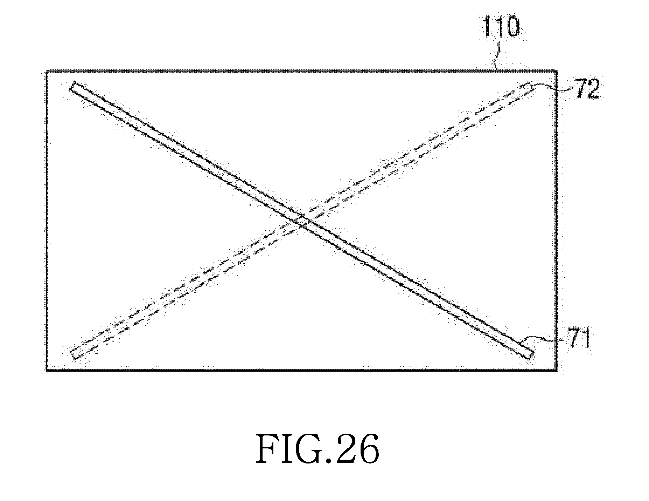

FIG. 26 illustrates an embodiment of disposing two bend sensors such that they cross each other according to an embodiment of the present disclosure.

Referring to FIG. 26, a first bend sensor 71 is disposed on a first side of the display unit 110, and a second bend sensor 72 is disposed on a second side of the display unit 110. The first bend sensor 71 is disposed in a first diagonal direction on the first side of the display unit 110, and the second bend sensor 72 is disposed in a second diagonal direction on the second side. Accordingly, output values and output points of the first and second bend sensors 71 and 72 are different for various bending conditions such as a case where each corner region is bent, a case where the center portion is bent, a case where folding or rolling is performed, and the like. The controller 130 may determine what type of bending has been performed depending on these output value characteristics.

Meanwhile, though the above various embodiments have illustrated a case where line-shaped bend sensors are used, bending may be detected using a plurality of fragmentary strain gauges.

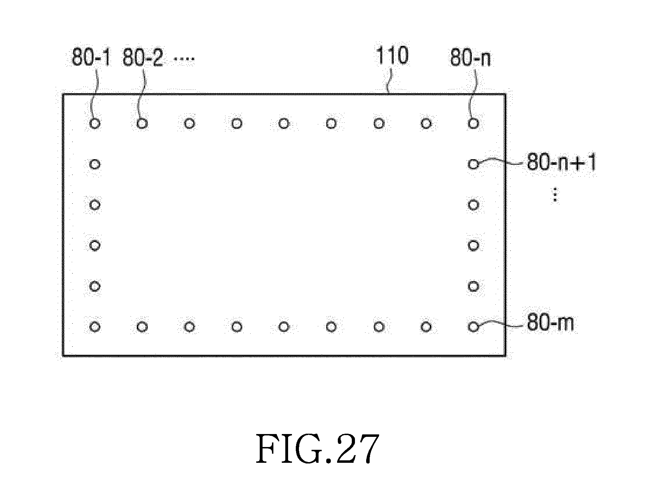

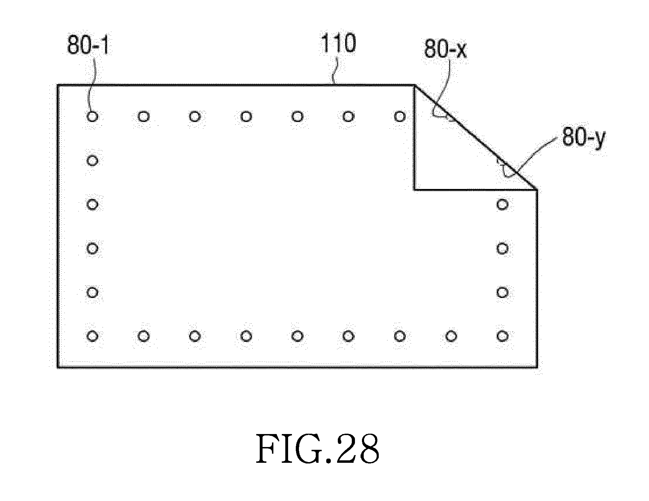

FIGS. 27 and 28 are views illustrating an embodiment of detecting bending using a plurality of strain gauges according to an embodiment of the present disclosure. A strain gauge detects transformation of the surface of a measurement object depending on a resistance value change using metal or a semiconductor whose resistance remarkably changes depending on the magnitude of exerted force. Generally, a material such as metal has a characteristic that when its length is lengthened by external force, a resistance value increases, and when its length is reduced, a resistance value reduces. Therefore, when a resistance value change is detected, whether bending has been performed may be determined.

Referring to FIG. 27, a plurality of strain gauges are disposed on an edge region of the display unit 110. The number of strain gauges may change depending on the size or the shape of the display unit 110, bending detection resolution set in advance, and the like.

With the strain gauges disposed, a user may bend an arbitrary point in an arbitrary direction.

Referring to FIG. 28, in the case where one corner region is bent, force is exerted to a strain gauge 80-x that overlaps a bending line among strain gauges 80-1 ~ 80-n disposed in the horizontal direction. Accordingly, an output value of the relevant strain gauge 80-x becomes greater than those of other strain gauges. Also, force is exerted to a strain gauge 80-y that overlaps a bending line among strain gauges 80-n, 80-n+1, ~ 80-m disposed in the vertical direction, so that an output value changes. The controller 130 may determine a line connecting the two strain gauges 80-x and 80-y whose output values have changed as a bending line.

Alternatively, unlike the description with reference to FIGS. 22 to 28, the flexible display device 100 may detect a bending direction using various sensors such as a gyro sensor, a geomagnetic sensor, an acceleration sensor, and the like.

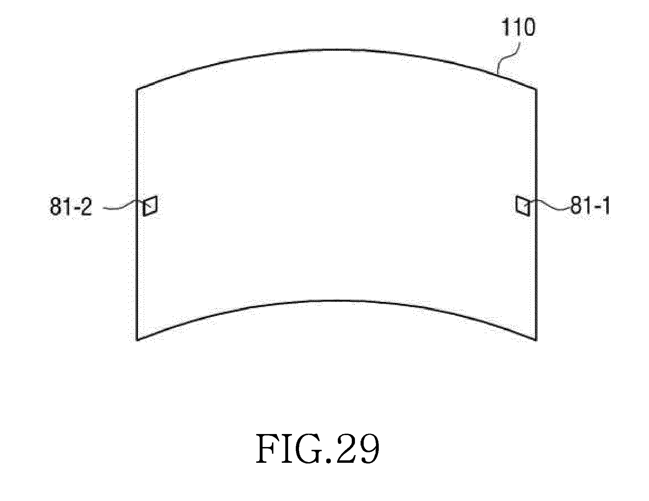

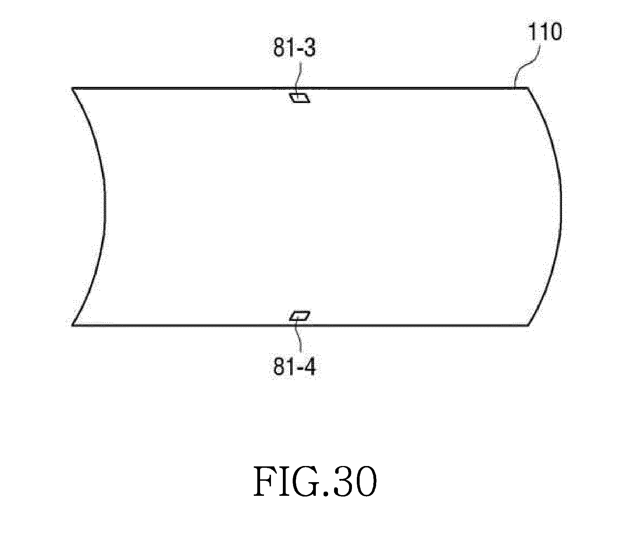

FIGS. 29 and 30 are views for explaining a method for detecting a bending direction using an acceleration sensor as an example of these sensors according to an embodiment of the present disclosure.

Referring to FIGS. 29 and 30, the flexible display device 100 includes a plurality of acceleration sensors 81-1 and 81-2.

The acceleration sensors 81-1 and 81-2 are sensors that may measure acceleration and the direction of the acceleration when movement occurs. Specifically, the acceleration sensors 81-1 and 81-2 output a sensed value corresponding to acceleration of gravity that changes depending on the slope of a device to which the sensor has been attached. Therefore, when the acceleration sensors 81-1 and 81-2 are disposed on both edge regions of the flexible display device, respectively, when the flexible display device is bent, output values sensed by the acceleration sensors 81-1 and 81-2 change. The controller 130 calculates a pitch angle and a roll angle using output values sensed by the acceleration sensors 81-1 and 81-2. Accordingly, a bending direction may be determined based on a change degree of a pitch angle and a roll angle detected by the respective acceleration sensors 81-1 and 81-2.

Though FIG. 20 illustrates a state where the acceleration sensors 81-1 and 81-2 are disposed on both edge portions of the horizontal direction on the front side of the flexible display device 100, the acceleration sensors 81-1 and 81-2 may be disposed in the vertical direction as in FIG. 30. In this case, when the flexible display device is bent in the vertical direction, a bending direction may be detected depending on measurement values detected by respective acceleration sensors 81-3 and 81-4 of the vertical direction.

Though FIGS. 29 and 30 illustrate a state where the acceleration sensors are disposed on left/right edge portions or up/down edge portions of the flexible display device 100, the acceleration sensors may be disposed on both the up/down edge portions and the left/right edge portions, and may be disposed on corner regions.

As described above, the flexible display device may detect a bending direction using a gyro sensor or a geomagnetic sensor besides an acceleration sensor. The gyro sensor is a sensor that detects an angular velocity by measuring Coriolis' force acting on a velocity direction when a rotational motion occurs. Since a rotational direction may be detected according to a measured value of the gyro sensor, the flexible display device may detect a bending direction. The geomagnetic sensor is a sensor that detects an azimuthal angle using a two-axis or three-axis flux gate. In case of implementation using the geomagnetic sensor, when an edge portion is bent, the geomagnetic sensor disposed on each edge portion of the flexible display device 100 makes movement an outputs an electric signal corresponding to a relevant geomagnetic change. The controller 130 may calculate a yaw angle using a value output from the geomagnetic sensor. Accordingly, the flexible display device may determine various bending characteristics such as a bending region, a bending direction, and the like. depending on a change of the calculated yaw angle.

When a movement detection sensor such as an acceleration sensor or a geomagnetic sensor, and a gyro sensor is used, even a bending posture may be known clearly.

For example, in the case where the right edge portion is bent by 30 degrees in the Z+ direction and in the case where the left edge portion is bent by 30 degrees in the Z-direction such that a bending line is formed at the center of the flexible display device, though a posture in which a user tries bending is different, finally bent & held shapes are the same. That is, in both cases, final shapes become shapes inclined by 150 degrees from a central bending line. At this point, if a movement detection sensor is prepared at edge portions on both sides, the flexible display device may know even a bending posture using a sensed value of the movement detection sensor. For example, when a slope is detected by a right acceleration sensor 81-1, it is determined that the right edge region moves to the Z+ direction and is folded with respect to the center line. When a slope is detected by a left acceleration sensor 81-2, it is determined that the left edge region moves to the Z+ direction and is folded with respect to the center line. Accordingly, a different function may be performed depending on a determined bending posture. For example, if a bending & hold gesture is tried from the right side, the screen is switched to the left direction, and if a bending & hold gesture is tried from the left side, the screen is switched to the right direction.

This bending posture may be determined using a touch sensor, a grip sensor, a pressure sensor, and the like, besides a movement detection sensor. For example, when bending is performed, it may be determined that a bending & hold gesture has started from a point where a touch, or a grip, and pressure have been detected.

As described above, the flexible display device 100 may detect bending using various types of sensors. Configuration of the sensor and the sensing method may be applied to the flexible display device individually, and applied in combination.

Meanwhile, the detector 120 may detect an operation where a user touches the screen of the display unit 110 besides bending.

For example, the detector 120 may include a transparent conductive layer such as indium-tin oxide (ITO) deposited on a substrate 111 inside the display unit 110 and a film formed thereon. Accordingly, when a user touches the screen, upper and lower plates of a touched point contact each other, so that an electric signal is transferred to the controller 130. The controller 130 recognizes the touched point using a coordinate of an electrode to which an electric signal has been transferred.

When bending is performed, since the bending region is not flat but bent, a touch manipulation may not be precisely performed. With consideration of this, the controller 130 newly performs setting in order to recognize touch manipulation. That is, to prevent a malfunction, the controller 130 does not sense a touch on a pixel basis but may sense a touch on a pixel region basis including a plurality of pixels with respect to a bent portion.

Also, while a bending & hold gesture is performed and a holding state is maintained, the controller 130 may optimize a sensed value of a touch sensor such that it is suitable for a transformed shape. For example, in the case where the screen is divided into two regions by bending and one region is erected and used and the other region is laid on the bottom and used, a touch coordinate value is newly set such that touch sensing for the erected portion is performed in the upper end higher than the existing position with consideration of a person's eyes direction. That is, to select an object displayed at a coordinate (x, y), the coordinate (x, y) should be accurately touched in ordinary time. Under a hold state, when the screen is disposed in a direction perpendicular to the bottom, it is recognized that the object of the point (x, y) has been selected when a coordinate (x-a, y-b) is touched, and an operation corresponding to the object is performed.

When a touch or bending, and the like, is detected, the controller 130 determines whether a user's manipulation such as the touch or bending is intended. Hereinafter, a method for determining a user's manipulation intention is described specifically according to various embodiments of the present disclosure.

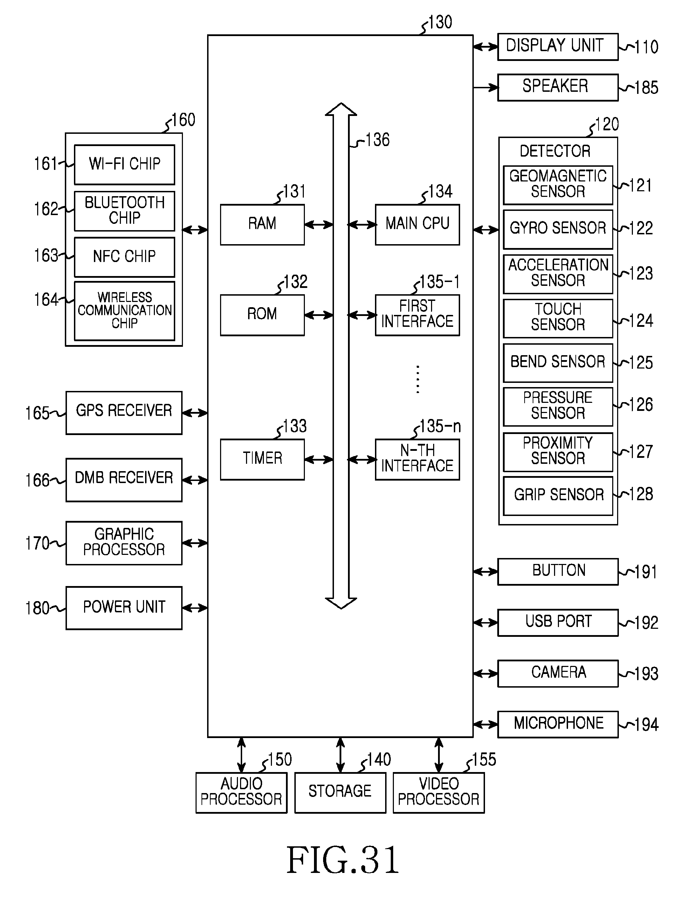

FIG. 31 is a block diagram illustrating configuration of a flexible display device according to various embodiments of the present disclosure.

Referring to FIG. 31, the flexible display device 100 includes a display unit 110, a detector 120, a controller 130, a storage 140, an audio processor 150, a video processor 155, a communication unit 160, a GPS receiver 165, a DMB receiver 166, a graphic processor 170, a power unit 180, a speaker 185, a button 191, a USB port 192, a camera 193, and a microphone 194.

Since the configuration and operation of the display unit 110 have been described specifically in the foregoing, description thereof is omitted.

The detector 120 may detect various user manipulations such as a touch, rotation, movement, inclination, pressure, and the like, as well as shape transformation of the flexible display device 100. The controller 130 may control an operation of the flexible display device 100 using various user manipulations detected by the detector 120.

The detector 120 includes a geomagnetic sensor 121, a gyro sensor 122, an acceleration sensor 123, a touch sensor 124, a bend sensor 125, a pressure sensor 126, a proximity sensor 127, and a grip sensor 128.

The geomagnetic sensor 121 is a sensor for detecting a rotation state, a movement direction, and the like, of the flexible display device 100. The gyro sensor 122 is a sensor for detecting a rotation angle of the flexible display device 100. Both the geomagnetic sensor 121 and the gyro sensor 122 may be provided but even when only one of them is provided, the flexible display device 100 may detect a rotation state. The acceleration sensor 123 is a sensor for detecting an inclined degree of the flexible display device 100. The geomagnetic sensor 121, the gyro sensor 122, the acceleration sensor 123, and the like, may be used for the purpose of detecting a bending characteristic such as a bending direction, a bending region, and the like, of the flexible display device 100 as described above.

The touch sensor 124 may be implemented in a capacitive type or a resistive type. The capacitive touch sensor calculates a touch coordinate by detecting fine electricity excited by a user's body when a portion of the user's body touches the surface of the display unit 110. The resistive touch sensor includes two electrode plates, and when a user touches the screen, detects that upper and lower plates of the touched point contact each other and a current flows through the plates to calculate a touch coordinate. As described above, the touch sensor 124 may be implemented in various shapes.

Also, the touch sensor 124 may detect hovering where a portion of a user's body stays at a distance separated by a predetermined distance from the surface of the display unit 110.

The bend sensor 125 may be implemented in various shapes and numbers as described above to detect a bending state of the flexible display device 100. Since various examples of the configuration and operation of the bend sensor 125 have been described in detail, description thereof is omitted.

When a user performs a touch or bending manipulation, the pressure sensor 126 detects the magnitude of pressure exerted to the flexible display device 100 to provide the same to the controller 130. The pressure sensor 126 may include a piezo film mounted inside the display unit 110 and outputting an electric signal corresponding to the magnitude of the pressure. Though the touch sensor 124 and the pressure sensor 126 have been illustrated as separate elements in FIG. 31, in the case where the touch sensor 124 is implemented as a resistive touch sensor, the resistive touch sensor may perform a role of the pressure sensor 126 together.

The proximity sensor 127 is a sensor for detecting an approaching motion without direct contact with the display surface. The proximity sensor 127 may be implemented in various types of sensors such as a high frequency oscillation type sensor that generates a high frequency magnetic field to detect a current induced by a magnetic field characteristic changing when an object approaches, a magnetic type sensor that uses a magnet, and a capacitance type sensor that detects capacitance changing by approaching of an object.

The grip sensor 128 is a sensor disposed to the edge or a knob portion of the flexible display device 100 separately form the pressure sensor 126 and detecting a user's grip. The grip sensor 128 may be implemented using a pressure sensor or a touch sensor.

The controller 130 analyzes various detection signals detected by the detector 120 to recognize a user's intention, and performs an operation corresponding to the intention. Particularly, the controller 130 may discriminate a bending & flat gesture and a bending & hold gesture and recognize the same to selectively perform a function allocated to a relevant gesture.

Besides, the controller 130 may perform a control operation depending on various input methods such as touch manipulation, a motion input, a voice input, a button input, and the like, besides a bending gesture. The touch manipulation may include various manipulations such as simple touch, tap, touch & hold, move, flick, drag & drop, pinch in, pinch out, and the like.

The controller 130 may execute an application stored in the storage 140 to configure an execution screen thereof and display the same, and reproduce various kinds of contents stored in the storage 140. Also, the controller 130 may perform communication with external devices via the communication unit 160.

The communication unit 160 is configured to perform communication with various types of external devices depending on various types of communication schemes. The communication unit 160 includes various communication chips such as a Wi-Fi chip 161, a Bluetooth chip 162, an NFC chip 163, a wireless communication chip 164, and the like.

The Wi-Fi chip 161, the Bluetooth chip 162, and the NFC chip 163 perform communication in a Wi-Fi scheme, a Bluetooth scheme, and an NFC scheme, respectively. Among them, the NFC chip 163 means a chip operating in an NFC scheme that uses the band of 13.56 MHz among various RF-ID frequency bands such as 135 kHz, 13.56 MHz, 433 MHz, 860-960 MHz, 2.45 GHz, and the like. In case of using the Wi-Fi chip 111 or the Bluetooth chip 112, the communication unit 160 may transmit various connection information such as an SSID and a session key, and the like, first to connect communication using it, and then transmit/receive various information. The wireless communication chip 164 means a chip performing communication according to various communication standards such as IEEE, Zigbee, 3rd Generation, 3rd Generation Partnership Project (3GPP), Long Term Evolution (LTE), and the like.

The GPS receiver 165 is an element for receiving a GPS signal from a Global Positioning System (GPS) satellite to calculate the current position of the flexible display device 100.

The Digital Multimedia Broadcasting (DMB) receiver 166 is an element that receives a DMB signal and processes the same.

The graphic processor 170 generates a screen including various objects such as an icon, an image, text, and the like, using an operation unit (not shown) and a rendering unit (not shown). The operation unit performs an operation on an attribute value such as a coordinate value, a shape, a size, color, and the like, in which respective objects are to be displayed depending on a layout of the screen. The rendering unit generates screens of various layouts including an object based on an attribute value operated by the operation unit. The screen generated by the rendering unit is displayed within a display region of the display unit 110.

The power unit 180 is an element that supplies power to respective elements of the flexible display device 100. The power unit 180 may be implemented to include an anode collector, an anode electrode, an electrolyte portion, a cathode electrode, a cathode collector, and a covering portion enclosing these. The power unit 180 is implemented in a secondary battery that is chargeable and dischargeable. The power unit 180 may be implemented in a flexible form such that it may be bent together with the flexible display device 100. In this case, the collector, the electrodes, the electrolyte, the covering portion, and the like, may be formed of material having a flexible characteristic. Specific shape and material of the power unit 180 are described separately in the latter portion.

The audio processor 150 is an element that performs a process regarding audio data. The audio processor 150 may perform various processes such as decoding, amplification, noise filtering, and the like, of audio data.

The audio processor 150 and the video processor 155 are used for processing and reproducing multimedia contents or a DMB broadcast signal, and the like.

The display unit 110 displays a video frame processed by the video processor 155, a screen generated by the graphic processor 170, and the like.

The speaker 185 is an element that outputs various kinds of notice notes or a voice message, and the like, as well as various kinds of audio data processed by the audio processor 150.

The button 191 may be various types of buttons such as a mechanical button, a touch pad, a wheel, and the like, formed on an arbitrary region such as the front side or lateral side, backside, and the like, of the main body appearance of the flexible display device 100.

The USB port 192 may perform communication with various kinds of external devices via a USB cable.

The camera 193 is configuration for shooting a still image or a moving picture under control of a user. The camera 193 may be implemented in the plural such as a front camera and a rear camera.

The microphone 194 is configuration for receiving a user's voice or other sounds to convert the same to audio data. The controller 130 may use the user's voice input via the microphone 194 during a call process, or convert the user's voice to audio data and store the same in the storage 140.

In the case where the camera 193 and the microphone 194 are prepared, the controller 130 may perform a control operation depending on the user's voice input via the microphone 194 or the user's motion recognized by the camera 193. That is, the flexible display device 100 may be controlled by shape transformation or a touch, and may operate in a motion control mode or a voice control mode. In case of operating in the motion control mode, the controller 130 activates the camera 193 to shoot the user, and tracks the user's motion to perform a control operation corresponding thereto. In case of operating in the voice control mode, the controller 130 may operate in a voice recognition mode that analyzes the user's voice input via the microphone, and performs a control operation depending on the analyzed user's voice.

Besides, various external input ports for connecting with various external terminals such as a headset, a mouse, a LAN, and the like, may be further included.

The above-described operation of the controller 130 may be performed by a program stored in the storage 140. The storage 140 may store an Operating System (OS) software for driving the flexible display device 100, various kinds of applications, various data input or set during execution of an application, contents, a bending gesture, bending interaction guide information, and the like.

The controller 130 controls an overall operation of the flexible display device 100 using the various kinds of programs stored in the storage 140.

The controller 130 includes a RAM 131, a ROM 132, a timer 133, a main CPU 134, first to n-th interfaces 135-1~135-n, and a bus 136.

The RAM 131, the ROM 132, the timer 133, the main CPU 134, the first to the n-th interfaces 135-1~135-n, and the like, may be connected with each other via the bus 136.

The first to the n-th interfaces 135-1-135-n are connected to the above-described various elements. One of the interfaces may be a network interface connected with an external device via a network.

The main CPU 134 accesses the storage 140 to perform booting using the OS stored in the storage 140. Also, the main CPU 134 performs various operations using various kinds of programs, contents, data, and the like, stored in the storage 140.

The ROM 132 stores an instruction set for system booting, and the like. When a turn-on instruction is input and power is supplied, the main CPU 134 copies the OS stored in the storage to the RAM 131 and executes the OS according to an instruction stored in the ROM 132 to boot the system. When booting is completed, the main CPU 134 copies the various kinds of applications stored in the storage 140 to the RAM 131, and executes the applications copied to the RAM to perform various kinds of operations.

When a detection signal corresponding to a shape transformation state is received by the detector 120, the main CPU 134 stores various information related to operations of that point such as an application or a function being performed previously or a screen layout displayed at that point, and the like, in the storage 140. Also, the main CPU 134 monitors whether a detection signal changes. When a change of a detection signal stops, the main CPU 134 may control the timer 133 to count time. Accordingly, when a predetermined time elapses without a change in a detection signal, the main CPU 134 determines a currently performed gesture is a bending & hold gesture. In contrast, in the case where a detection signal is maintained for less than a predetermined time or changes continuously, the main CPU 134 determines whether a characteristic of the shape transformation state corresponds to information set in advance. Accordingly, the main CPU 134 may determine whether a bending & flat gesture, other general bending, folding, rolling, and the like, have occurred.

When determination is completed, the main CPU 134 may determine information regarding a function corresponding to the gesture from the storage 140, load an application for performing the function onto the RAM 131, and then execute the same.

FIG. 31 generally illustrates various kinds of elements using an example where a flexible display device is a device having various functions such as a communication function, a broadcasting reception function, a moving picture reproduction function, and the like. Therefore, depending on cases, a portion of the elements illustrated in FIG. 31 may be omitted or changed, and another element may be added.

As described above, the controller 130 may execute a program stored in the storage 140 to perform various operations.

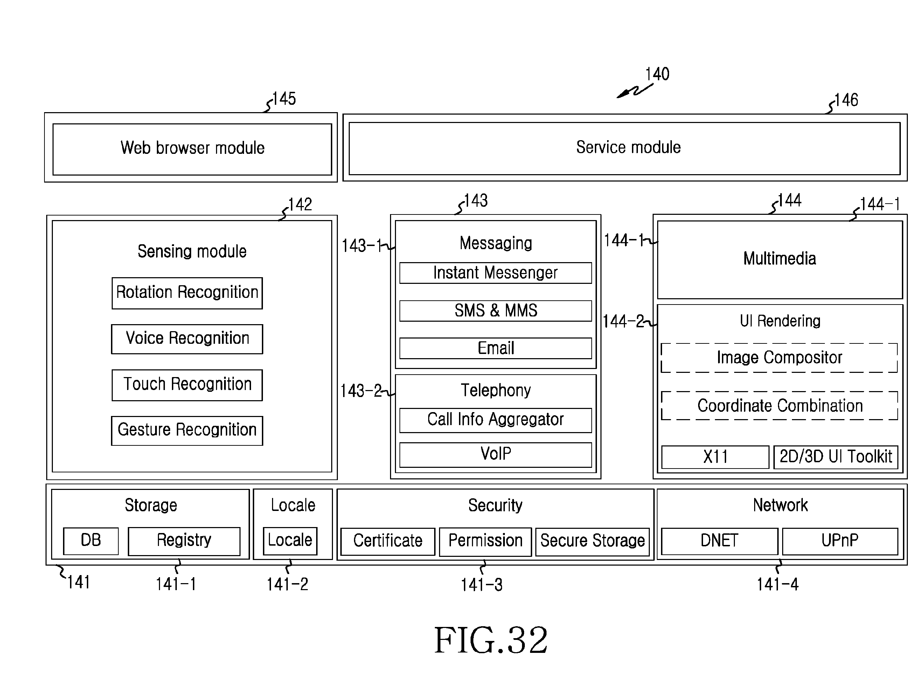

FIG. 32 is a view for explaining configuration of a software stored in the storage 140 according to an embodiment of the present disclosure.

Referring to FIG. 32, the storage 140 may store software including a base module 141, a sensing module 142, a communication module 143, a presentation module 144, a web browser module 145, and a service module 146.

The base module 141 means a fundamental module for processing a signal transferred from respective hardware included in the flexible display device 100 and transferring the same to an upper layer module.

The base module 141 includes a storage module 141-1, a position-based module 141-2, a security module 141-3, and a network module 141-4, and the like.

The storage module 141-1 is a program module for managing a database (DB) or a registry. The main CPU 134 may access a DB inside the storage 140 using the storage module 141-1 to read various data. The position-based module 141-2 is a program module supporting a position-based service in cooperation with various hardware such as a GPS chip, and the like. The security module 141-3 is a program module supporting certification of a hardware, request permission, secure storage, and the like, and the network module 141-4 is a module for supporting network connection and includes a DNET module, a UPnP module, and the like.

The sensing module 142 is a module for collecting information from various kinds of sensors included in the detector 120 and analyzing and managing the collected information. Specifically, the sensing module 142 is a program module for performing an operation of detecting a manipulation attribute such as a coordinate value, a touch movement direction, a movement velocity, a movement distance, and the like, of a point where a touch has been performed. Besides, depending on cases, the sensing module 142 may include a face recognition module, a voice recognition module, a motion recognition module, an NFC recognition module, and the like.

The communication module 143 is a module for performing communication with the outside. The communication module 143 may include a messaging module 143-1 such as a messenger program, a short message service (SMS) & multimedia message service (MMS) program, an e-mail program, and the like, and a phone module 143-2 including a call info aggregator program module, a VoIP module, and the like.

The presentation module 144 is a module for configuring a display screen. The presentation module 144 includes a multimedia module 144-1 for reproducing and outputting multimedia contents, and a UI rendering module 144-2 for performing a graphic process. The multimedia module 144-1 may include a player module, a camcorder module, a sound processing module, and the like. Accordingly, the multimedia module 144-1 performs operations of reproducing various kinds of multimedia contents to generate a screen and a sound and reproduce the same. The UI rendering module 144-2 may include an image compositor module for combining images, a coordinate combining module for combining coordinates on a screen which is to display an image and generating the same, an X11 module for receiving various kinds of events from a hardware, a 2D/3 UI tool kit for providing tools for configuring a 2D or 3D-shaped UI.

The web browser module 145 means a module for performing web browsing to access a web server. The web browser module 145 may include various modules such as a web view module for configuring a web page, a download agent module for performing a download operation, a bookmark module, a webkit module, and the like.

The service module 146 is a module including various kinds of applications for providing a service corresponding to manipulation content in the case where a shape transformation state or other various user manipulations have been performed. Specifically, the service module 146 may include various programs such as a navigation program, a contents reproduction program, a game program, an electronic book program, a calendar program, an alarm management program, other widgets, and the like. These respective program modules may correspond to various shape transformation states such as a bending & flat gesture or a bending & hold gesture, and the like, and be used.

Though FIG. 32 illustrates the various program modules, a portion of the illustrated various kinds of program modules may be omitted or transformed, or another program module may be added depending on the kind and characteristic of the flexible display device 100, of course. For example, in the case where the flexible display device 100 is implemented using a remote controller that excludes a display function and controls an external device with only a flexible characteristic, the presentation module 144 or the web browser module 145, the service module 146, and the like, may be excluded. In this case, only a module for detecting a characteristic of a shape transformation state and a registry denoting information regarding a control signal corresponding to a detection result thereof may be stored in the storage 140 and used, of course.

As described above, the configuration and the characteristic of the flexible display device 100 have been described specifically using various embodiments. Hereinafter, embodiments for various functions that may be performed due to bending of the flexible display device 100 are described.

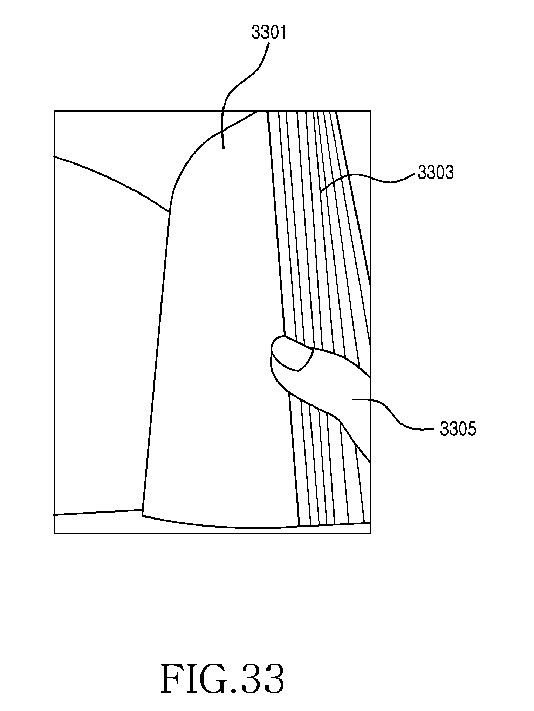

FIG. 33 is a view illustrating a process where a user turns over a page according to an embodiment of the present disclosure.

Referring to FIG. 33, when the user presses the corner portion of a book 3301 with his hand 3305, the corner portion extends. When the user bends the book, an extended region 3303 is represented on the corner portion. An embodiment of the present disclosure implements a change of a book that depends on the user's operation in the flexible display device.

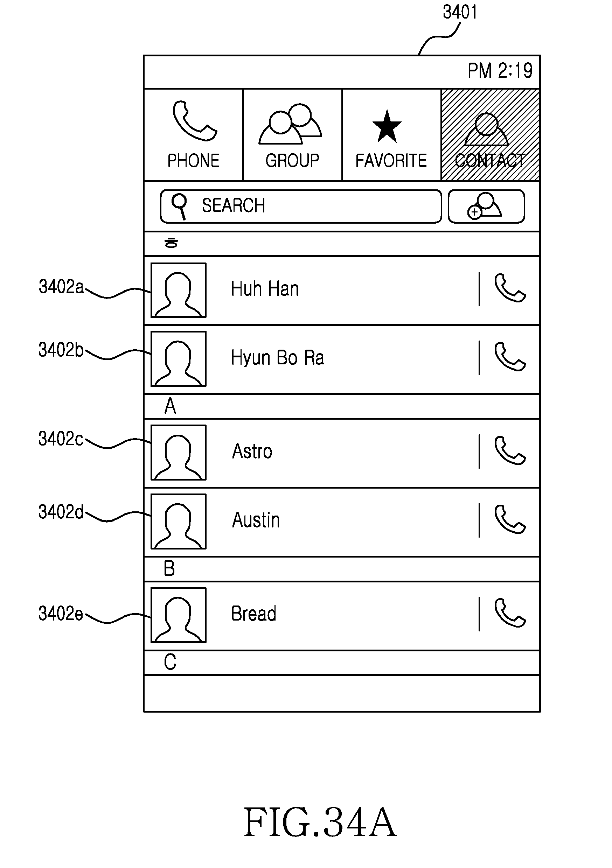

FIGS. 34A to 34E are views illustrating a first index is displayed on a region where bending has been detected in the flexible display device according to an embodiment of the present disclosure. The flexible display device is an electronic device including a flexible display. The flexible display may be functionally connected to the electronic device. The electronic device may include a detector. The detector may detect bending of the flexible display. The detector may output an electric signal based on the bending of the flexible display. The electronic device may include a controller. The controller may receive an electric signal and detect bending of the flexible display device. That is, the controller may process the signal to determine a bending attribute of the flexible display device. The bending attribute may include at least one of a bending direction, a bending pressure, a bending velocity, and a bending size.

Also, the controller may display contents including a plurality of items on the flexible display and display first contents related to the contents on a region where bending has been detected based on a signal output from the detector. The controller may detect the size of the bending based on a signal output from the detector, and when the size of the bending is greater than a predetermined value, display second contents on the flexible display. The first contents and/or the second contents may include connection information for accessing a specific item among the plurality of items included in the contents. For example, the connection information may be a bookmark regarding contents. Also, the connection information may be specific coordinate information regarding a display region. The first contents and/or the second contents may be displayed along a bending line generated based on the bending. The second contents may include additional information related to the first contents. The additional information may include at least one of hierarchy information related to the first contents, sequence information, and classify information. The controller may detect the size of the bending based on a signal output from the detector, and when the size of the bending is greater than a predetermined value, visually transform the first contents and display the same. The visually transforming may be magnifying, reducing, distorting, color changing, or changing of a font of a character.

Also, when the size of the bending is greater than the predetermined value, the controller may visually transform the first contents and display the same in response to the size of the bending. That is, as the size of bending increases, the controller may continuously change and display the first contents. For example, as the size of bending increases, the controller may gradually magnify the character size of the first contents and display the same.

The controller may detect additional bending of the flexible display based on a signal output from the detector, and when the direction of the additional bending changes with respect to the direction of the bending when the first contents are displayed, display the second contents. The first contents may be a first index. The second contents may be a second index. The first contents and/or the second contents may include index information related to contents. Also, the first contents and/or the second contents may include information related to contents. Also, the first contents and/or the second contents may include information for accessing one of a plurality of pages included in the contents. Also, the first contents and/or the second contents may include connection information for accessing one of a plurality of items included in the contents. Hereinafter, the first contents and the second contents are described using a first index and a second index as an example.

Referring to FIG. 34A, contents 3401 and a plurality of items 3402a, 3402b, 3402c, 3402d, 4302e are displayed on the flexible display. The controller displays the contents 3401 on the flexible display. The contents 3401 may be a phone number list, an address book, and a music file list. Also, the contents 3401 may include a plurality of items and may be configured using a plurality of pages. For example, the contents 3401 may be a phone number list. The phone number list may include a plurality of items 3402a, 3402b, 3402c, 3402d, 4302e. When bending is detected with the contents 3401 displayed on the flexible display, the controller may display the first contents related to the contents 3401 on a bending region where the bending has been detected. The first contents may include connection information for accessing a specific item among the plurality of items included in the contents. The first contents may be an index related to the contents. The first contents may be a first index. Also, the first contents may be additional information related to the contents. For example, the first contents may be a table of contents regarding the contents, detailed description of the contents.

The first index may include information for finding out a specific page or a specific item included in the contents. For example, in the case where the contents is a phone number list, the first index may be Hangul consonants and vowels or an alphabet for finding out a person's name.

The flexible display device may display a plurality of indexes. In the description below, the indexes are named a first index, a second index, and a third index according to a displayed sequence.

The flexible display device may determine in advance the number of indexes that may be displayed on a bending region while displaying contents. The contents may include information regarding a displayable index. The flexible display device may obtain the number of displayable indexes from the contents and determine the number of indexes. For example, in the case where indexes that may be displayed by contents 'A' is 5, the flexible display device may determine the number of indexes displayed on the flexible display as 5 while displaying the contents 'A'. The contents 3401 cooperate with the first index, and when a user touches a specific position of the first index with his finger, the contents may be switched to a page corresponding to the first index and displayed. For example, when the contents are a phone number list and an alphabet is displayed on the first index, a person's name starting with 'A' is displayed on the uppermost portion in a page of the contents. When the user touches 'C' of the first index, a person's name starting with 'C' is displayed on the uppermost portion in the page of the contents.

A position where the first index is displayed may change depending on a region where bending has been detected. For example, in the case where the user bends the right side of the flexible display, the first index may be displayed on the right side. In the case where the user bends the left side of the flexible display, the first index may be displayed on the left side. In the case where the user bends the lower side of the flexible display, the first index may be displayed on the lower side. When the user bends the right lower end corner portion of the flexible display, the controller may display the first index on the right lower end corner portion in a direction of about 45 degrees.

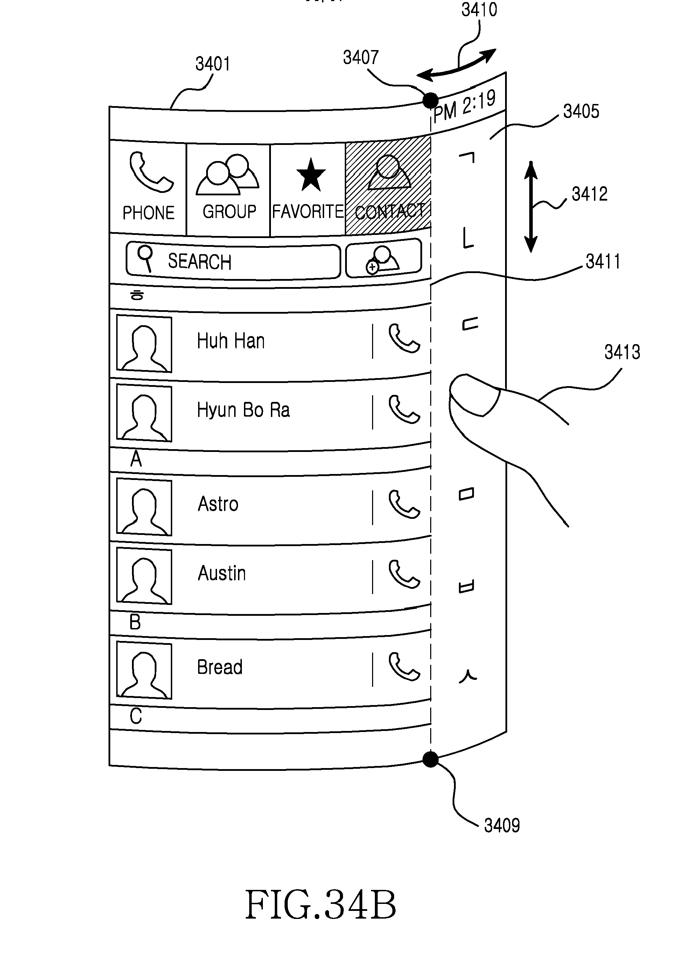

Referring to FIG. 34B, the contents 3401, bending points 3407, 3409, a bending line 3411, a first index 3405, and a bending direction 3410 are displayed on the flexible display. When the user 3413 bends the right side of the flexible display with the contents 3401 displayed on the flexible display, the detector may detect bending of at least a partial region of the flexible display and output a signal corresponding thereto. The controller may receive a signal output from the detector and determine an attribute including at least one of a direction, a pressure, a velocity, or a size related to the bending based on the signal. The controller may display a first index 3405 related to the contents 3401 on a bending region where the bending has been detected depending on the determined attribute. As the flexible display is bent, the bending points 3407, 3409, and the bending line 3411 may be generated. The first index 3405 may include information related to the contents 3402. The first index 3405 may include information for exploring a plurality of items included in the contents 3402. The first index 3405 may be scrolled in the lengthwise direction of the bending line 3411. A bending region where the first index 3405 is displayed may be the neighborhood of the bending line 3411. The first index 3405 may be sorted and displayed along a vertical direction 3412 of the bending line 3411.

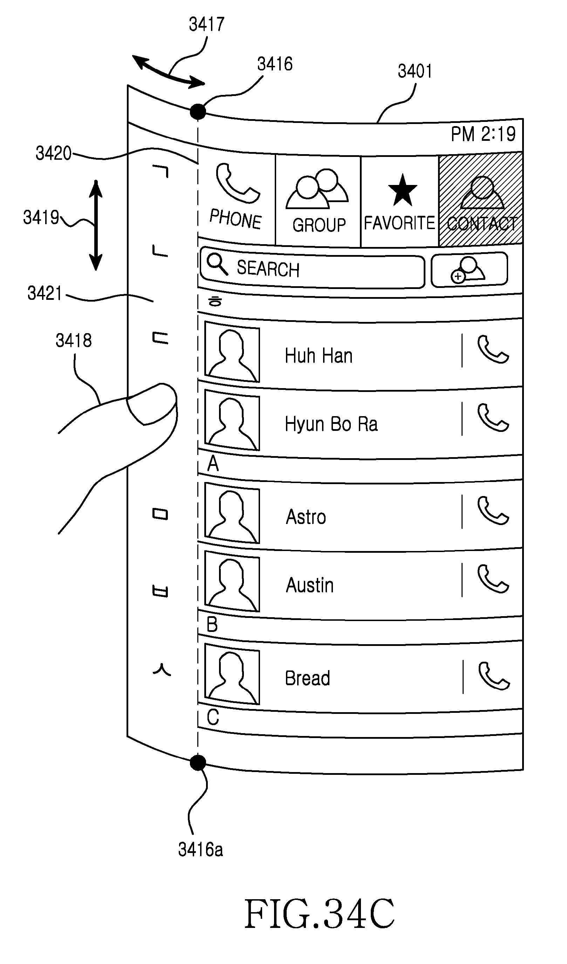

Referring to FIG. 34C, the contents 3401, a first index 3421, bending points 3416, 3416a, a bending line 3420, and a bending direction 3417 are displayed on the flexible display. When a user 3418 bends the left side of the flexible display with the contents 3401 displayed on the flexible display, the controller may detect the bending and display the first index 3421 related to the contents 3401 on a bending region where the bending has been detected in response to the bending. The bending points 3416, 3416a, and the bending line 3420 may be generated based on the bending. The bending line 3420 is a virtual line connecting the bending points 3416, 3416a. The first index 3421 may be scrolled in the lengthwise direction 3419 of the bending line 3420.

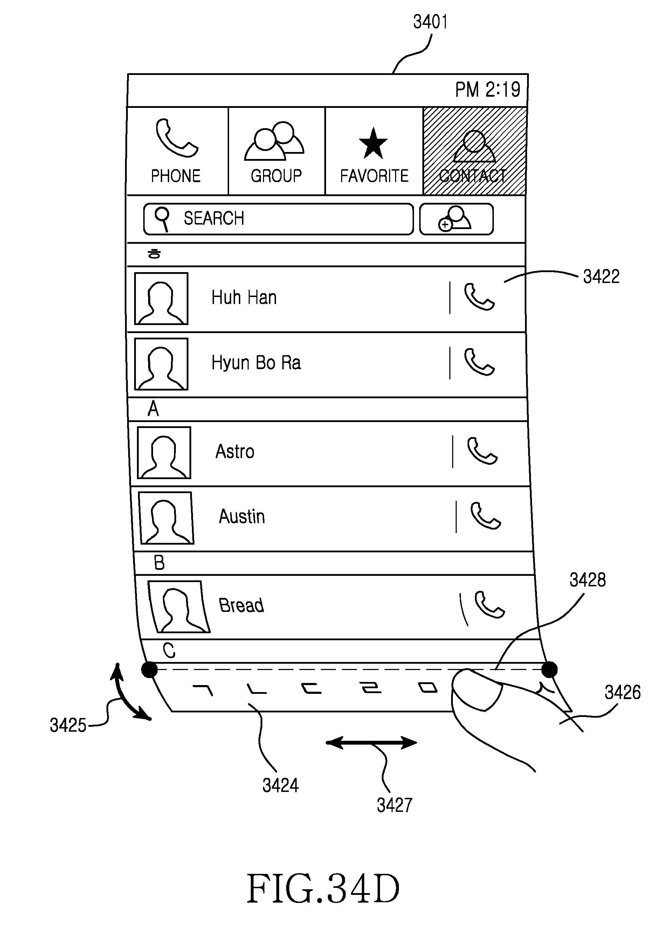

Referring to FIG. 34D, the contents 3401, a first index 3424, a bending line 3428, and a bending direction 3425 are displayed on the flexible display. When bending is generated on the lower side by a user 3426 with the contents 3401 displayed on the flexible display, the controller may display the first index 3424 along the bending line 3428 on a bending region where the bending has been detected. As the bending occurs, bending points may be generated and the bending line 3428 connecting the bending points may be generated. The first index 3424 may be scrolled in the lengthwise direction 3427 of the bending line 3428.

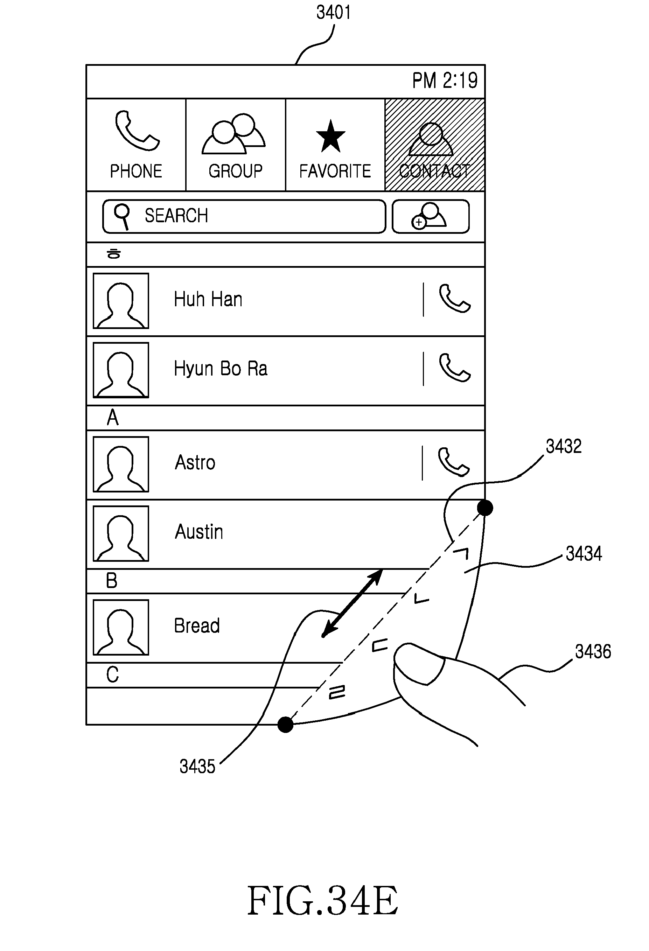

Referring to FIG. 34E, the contents 3401, a first index 3434, and a bending line 3432 are displayed on the flexible display. When a user 3436 bends the right lower end corner portion of the flexible display with the contents 3401 displayed on the flexible display, the controller may display the first index 3434 along the bending line 3432 on the right lower end corner portion where the bending has been detected. For example, the bending line 3432 is inclined at an angle of about 45 degrees with respect to the lower end side of the flexible display. The first index 3434 may be displayed at an angle of about 45 degrees along the bending line 3432. The first index 3434 may be scrolled in the lengthwise direction 3435 of the bending line 3432. The contents 3401 displayed on the flexible display are displayed at a slope of 0 degree, but the first index may be displayed at a slope of about 45 degrees. The slope may change depending on a position of bending.

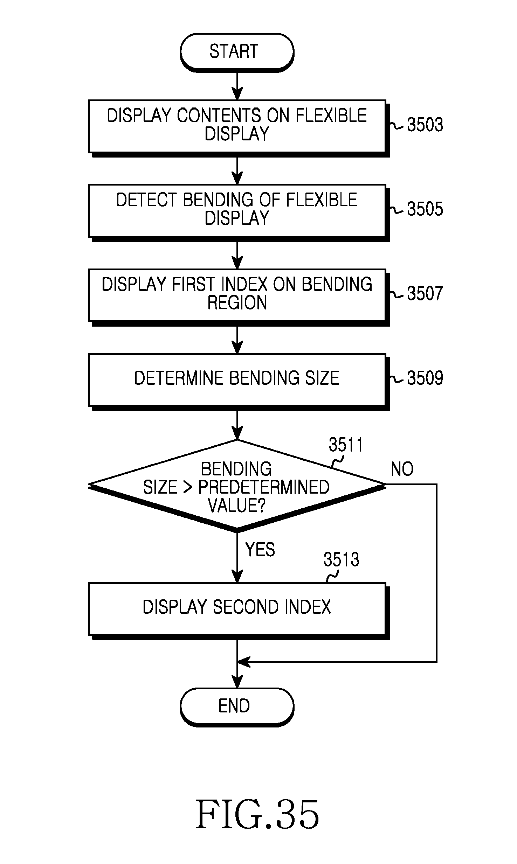

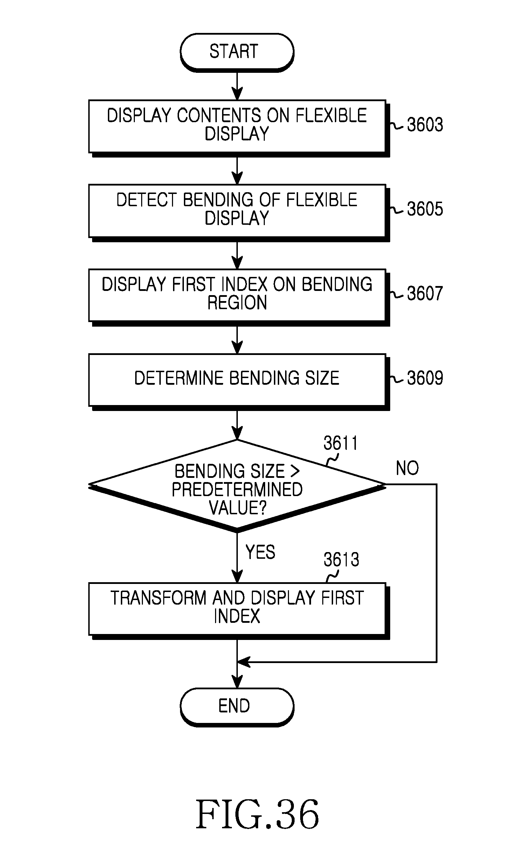

FIGS. 35 and 36 are flowcharts illustrating a process of displaying a first index or a second index depending on the size of bending in the flexible display device according to an embodiment of the present disclosure. The flexible display device is an electronic device functionally connected with the flexible display. The electronic device may display contents including a plurality of items on the flexible display, detect bending of the flexible display, and display first contents related to the contents on a bending region in response to the bending. The electronic device may detect the size of the bending, and when the size of the bending is greater than a predetermined value, display second contents. The first contents and the second contents may include connection information for accessing a specific item among a plurality of items included in the contents. The first contents and the second contents may be displayed along the bending line generated based on the bending. The second contents may include additional information regarding the first contents. The additional information may include at least one of hierarchy information related to the first contents, sequence information, and classify information.

The electronic device may detect the size of bending, and when the size of the bending is greater than a predetermined value, visually transform the first contents and display the same. The visually transforming may be magnifying, reducing, distorting, color changing, or changing of a font of a character.

The electronic device may detect additional bending of the flexible display, and when the direction of the additional bending is changed with respect to a bending direction of a point when the first contents are displayed, display the second contents. The first contents and/or the second contents may include index information regarding the contents. The first contents may be a first index. The second index may be a second index.

Referring to FIG. 35, the flexible display device displays contents on the flexible display in operation 3503. When a user bends the flexible display, the detector detects bending of at least a partial region of the flexible display and outputs a signal corresponding thereto in operation 3505. The controller displays the first index related to the contents on a bending region where the bending has been detected based on the signal output from the detector in operation 3507. When a user bends the flexible display, the controller may detect and determine the size of the bending based on a signal output from the detector in operation 3509. Also, the controller may determine an attribute including at least one of a direction, a pressure, a velocity, an area, or a size related to the bending based on a signal output from the detector. When a user bends the flexible display, the first index is displayed, and when the user continues to bend the flexible display with the first index displayed, the controller compares the size of the bending with a predetermined value in operation 3511. The controller may display the first index on the flexible display until the size of the bending reaches the predetermined value. The predetermined value may be a value determined and input by a manufacturing company when the flexible display device is manufactured. Also, the predetermined value may be a value set by a user. The flexible display device may display a Graphic User Interface (GUI) that may receive the predetermined value from a user on the flexible display. When the size of bending is greater than the predetermined value, the controller may display the second index in operation 3513. Also, when additional bending occurs with the first index displayed and the size of the bending reaches the predetermined value, the controller may display the second index. The second index may include additional information regarding the first index. For example, in the case where the first index is an initial letter for the title of contents, the second index may be the title of contents. In the case where the first index is an initial letter of a category, the second index may be a category name. In the case where the first index is a page for a chapter, the second index may be a chapter title. In the case where the first index is an alphabet, the second index may be a word starting with an alphabet.

The first index may be a chapter name of an electronic book, and the second index may be a sub-chapter. Alternatively, the first index may be a menu of an upper hierarchy, and the second index may be a menu of a lower hierarchy.

The second index may be displayed in a language different from that of the first index. For example, in the case where the first index is Korean, the second index may be displayed in English. The first index may be consonant of Hangul, and the second index may be an alphabet of English.

Referring to FIG. 36, the flexible display device displays contents on the flexibly display in operation 3603. When bending is generated from the flexible display by a user, the detector detects the bending of the flexible display in operation 3605. When the bending is detected, the controller displays a first index related to the contents on a bending region where the bending has been detected in response to the bending in operation 3607. The controller may determine the size, the angle, the direction, and the area of the bending based on a signal output from the detector. When a user bends the flexible display, the controller may detect and determine the size of the bending based on a signal output from the detector in operation 3609. When the user bends the flexible display, the first index is displayed, and when the user continues to bend the flexible display with the first index displayed, the controller compares the size of the bending with a predetermined value in operation 3611. The controller may display the first index on the flexible display until the size of the bending reaches the predetermined value. The predetermined value may be a value determined and input by a manufacturing company when the flexible display device is manufactured. Also, the predetermined value may be a value set by a user. The flexible display device may display a GUI that may receive the predetermined value from the user on the flexible display. When the size of the bending is greater than the predetermined value, the controller may visually transform and display the first index in operation 3613. The visually transforming may be magnifying, reducing, distorting, color changing, or changing of a font of a character.

For example, when the size of the bending is greater than the predetermined value, the controller may magnify a letter of the first index, reduce the letter of the first index, distort the letter of the first index, change the color of the letter of the first index, or change the font of the letter of the first index.

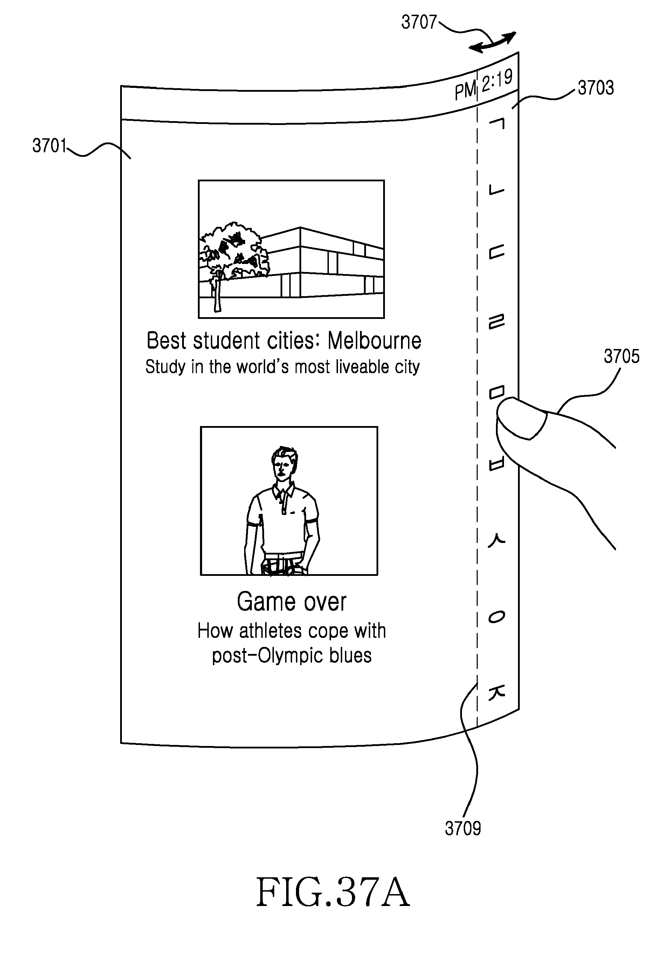

FIGS. 37A to 37C are views illustrating a process where a first index and a second index are represented depending on bending of the flexible display according to an embodiment of the present disclosure.

Referring to FIG. 37A, contents 3701, a bending line 3709, the first index 3703, and a bending direction 3707 are displayed on the flexible display. When a user bends the flexible display with his hand 3705, the controller may display the first index 3703 on a bending region where the bending has been generated along the bending line 3709. When the user touches the flexible display in order to bend the flexible display, the controller may detect a touched position. A touch sensor included in the detector detects a touch and outputs a signal. The controller receives the signal and detects a coordinate of the touched position. When the user bends the flexible display, a bend sensor included in the detector detects the bending and outputs a signal. The controller may receive the signal and display the first index on a bending region where the bending has been detected. The controller may use a bending signal and a touch signal output from the detector in order to determine the bending region. The controller may determine a bending region based on a bending line and a user's finger touch position. For example, the bending line 3709 and a point touched by the user's finger 3705 may be a bending region. Also, the controller may determine the bending region with only a signal output from a bend sensor.

When the size 3707 of bending is smaller than the predetermined value, the controller maintains displaying of the first index 3703 on the flexible display. When the user continues to bend the flexible display, the size of the bending increases more and more, and a bending angle increases. When the size of the bending is greater than the predetermined value, the controller may magnify a letter of the first index or display a second index.

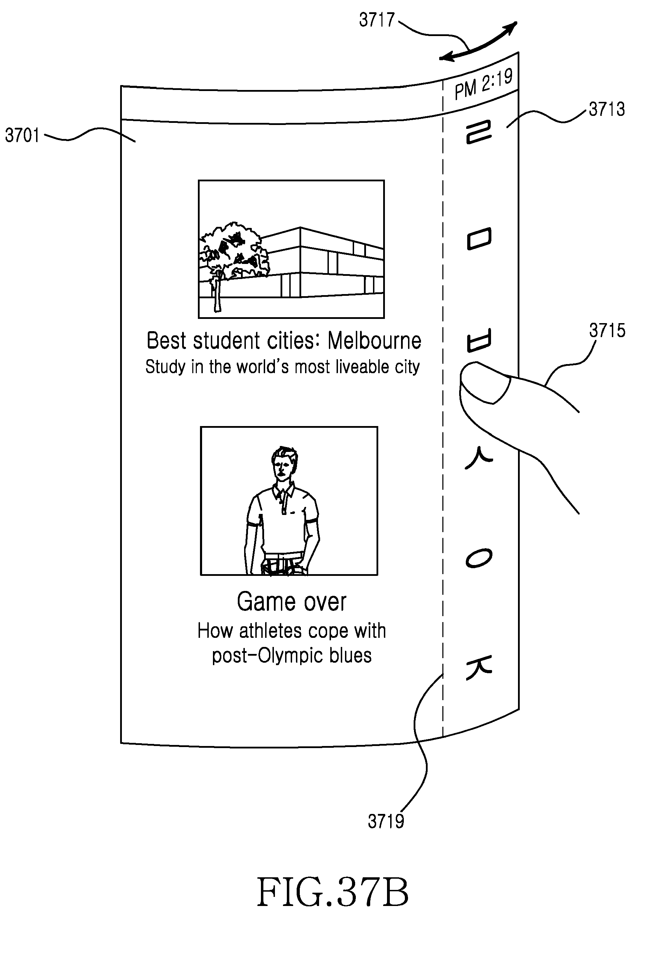

Referring to FIG. 37B, contents 3701, a bending line 3719, a bending direction 3717, and a letter of a first index 3703 are magnified 3713. When a user bends the flexible display with the contents 3701 displayed on the flexible display, the first index 3703 is displayed. When the user continues to bend the flexible display, the size of the bending increases and the bending line 3719 moves to the left. When the size of the bending is greater than a predetermined value, the controller may magnify 3713 a letter of the first index. When the user bends the flexible display under the state of FIG. 37A, the bending line 3709 moves 3719 to the left, and the first index 3703 is magnified 3713.

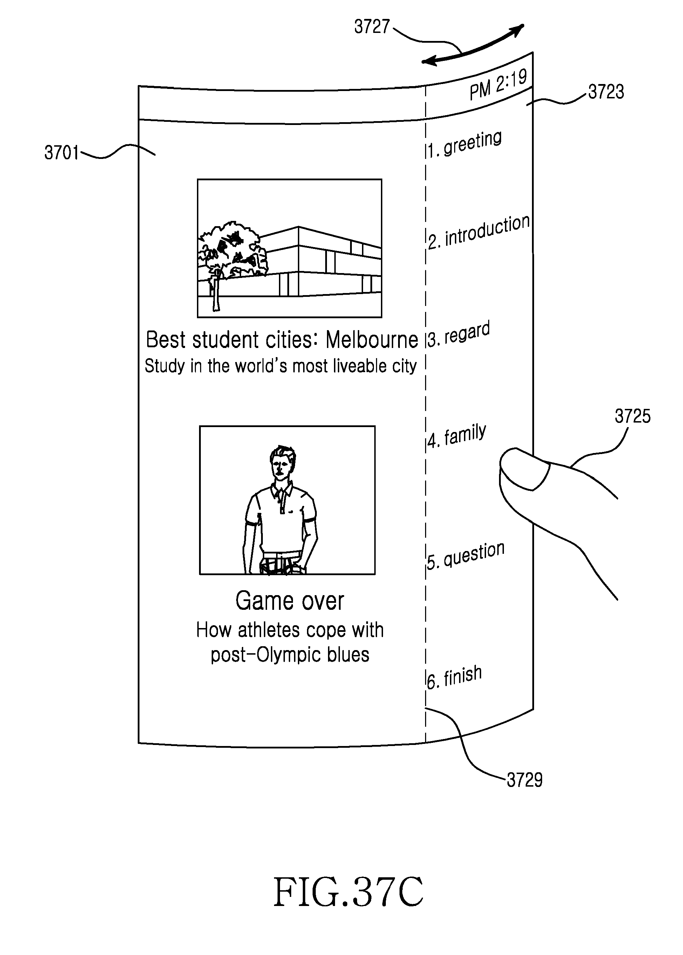

Referring to FIG. 37C, the contents 3701, a bending line 3729, a bending direction 3727, and a second index 3723 are displayed on the flexible display. A user additionally bends the flexible display under the state of FIG. 37A. When the user bends the flexible display with contents displayed on the flexible display, the first index 3703 is displayed. When the user continues to bend the flexible display with the first index displayed on the flexible display, the size of the bending increases, and when the size of the bending exceeds a predetermined value, the controller displays the second index 3723. When the user bends the flexible display, the detector detects the bending and outputs a signal. The controller receives a signal output from the detector to determine the size of the bending. For example, in the case where a predetermined value is 70 in the electronic device, when a user bends the flexible display device in a size of 50 with contents displayed on the flexible display, the detector detects the bending and outputs a signal. The controller receives the signal to determine the size of the bending is 50. Since the size of the bending is smaller than 70 which is the predetermined value, the controller displays the first index on a bending region where the bending has been detected in the flexible display. When the user additionally bends the flexible display and the size of the bending becomes 80, since the size of the bending is greater than 70 which is the predetermined value, the controller displays the second index on a region where the bending has been detected in the flexible display. The controller may display the second index together beside the first index. Also, the controller may remove the first index from the flexible display and display only the second index on the flexible display. The second index may include additional information regarding the first index. For example, in the case where the first index is an initial letter for the title of a table of contents, the second index may be the title of the table of contents. In the case where the first index is an initial letter of a category, the second index may be a category name. In the case where the first index is a page for a chapter, the second index may be a chapter title. In the case where the first index is an alphabet, the second index may be a word starting with an alphabet.

The first index may be a chapter name of an electronic book, and the second index may be a sub-chapter. Alternatively, the first index may be a menu of an upper hierarchy, and the second index may be a menu of a lower hierarchy. The second index may be displayed in a language different from that of the first index. For example, in the case where the first index is Korean, the second index may be displayed in English. The first index may be consonant of Hangul, and the second index may be an alphabet of English.

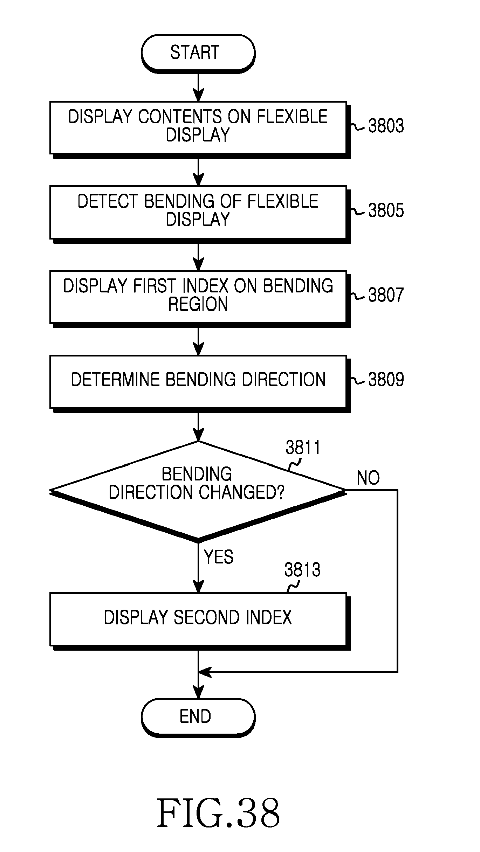

FIG. 38 is a flowchart illustrating a process for displaying a first index or a second index depending on a bending direction in a flexible display device according to an embodiment of the present disclosure. The electronic device may detect bending on at least a partial region of the flexible display, output a signal corresponding thereto, determine an attribute including at least one of a direction, a pressure, a velocity, or a size related to the bending based on the signal, when the attribute is a first attribute, display first contents related to the contents on the at least partial region or another region of the flexible display, and when the attribute is a second attribute, display second contents related to the contents on the at least partial region or still another region.

Referring to FIG. 38, the controller displays contents on the flexible display in operation 3803.

The process where the contents are displayed on the flexible display may be performed by reading, at the controller, data to display on the flexible display from the storage, and providing the data to the flexible display. That is, the controller may control the flexible display to display contents. The detector detects bending of the flexible display in operation 3805. Also, as the bending is detected, the detector may output a signal corresponding to the bending. The controller may detect a direction, a pressure, a velocity, a size, an angle, and an area related to the bending of the flexible display based on a signal output from the detector. The controller displays the first index on a region where the bending has been detected along a bending line generated based on the bending in operation 3807. When a user bends the flexible display, a bending line is generated. The bending line may be generated in the neighborhood of the bending region. The bending region may be generated between the bending line and a position where the user's hand has touched the flexible display. The controller may receive a signal output from the detector, and recognize a position of a bending line and a position where the user's hand has touched from the signal. The controller may determine a bending region from the position of the bending line and the position where the user's hand has touched.

The controller detects and determines the direction of the bending in operation 3809. The controller may receive a signal output from the detector and detect and determine the direction of the bending based on the signal. When the direction of the bending is determined, the controller determines whether the direction of the bending has changed in operation 3811. When the direction of the bending has changed, the controller displays the second index in operation 3813. As the second index is displayed, the first index is deleted from the flexible display and disappears from the flexible display. Also, the second index may be displayed side by side beside the first index. For example, when a user bends the flexible display in the Z- direction with contents displayed on the flexible display, the first index including a Hangul consonant is displayed. When the user bends the flexible display in the Z+ direction under this state, the second index including an alphabet is displayed. As the second index is displayed, the first index may disappear from the flexible display.

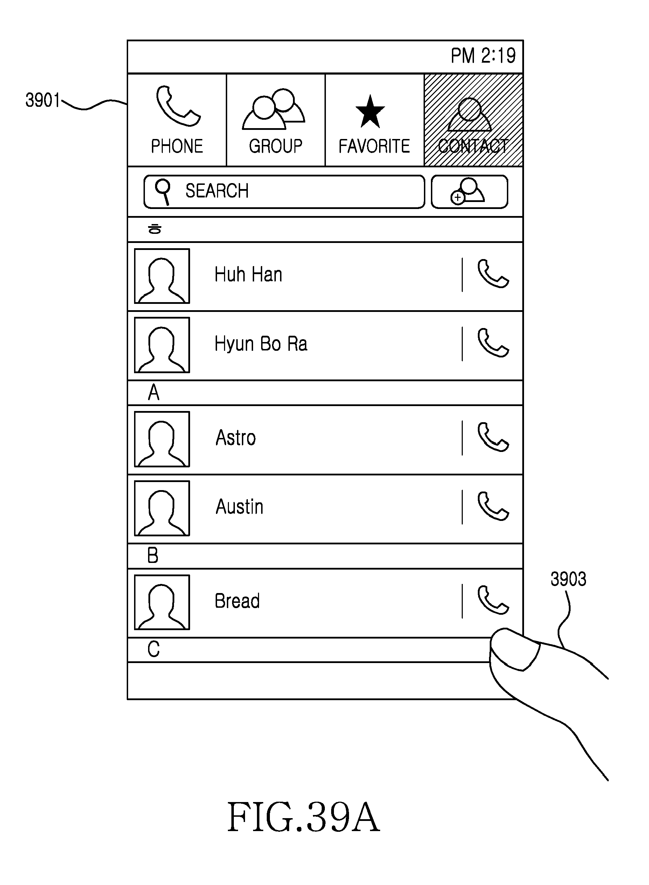

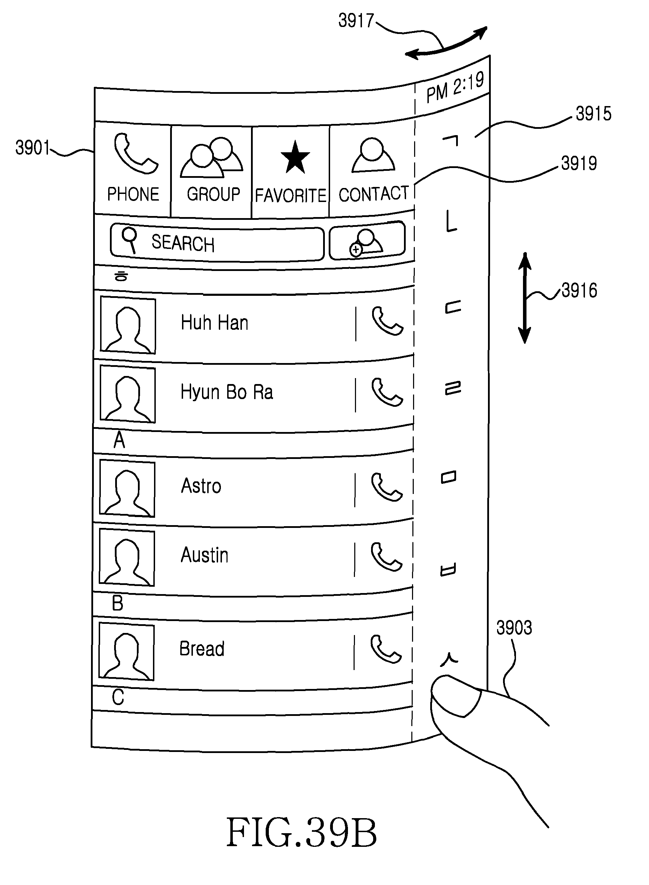

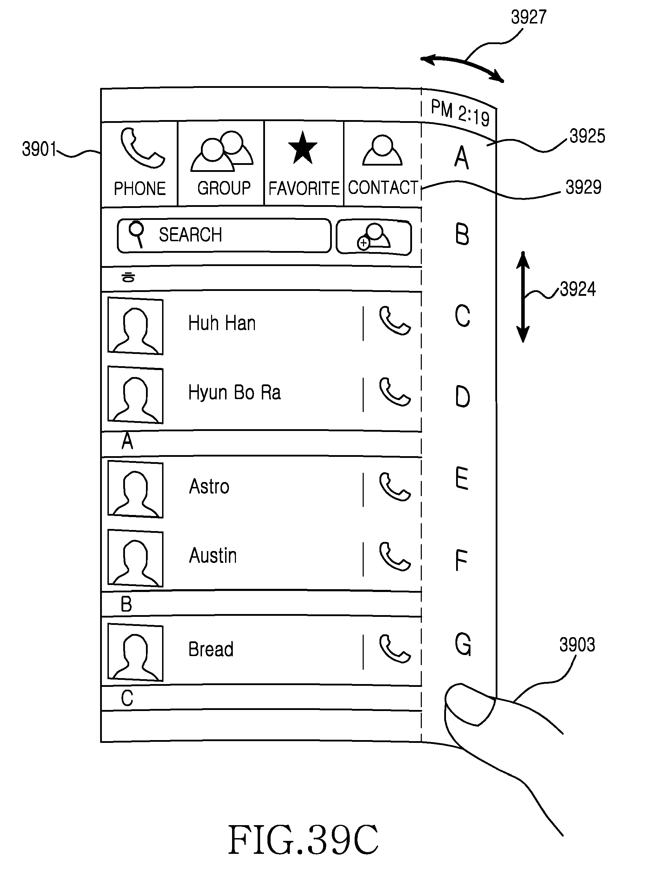

FIGS. 39A to 39C are views illustrating a first index or a second index is displayed along a bending direction of the flexible display according to an embodiment of the present disclosure. The electronic device is functionally connected with the flexible display and displays contents on the flexible display. The electronic device may detect bending of the flexible display, and display first contents or second contents related to the contents on a bending region in response to the direction of the bending. When the direction of the bending is a first direction, the electronic device may display the first contents on the bending region. When the direction of the bending is a second direction, the electronic device may display the second contents on the bending region. The first contents may be sorted along a bending line generated in response to the bending, and displayed in a lengthwise direction of the bending line. The first contents and/or the second contents may include index information related to the contents. The first contents may be a first index. The second contents may be a second index.

Referring to FIGS. 39A to 39C, contents 3901, a first index 3915, a bending line 3919, a bending direction 3917, a second index 3925 a bending line 3929, and a bending direction 3927 are displayed on the flexible display. The bending direction 3917 is the Z-direction, and the bending direction 3927 is the Z+ direction. The contents may be a phone number list. When a user 3903 bends the flexible display, the detector may detect bending of the flexible display and display the first index 3915 on a bending region where the bending has been detected. The first index may include a Hangul consonant. The first index may be sorted along the bending line 3919, and scrolled in the lengthwise direction 3916 of the bending line 3919. The bending direction 3917 is the Z- direction. When a user bends the flexible display 3901 in the Z+ direction 3927 with the first index 3915 displayed on the flexible display, the controller may display the second index 3925 on a bending region where the bending has been detected. The controller may receive a signal from the detector and determine the direction of the bending. The controller may detect additional bending of the flexible display, and when the direction of the additional bending is changed with respect to a bending direction of a point where the first index is displayed, the controller may display the second index. The controller may read information regarding a previous bending direction from the storage and compare it with a current bending direction. When it is determined that the bending direction has been changed as a result of comparison, the controller may display the second index 3925 on the flexible display 3901. Also, when a user bends the flexible display in the opposite direction with the second index displayed, the controller may display the first index. The first index 3915 may include a Hangul consonant, and the second index 3925 may include an English alphabet. The second index 3925 may be sorted along the bending line 3929, and scrolled in the lengthwise direction 3924 of the bending line.

When a user bends the flexible display with contents displayed on the flexible display, the controller may determine a bending direction based on a signal output from the detector, and display the first index or the second index on the flexible display based on the bending direction. For example, when the user bends the flexible display with the contents 3901 displayed on the flexible display, the controller receives a signal from the detector to determine the direction of the bending. When the direction of the bending is the Z- direction 3917, the controller displays the first index 3915 on the flexible display. When the direction of the bending is the Z+ direction 3927, the controller displays the second index 3925 on the flexible display.

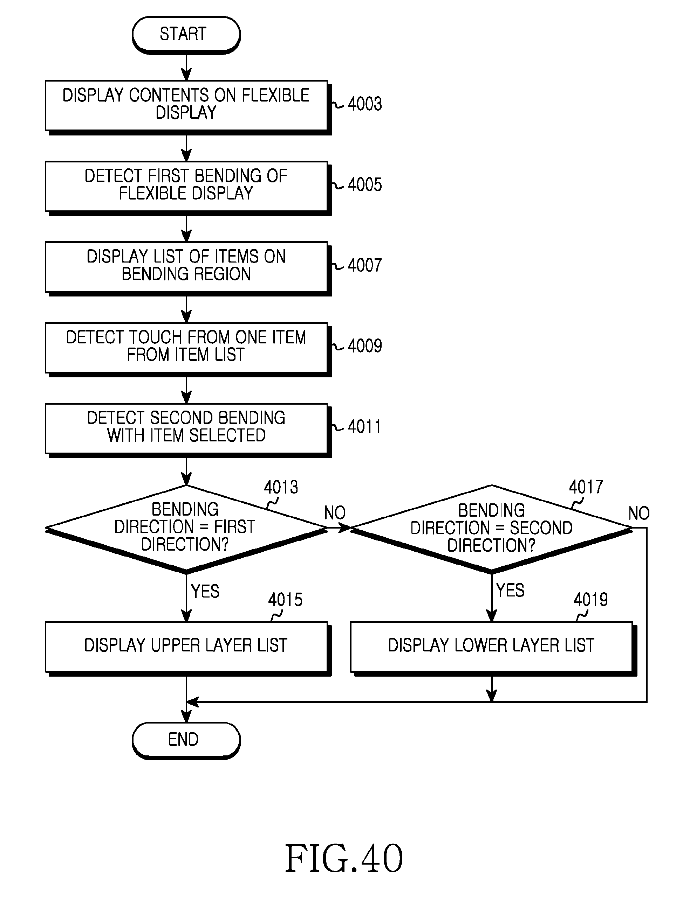

FIG. 40 is a flowchart illustrating a process of moving between hierarchies in an item list having a hierarchical structure along the direction of bending according to an embodiment of the present disclosure. The electronic device is functionally connected with the flexible display and displays contents on the flexible display. The electronic device may detect first bending of the flexible display, and display a plurality of items related to the contents and having a hierarchical structure on a bending region in response to the first bending. The electronic device may detect second bending of the flexible display with one of the plurality of items selected. The electronic device may display an upper layer item or a lower layer item of the selected item in response to the direction of the second bending.

Referring to FIG. 40, the controller displays contents on the flexible display in operation 4003. When a user bends the flexible display with the contents displayed on the flexible display, the detector detects the bending and outputs a signal in response to the bendfing. The controller receives the signal output from the detector and detects first bending of the flexible display based on the signal in operation 4005. The controller displays a list of items on a bending region where the bending has been detected based on the bending in operation 4007. The list of items is a set of a plurality of items. Each item is formed in a hierarchical structure and may have an upper layer list and a lower layer list. When a user touches and selects one item from the item list or among the plurality of items displayed on the flexible display, the detector detects the touch and outputs a signal. The controller may receive the signal to detect the touch, and determine that the item has been selected in operation 4009.

When a user bends the flexible display while maintaining a touch with one of the plurality of items selected, the detector detects in operation 4011 second bending and outputs a signal. The controller receives the signal to determine the second bending has been generated, and determines the direction of the second bending. The controller may display an upper layer item or a lower layer item of the selected item in response to the direction of the second bending. The second bending may be generated in a direction same as the first bending or in a direction opposite to the first bending. When the direction of the second bending is a first direction in operation 4013, the controller displays the upper layer list of an item touched by a user's finger in operation 4015. When the direction of the second bending is a second direction in operation 4017, the controller displays the lower layer list of an item touched by the user's finger in operation 4019.

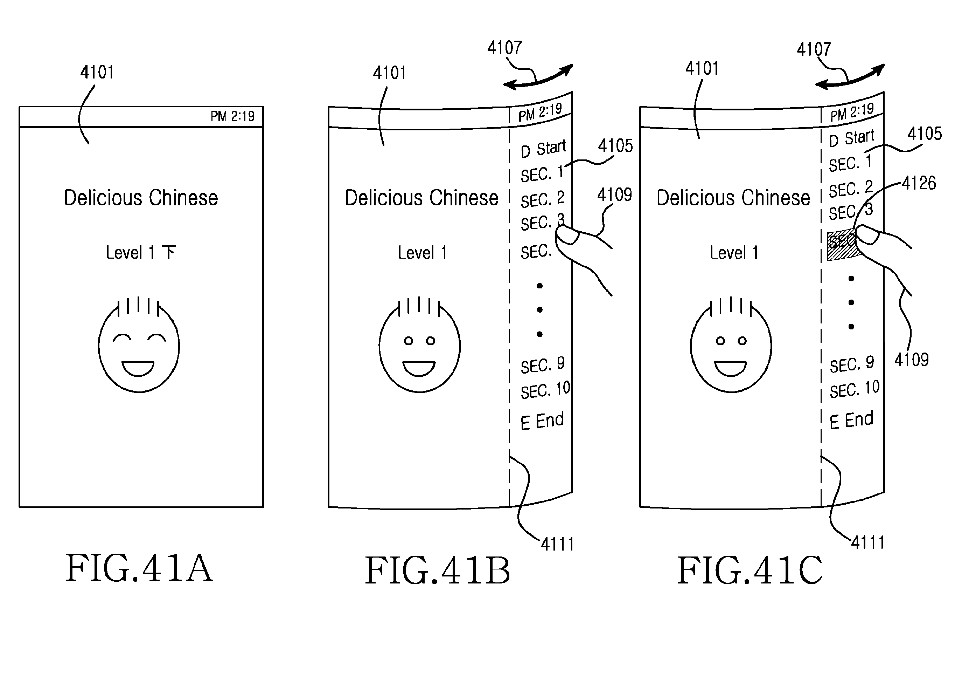

FIGS. 41A to 41C are views illustrating a list of an upper layer or a lower layer depending on the direction of bending of the flexible display according to an embodiment of the present disclosure. The electronic device may include a detector for detecting bending of the flexible display. The electronic device may display contents on the flexible display, detect first bending of the flexible display based on a signal output from the detector, display a plurality of items related to the contents and having a hierarchical structure, detect second bending of the flexible display with one of the plurality of items selected, and display an upper layer item or a lower layer item of the selected item in response to the direction of the second bending.

Referring to FIGS. 41A to 41C, contents 4101 are displayed on the flexible display. When a user bends the right edge of the flexible display in a Z- direction 4107 with the contents 4101 displayed, a list of items including a plurality of items is displayed on a bending region where the bending has been detected. The list of the items may be sorted and displayed along a bending line 4111. The controller may display the list 4105 of the items on the bending region generated to the right side of the bending line 4111.

Each item included in the list of items may have a corresponding upper layer list and a corresponding lower layer list. The controller may display a list of items on the flexible display while bending is maintained. When a user 4109 touches and selects one item 4126 on the list 4105 of the items, the controller may determine that the item 4126 displayed on a position where the touch has been detected has been selected. The controller may give a visual feedback to the selected item 4126. For example, the controller may give a visual feedback by inverting the selected item 4126 and displaying the same, or changing color, or changing a size. When the user bends the flexible display with the item 4126 selected, the controller may display an upper layer list or a lower layer list of the selected item 4126.

The controller may determine bending 4107 that has been generated before the item 4126 is selected as first bending, and determine bending 4127 that has been generated with the item 4126 selected as second bending. When the second bending is detected with the item selected, the controller may determine the direction of the second bending, and display an upper layer list or a lower layer list of the selected item on the flexible display device depending on the direction of the second bending.

For example, when a user bends the flexible display in the Z- direction with the item 4126 selected, the controller may display the lower layer list of the selected item 4126 on a bending region. When the user bends the flexible display in the Z+ direction with the item 4126 selected, the controller may display the upper layer list of the selected item 4126 on a bending region.

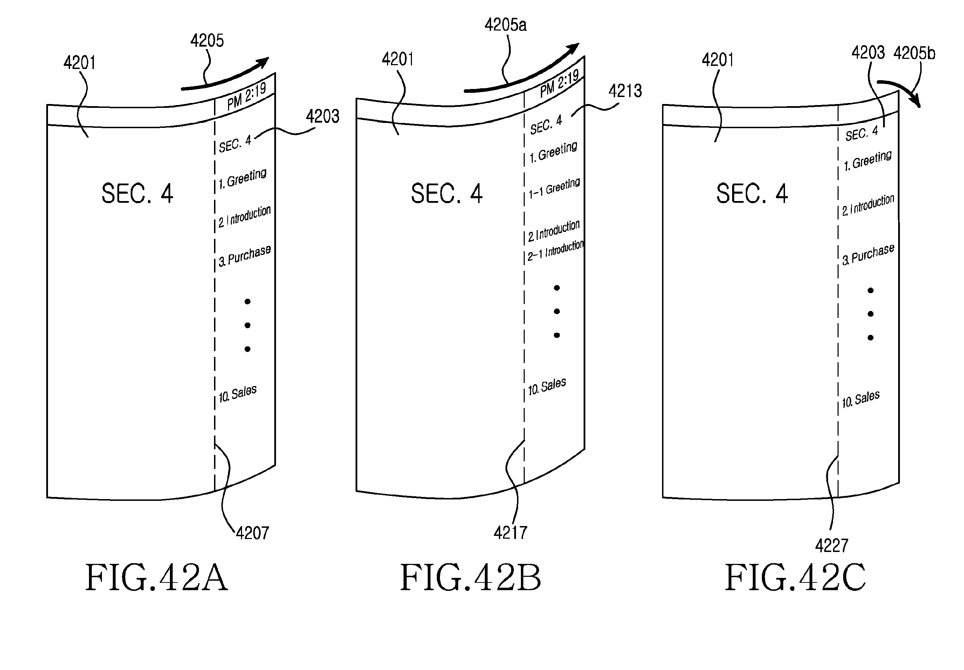

FIGS. 42A to 42C are views illustrating detecting bending with an item selected and displaying an upper layer list or a lower layer list on the flexible display device according to an embodiment of the present disclosure.

Referring to FIG. 42A, contents 4201, a bending line 4207, and a lower layer list 4203 of the item 4126 are displayed on the flexible display having a bending direction 4205. When a user selects one item 4126 from an item list displayed on the flexible display and bends the flexible display in the Z- direction in FIG. 41C, the controller may determine second bending has been generated. As the item 4126 is selected, the controller displays the contents 4201 related to the selected item 4126 and the lower layer list 4203 of the selected item 4126 on the flexible display.

Referring to FIG. 42B, the contents 4201, a bending line 4217, and a second lower layer list 4213 are displayed having a bending direction 4205a. The second lower layer list is a lower layer list of the lower layer list 4203.

Referring to FIG. 42C, the contents 4201, a bending line 4227, and a lower layer list 4203 are displayed on the flexible display having a bending direction 4205b. When a user bends the flexible display in the Z+ direction with the second lower layer list displayed in FIG. 42B, the controller may display the lower layer list 4203 in response thereto.

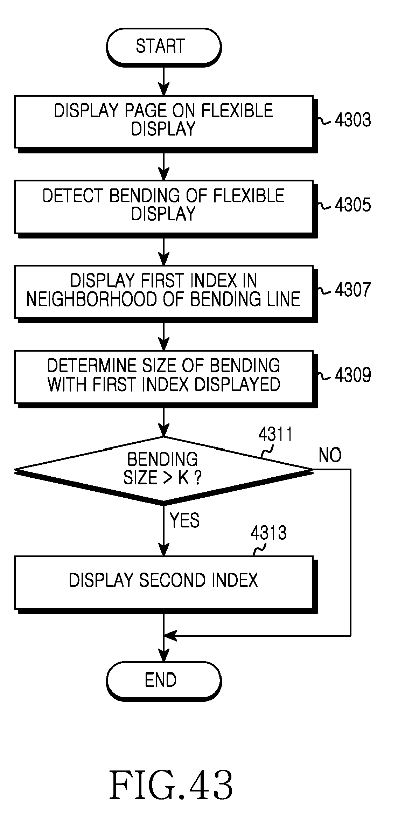

FIG. 43 is a flowchart illustrating a process of displaying a first index and a second index depending on the size of bending according to an embodiment of the present disclosure.

Referring to FIG. 43, the controller displays a page on the flexible display in operation 4303. A page may be contents displayed on one screen of the flexible display. The contents may be a phone number list, an address book, and a music file list. Also, the contents may be a thumbnail image list for previewing a photo and a moving picture. The contents may include a plurality of items, and may be configured using a plurality of pages. One page is an item displayed on one page. For example, in the case where contents include 50 items and the number of items displayed on one screen is 5, one page may be configured using 5 items, and the contents are configured using 10 pages.

Also, contents may not include a plurality of items and may be configured using only a plurality of pages. For example, e-book contents may be configured using only a plurality of pages.

The controller detects bending of the flexible display in operation 4305. When a user touches and bends one side of the flexible display, a bending line is generated. The controller detects a signal from the detector to detect the bending. The controller displays a first index in the neighborhood of the bending line based on the detected signal in operation 4307. The controller determines the size of the bending with the first index displayed in operation 4309. When the user bends the flexible display again with the first index displayed, the controller may determine the size of the bending based on a signal received from the detector. When the size of the bending is greater than k which is a predetermined value in operation 4311, the controller may display a second index. k may be an integer value. For example, a value k may be 70. A display area of the second index may be greater than that of the first index, and a page may be variously transformed when the second index is displayed in operation 4313.

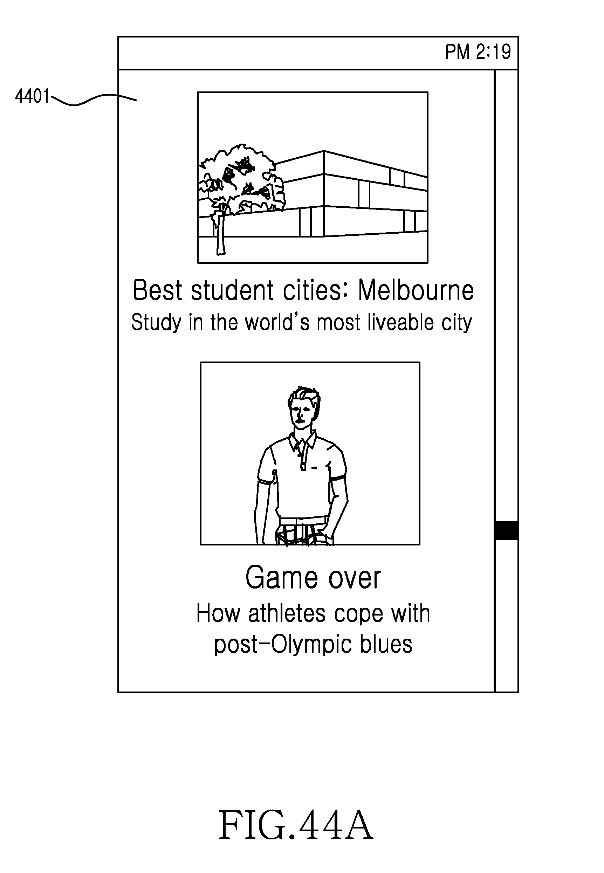

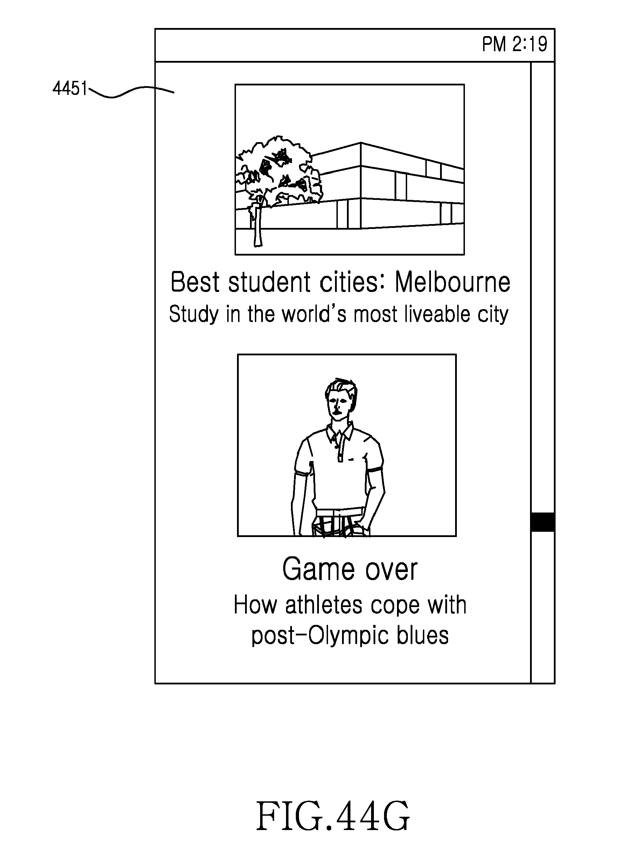

FIGS. 44A to 44H are views illustrating a region where contents are displayed is transformed when a first index and a second index are displayed on the flexible display according to an embodiment of the present disclosure.

Referring to FIG. 3, when a user bends the flexible display, a bending line is generated and the flexible display may be divided into a flat region and a bending region with reference to the bending line. The contents may be displayed on the flat region, and the first index and the second index may be displayed on the bending region. The bending region is a region where bending is detected.

Referring to FIGS. 44A to 44H, contents 4401 are displayed on the flexible display. When bending is not generated, the entire flexible display may be the flat region, and the contents may be displayed on the entire region of the flexible display.

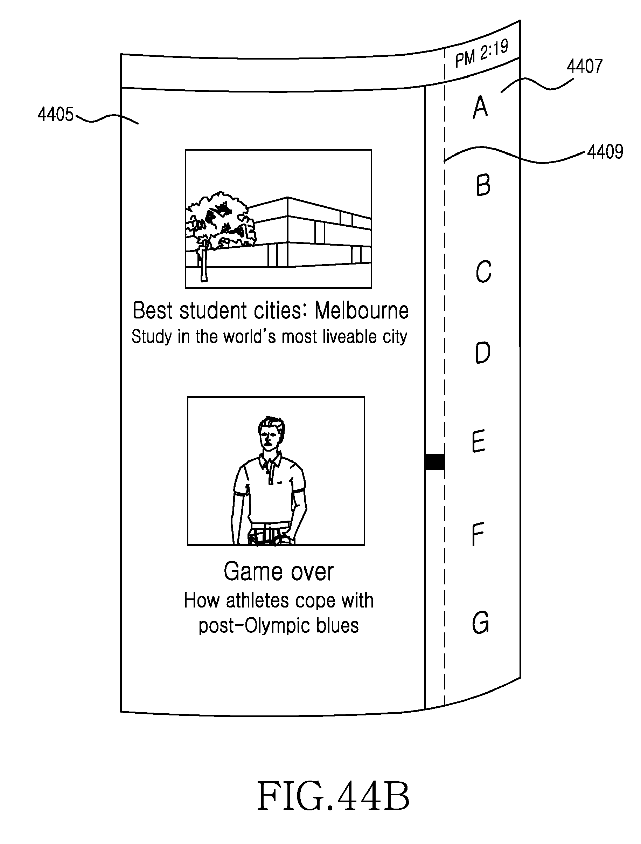

Referring to FIG. 44B, a first index 4407 and a bending line 4409 are displayed with contents 4405 displayed on the flexible display. When a user bends the flexible display with the contents displayed, the bending line 4409 is generated. The contents 4405 are displayed on the flat region, and the first index 4407 may be displayed on a bending region where bending has been detected. The controller may recognize the position of the bending line and the bending region based on a signal output from the detector, and display the first index 4407 on the bending region formed in the neighborhood of the bending line 4409. The controller may reduce the contents 4405 horizontally and display the same on the flat region while displaying the first index 4407 on the bending region. When the user additionally bends the flexible display with the first index 4407 displayed, the detector detects the additional bending and outputs a signal. The controller detects the additional bending with first index 4407 displayed. As the additional bending is generated, the bending region may extend and the controller may display a second index 4413 on the extended bending region. The second index 4413 may include additional information for the first index 4407.

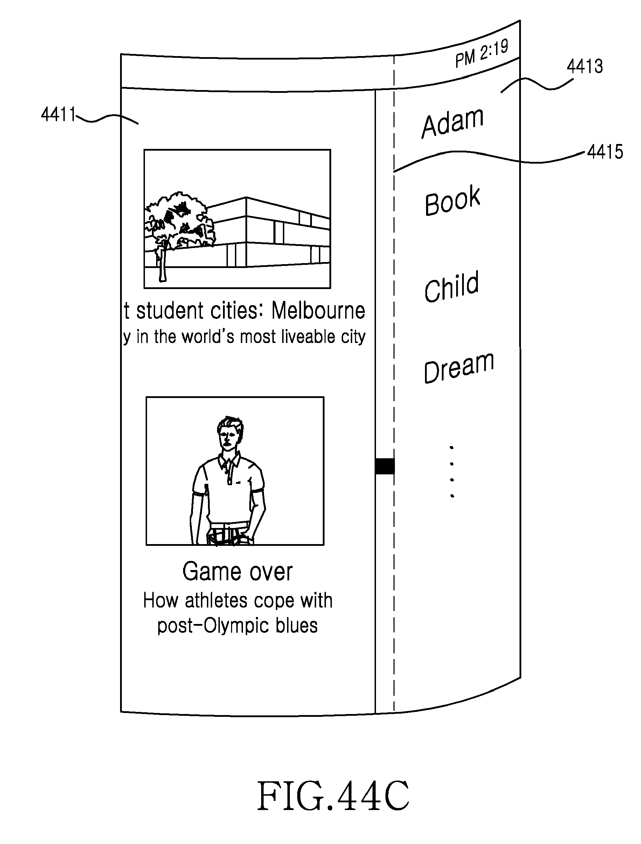

Referring to FIG. 44C, contents 4411, a bending line 4415, and a second index 4413 are displayed on the extended bending region. The second index may include additional information regarding the first index 4407, and may be displayed on an area wider than that of the first index 4407. For example, the first index is 'A, B, C, D, E, ...', and the second index is 'Adam, Book, Child, Dream,...'. The bending line 4415 may move to the left and may be generated compared to the bending line 4409 of FIG. 44B. As the bending region extends, the contents 4411 is shifted to the left and displayed, and a partial region on the left side of the contents 4411 may disappear from the flexible display.

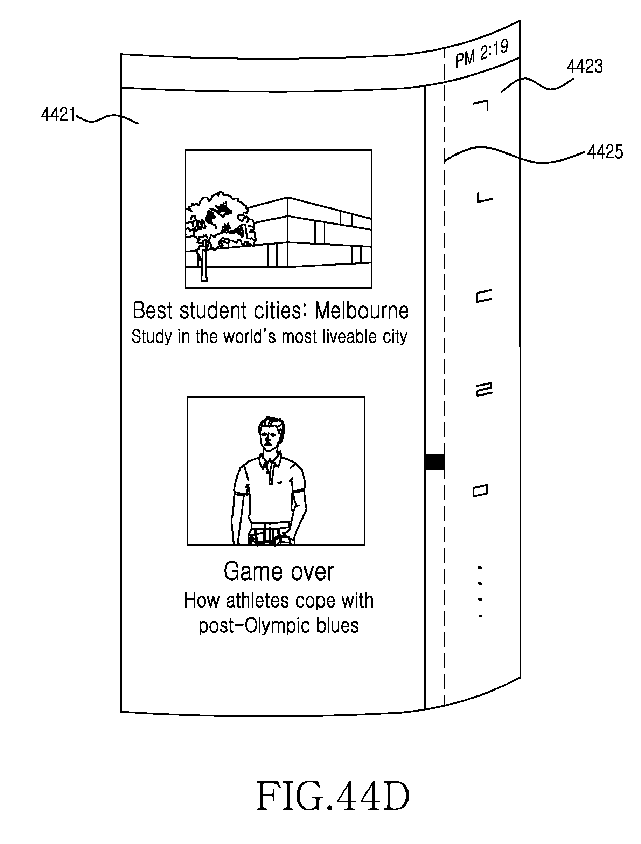

Referring to FIG. 44D, contents 4421, a bending line 4425, and a first index 4423 are displayed on the flexible display. The first index 4423 may include information for exploring the contents 4421. The first index 4423 may include information for exploring a specific page or a specific item included in the contents 4421. For example, in the case where the contents is a phone number list, the first index may be a Hangul consonant or an alphabet for finding out a person's name. In the case where the contents 4421 is an electronic book, the first index 4423 may include a number representing a chapter of the electronic book.

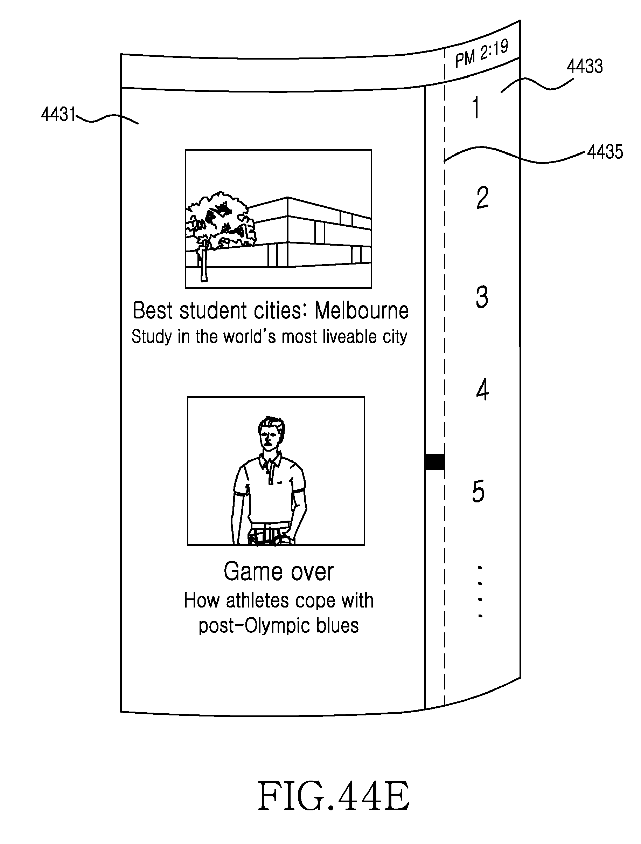

Referring to FIG. 44E, contents 4431, a bending line 4435, and a first index 4433 are displayed on the flexible display. The first index 4433 may include information for exploring the contents 4431. The first index 4433 may include information for exploring a specific page or a specific item included in the contents 4431. For example, in the case where the contents is a phone number list, the first index may be numerical. In the case where the contents 4431 is an electronic book, the first index 4433 may include a number representing a chapter of the electronic book.

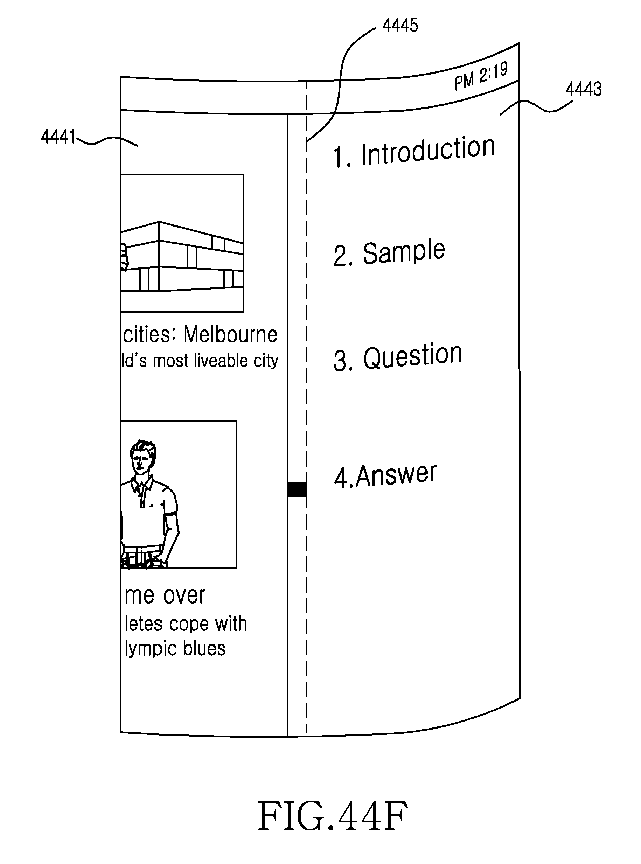

Referring to FIG. 44F, contents 4441, a bending line 4445, and a second index 4443 are displayed on the flexible display. When a user additionally bends the flexible display with the first index 4433 displayed on the flexible display as illustrated in FIG. 43D, the controller may display the second index 4443. The second index may include additional information regarding the first index. For example, in FIG. 43D, a number corresponding to a chapter of an electronic book is displayed on the first index 4433. A chapter number and a title of the electronic book are displayed together on the second index 4443. The controller may shift the contents 4441 to the left and display the same while displaying the second index 4443. Alternatively, the controller may display the first index or the second index such that it overlaps the contents. Also, the controller may reduce and display the contents.

Referring to FIG. 44F, contents 4451 are displayed.

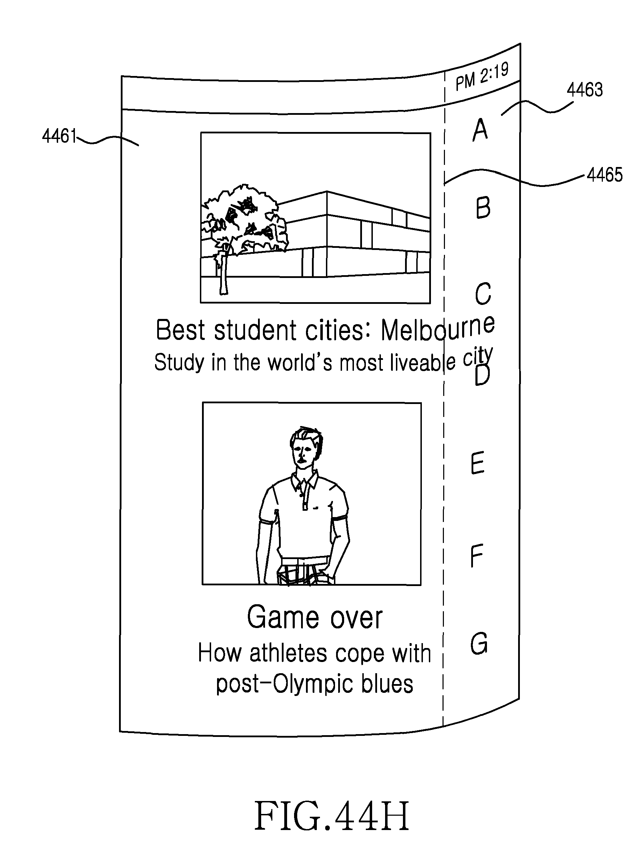

Referring to FIG. 44H, contents 4461, a first index 4463, and a bending line 4465 are displayed on the flexible display. The first index 4463 is displayed on the contents 4461 such that it overlaps the contents 4461. The first index 4463 may be sorted and displayed along the bending line 4465.

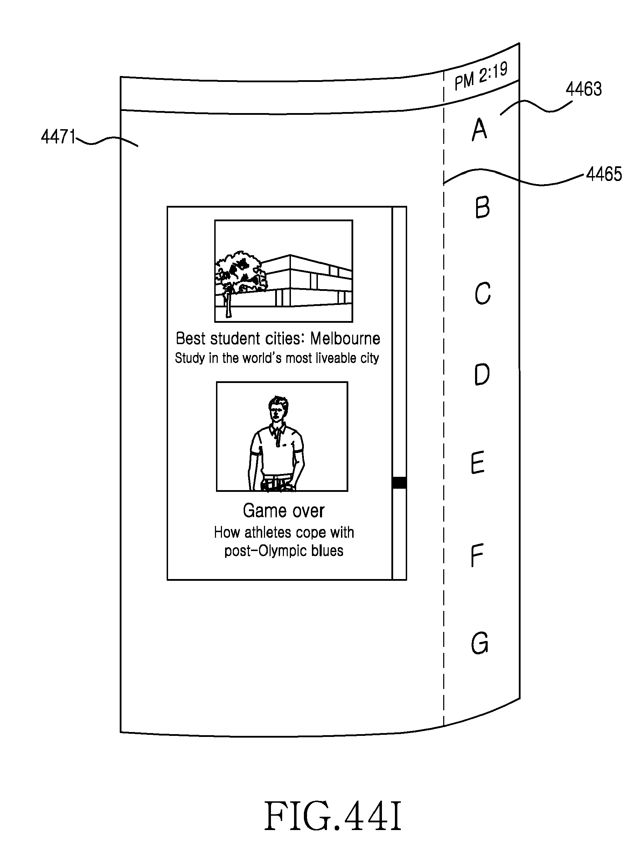

Referring to FIG. 44I, contents 4471, the first index 4463, and the bending line 4465 are displayed on the flexible display. The contents 4471 are displayed beside the first index 4463. The controller may reduce and display the contents 4471 while displaying the first index 4463 on the flexible display. The first index 4473 may be sorted and displayed along the bending line 4475.

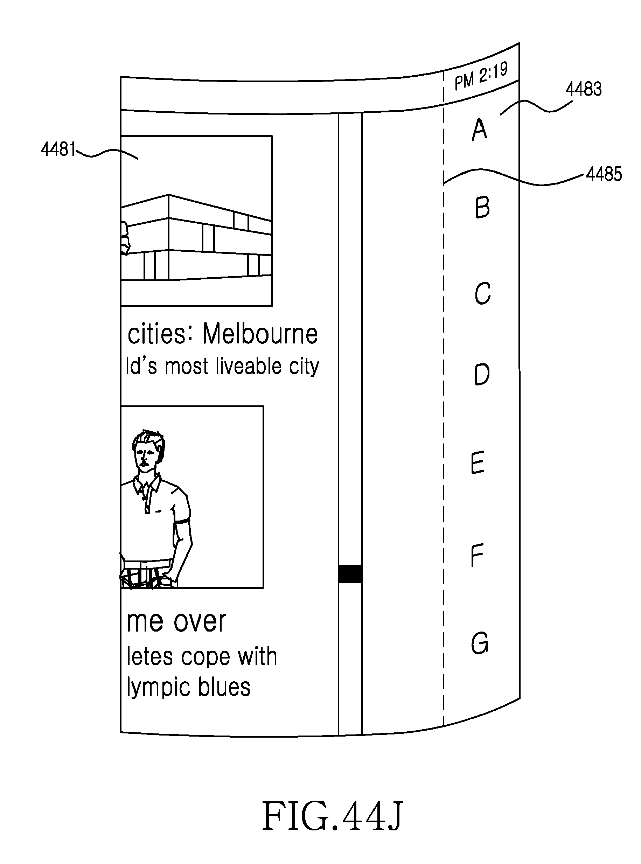

Referring to FIG. 44J, contents 4481, a bending line 4485, and a first index 4483 are displayed on the flexible display. The controller may shift the contents 4481 to the left and display the same while displaying the first index 4483. As the contents 4481 are shifted to the left, a partial region of the contents 4481 may disappear from the flexible display.

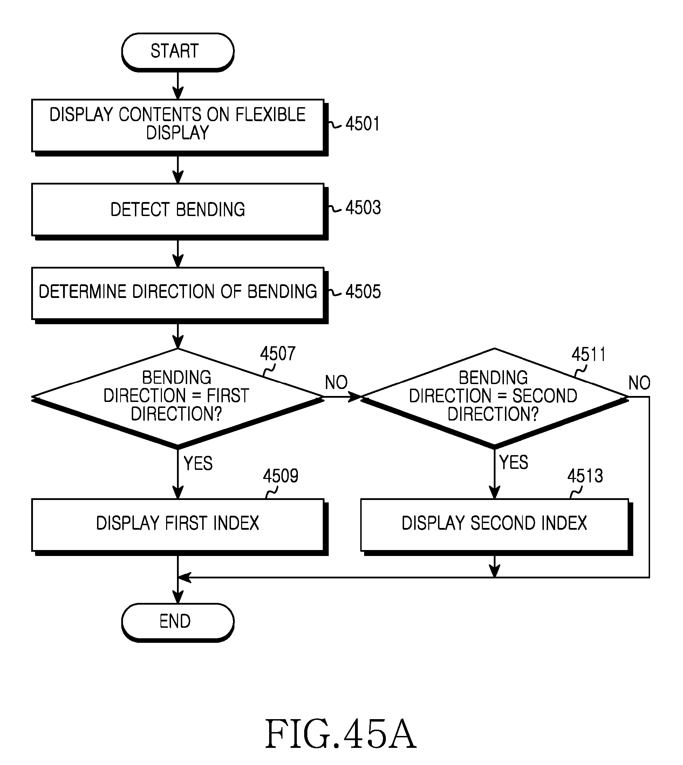

FIGS. 45A to 45D are flowcharts illustrating a process of displaying a first index or a second index depending on the direction of bending and movement of a bending line in the flexible display according to an embodiment of the present disclosure. An electronic device is functionally connected with the flexible display, and may display contents on the flexible display. The electronic device may detect bending of the flexible display, and display first contents related to the contents on a bending region in response to the direction of the bending.

Also, the electronic device may display the first contents or second contents related to the contents on a bending region in response to the direction of the bending. When the direction of the bending is a first direction, the electronic device may display the first contents on the bending region. When the direction of the bending is a second direction, the electronic device may display the second contents on the bending region. The first contents and/or the second contents may be sorted along a bending line generated in response to the bending and displayed in the lengthwise direction of the bending line. The electronic device may detect movement of the bending line and display third contents in response to the movement of the bending line. Also, the electronic device may visually transform and display the first contents in response to the movement of the bending line. The visually transforming may be magnifying, reducing, distorting, color changing, or changing of a font of a character.

The first contents, the second contents, and/or the third contents may include index information related to the contents. The first contents may be a first index. The second contents may be a second index. The third contents may be a third index.

Referring to FIG. 45A, the controller displays contents on the flexible display in operation 4501. The contents may be configured using a plurality of pages. When a user bends the flexible display functionally connected with the electronic device, the detector detects bending of the flexible display in operation 4503. The detector may detect bending of at least a partial region of the flexible display and output a signal corresponding thereto.

The controller may determine the direction of the bending based on a signal output from the detector in operation 4505. The controller determines whether the direction of the bending of the flexible display is the first direction in operation 4507, and when the direction of the bending is the first direction, displays the first index related to the contents on the flexible display in operation 4509. The first index may include information related to the contents. For example, when the contents is a phone number list, the first index may be an initial letter representing a person's name included in the phone number list. In the case where the bending direction of the flexible display is not the first direction, the controller determines whether the bending direction is the second direction in operation 4511, and when the bending direction is the second direction, displays the second index on the flexible display in operation 4513.

Also, when the bending direction of the flexible display is the first direction, the controller may display the first index on the flexible display, and when the bending direction is not the first direction, omit the determination process, and display the second index on the flexible display.

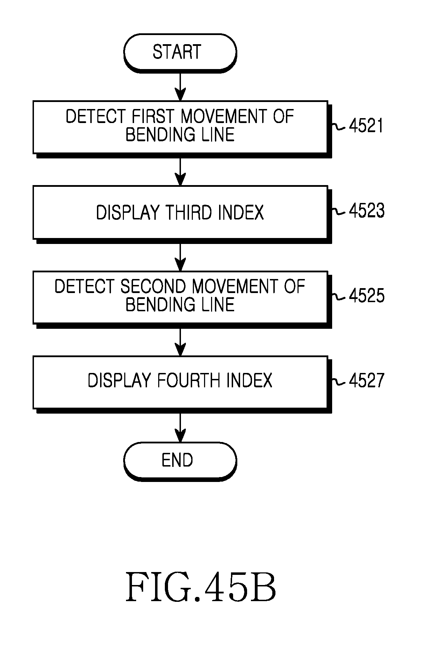

Referring to FIG. 45B, the controller detects first movement of a bending line with the first index displayed on the flexible display in operation 4521. The first bending is generated, so that the flexible display has been bent and a bending line has been generated. When the user bends the flexible display again under this state, the bending line may be moved. As the user continues to bend the flexible display, the bending line continuously moves, and when the bending line moves up to a threshold set in advance, the controller may display a third index on the flexible display in response thereto. Moving of the bending line up to a first threshold after a first bending line is generated may be determined as first movement, and moving of the bending line up to a second threshold may be determined as second movement. The first threshold and the second threshold may be set in advance when the electronic device is manufactured, or set by a user. For example, assuming that the width of the flexible display is 100, the first threshold may be set to 30, and the second threshold may be set to 40. Moving of the bending line up to 30 may be determined as the first movement. Moving of the bending line up to 40 may be determined as the second movement. The controller displays the third index on the flexible display in response to the first movement of the bending line in operation 4523. The third index may include information related to the first index. The third index may include additional information regarding the first index. Also, the third index may include information related to the contents.

The controller detects the second movement of the bending line with the third index displayed on the flexible display in operation 4525. When a user continues to bend the flexible display with the third index displayed on the flexible display, the bending line may be moved. When the bending line exceeds the first threshold and reaches the second threshold, the controller may determine that the bending line has made the second movement. The controller may display a fourth index on the flexible display in response to the second movement of the bending line in operation 4527. The fourth index may include additional information regarding the third index. Also, the fourth index may include additional information regarding the second index. Also, the fourth index may include additional information regarding the first index. Also, the fourth index may include information related to the contents.

When a user bends the flexible display with the first index displayed on the flexible display, the first index may be visually transformed and displayed. The visually transforming may be magnifying, reducing, distorting, color changing, or changing of a font of a character.

When bending is additionally generated with the flexible display bent and accordingly the bending line moves up to the first threshold, the controller may detect the first movement of the bending line. As the bending line makes the first movement, the controller may transform the size of the first index displayed on the flexible display and display the same. For example, when the flexible display is bent and the first index is displayed, and a user additionally bends the flexible display and the bending line reaches 30 which is the first threshold, the controller may magnify and display the letter of the first index.

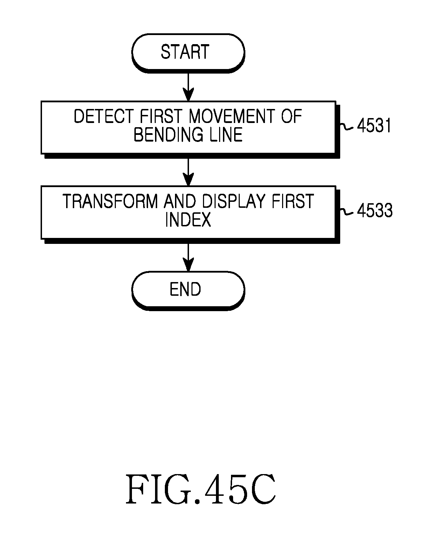

Referring to FIG. 45C, the controller detects the first movement of the bending line with the first index displayed in operation 4531. The controller visually transforms the first index and displays the same in response to the first movement of the bending line in operation 4533. The visually transforming may be magnifying, reducing, distorting, color changing, or changing of a font of a character.

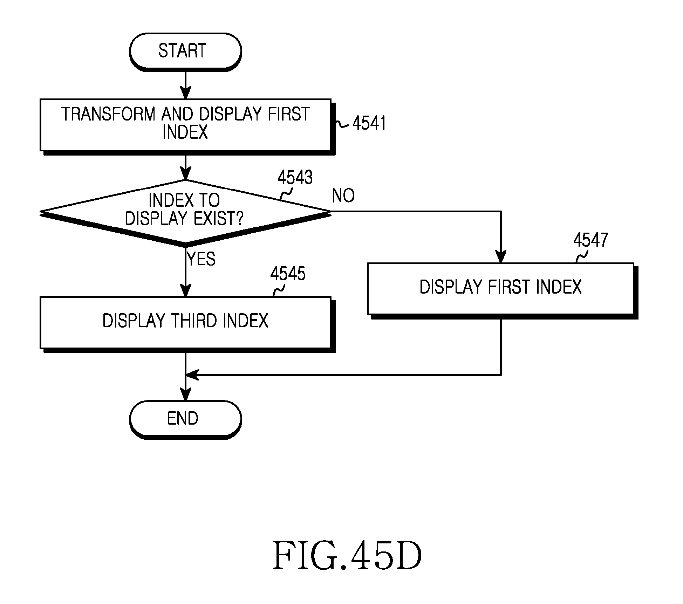

Referring to FIG. 45D, the controller transforms and displays a first index in operation 4541. The controller may detect if an index to display exists in operation 4543. If the index to display exists in operation 4543, the controller displays the thread index in operation 4545. Otherwise, the controller displays the first index in operation 4547.

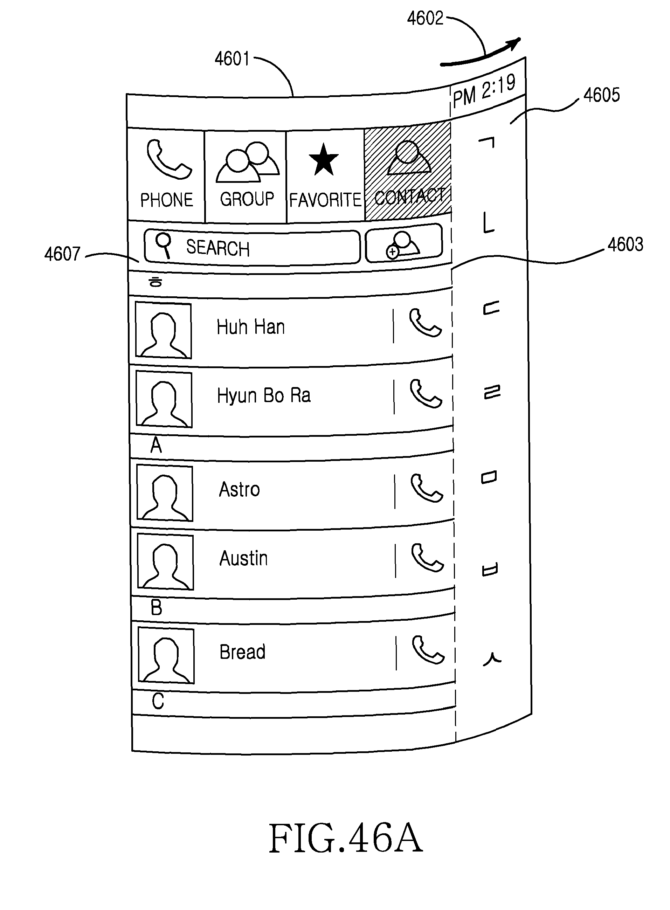

FIGS. 46A to 46E are views illustrating a process where a first index, a second index, a third index, and a fourth index are displayed depending on movement of a bending line according to an embodiment of the present disclosure. The electronic device may include a detector for detecting bending in at least a partial region of the flexible display and outputting a signal corresponding thereto. The electronic device may include a controller set to determine an attribute including at least one of a direction, a pressure, a velocity, or a size related to the bending based on the signal, when the attribute is a first attribute, display first contents related to the contents on the at least partial region or another region of the flexible display, and when the attribute is a second attribute, display second contents related to the contents on the at least partial region or another region. The controller may be set to determine a region on which at least one of the first contents and the second contents is displayed based on the position of a gesture detected via the flexible display. The first contents and the second contents may be sorted and displayed along a bending line generated based on the bending. The controller may detect movement of the bending line, and transform at least a portion of the first contents and display the same or display third contents in response to movement of the bending line. The first contents, the second contents, and/or the third contents may include index information. The first contents may be a first index. The second contents may be a second index. The third contents may be a third index.

Referring to FIG. 46A, contents 4607 are displayed on the flexible display 4601. When a user bends the flexible display in the Z- direction 4602, a bending line 4603 may be generated. The controller may display the first index 4605 related to the contents 4607 on the bending region formed in the neighborhood of the bending line 4603. The first index may include information for exploring the contents. As the bending is generated, the bending line 4603 is generated on the flexible display and the first index 4605 is displayed on the bending region formed in the neighborhood of the bending line 4603. The first index 4605 may be sorted and displayed along the bending line 4603.

For example, when a user bends the flexible display with the phone number list 4607 displayed on the flexible display, the first index 4605 related to a phone number is displayed on the bending region. The phone number list 4607 includes a name. The first index 4605 includes a Hangul consonant corresponding to an initial letter of a name. Hangul consonants included in the first index 4605 are sorted and displayed in sequence along the bending line 4603. The first index 4605 may be scrolled in the lengthwise direction of the bending line 4603.

When the user bends the flexible display, the controller may determine the direction of bending based on a signal output from the detector. Also, when detecting the bending, the detector may send a signal including information regarding the direction and the size of the bending to the controller. The controller may receive the signal to determine the bending direction and the size of the flexible display.

The controller may display the first index or the second index depending on the bending direction of the flexible display. For example, when the flexible display is bent in the Z- direction, the controller may display the first index 4605 configuring using Hangul consonants in response to thereto. Also, when the flexible display is bent in the Z+ direction, the controller may display the second index configured using English alphabets.

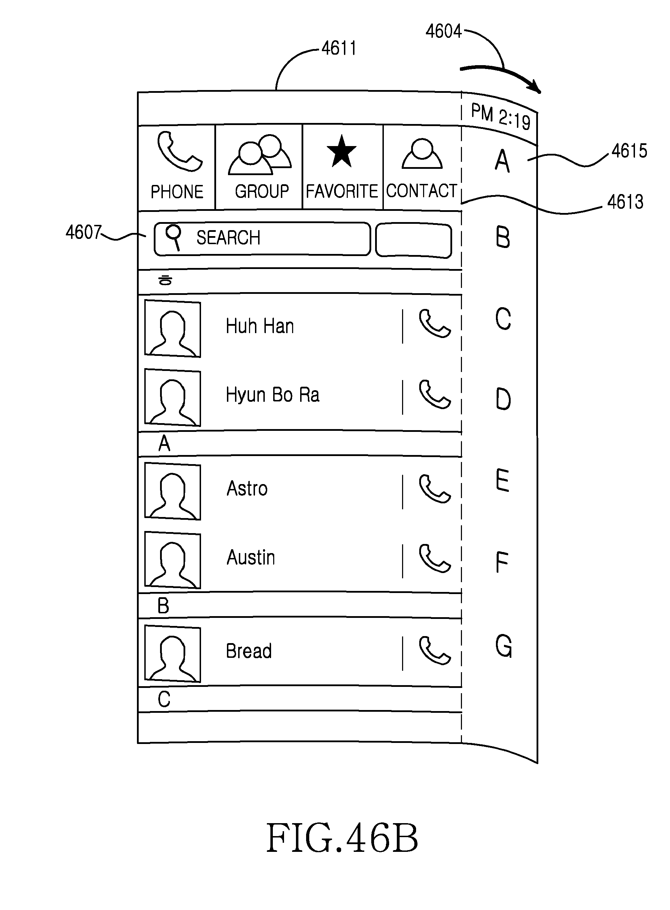

Referring to FIG. 46B, contents 4607, a first index 4615, and a bending line 4613 are displayed on the flexible display 4611. As the flexible display is bent in the Z+ direction 4604, the bending line 4613 is generated, and a second index 4615 is sorted and displayed along the bending line 4613. The second index 4615 may be scrolled in the lengthwise direction of the bending line 4613. The second index 4615 may include information related to the contents.

As the flexible display is bent in the Z+ direction 4604, the controller displays the second index related to the contents along the bending line 4613. For example, when a user bends the flexible display in the Z+ direction 4604 with the phone number list 4607 displayed on the flexible display, the second index 4615 related to the phone number list 4607 is displayed on the bending region. The phone number list 4615 includes an English name. The second index 4615 includes an English alphabet corresponding to an initial letter of a name. The English alphabet included in the second index 4615 is sorted and displayed in sequence along the bending line 4613. The second index 4615 may be scrolled in the lengthwise direction of the bending line 4613.

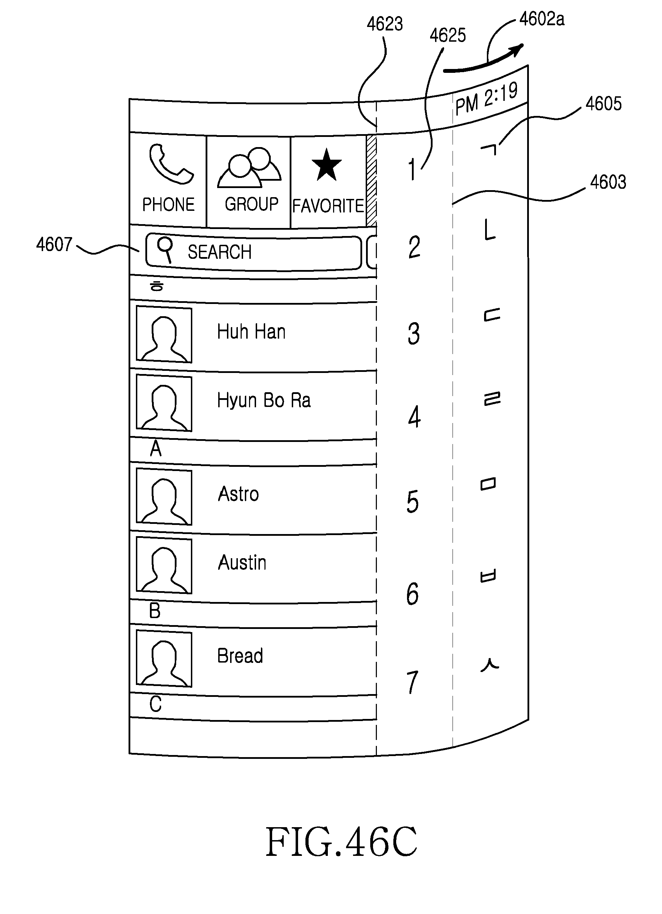

Referring to FIG. 46C, contents 4607, a first index 4605, a third index 4625, bending lines 4603, 4623, and a bending direction 4602a are displayed on the flexible display. The bending direction 4602a is the same direction as the bending direction 4602.

When first bending is generated to the flexible display on which the contents 4607 have been displayed, the first index 4605 related to the contents 4607 is displayed along the bending line 4603. As second bending is generated with the first index 4505 related to the contents displayed on the flexible display, the third index 4625 related to the contents is displayed beside the first index 4605. The controller may display the third index 4625 while maintaining displaying of the first index 4605. Also, the controller may remove the first index 4605 from the screen and display the third index 4625. For example, when a user first-bends the flexible display with the phone number list 4607 displayed on the flexible display, the bending line 4603 is generated and the first index 4605 is displayed on the bending region. When the user bends the flexible display again under this state, the bending line 4605 first-moves up to the position of a first threshold, and a new bending line 4623 is generated. The controller displays the third index 4623 on the bending region along the bending line 4623. The third index may include a number representing a phone number of the phone number list 4607. Also, the third index may include additional information regarding the first index. Also, the third index may include information related to the contents 4507.

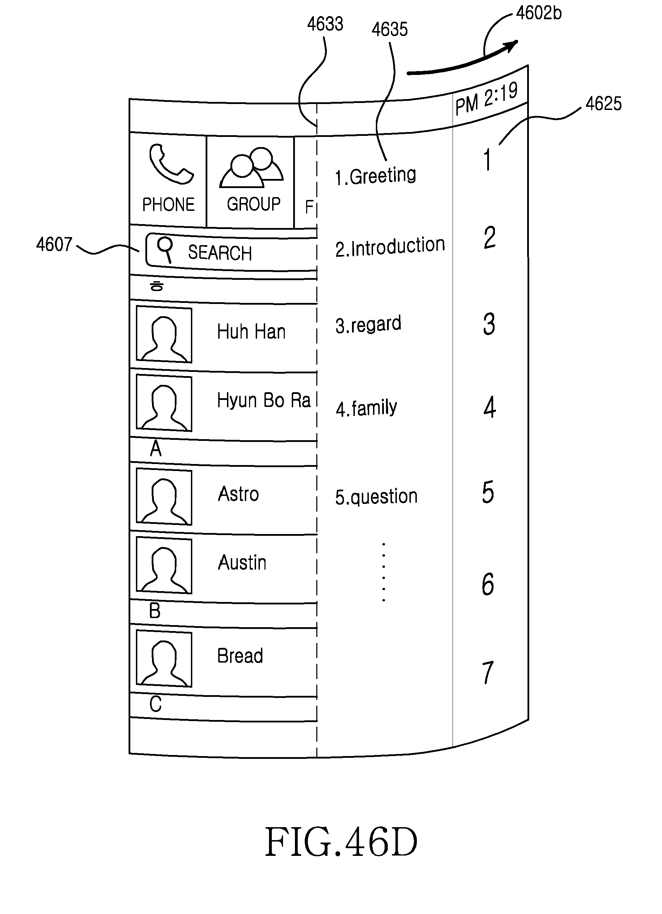

Referring to FIG. 46D, contents 4607, a fourth index 4635, the third index 4625, a bending line 4633, and a bending direction 4602b are displayed on the flexible display. The bending direction 4602b is the same direction as the bending direction 4602a. The controller may detect third bending with the third index 4625 displayed and display the fourth index 4635 in response to the third bending. The direction of the bending is a Z-direction 4602b. The controller may remove the first index from the flexible display while displaying the fourth index 4635 in response to the third bending of the flexible display. The controller may remove the first index that was displayed long ago in time from the flexible display with consideration of a limited display region of the flexible display. The fourth index 4635 and the third index 4625 may be sorted and displayed along the bending line 4633.

When bending is generated continuously in the same direction, the controller may display the first index, the third index, and the fourth index sequentially.

Also, when additional bending is generated with the first index displayed, the controller may magnify and display the first index.

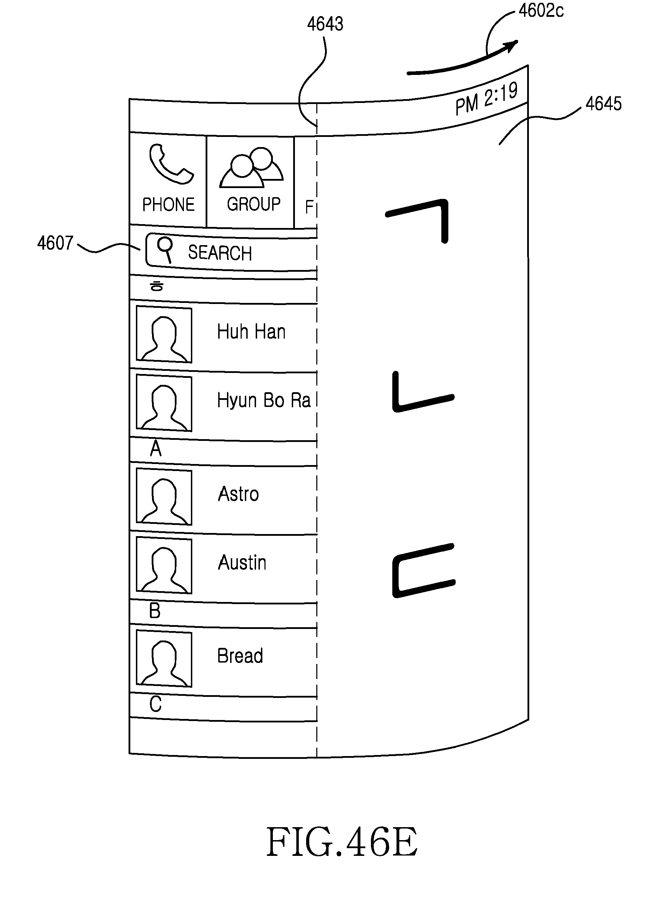

Referring to FIG. 46E, contents 4607, a magnified first index 4645, a bending line 4643, and a bending direction 4602c are displayed on the flexible display.

When a user bends the flexible display on which the contents have been displayed, the bending line is generated and the first index 4643 sorted along the bending line is displayed on a bending region. When additional bending is generated under this state, the controller may determine whether there exist displayable third index and fourth index, and when there do not exist the third index and the fourth index to display, the controller may magnify and display the first index.

Also, when additional bending is generated to the flexible display with the first index displayed, the controller may magnify and display the first index.

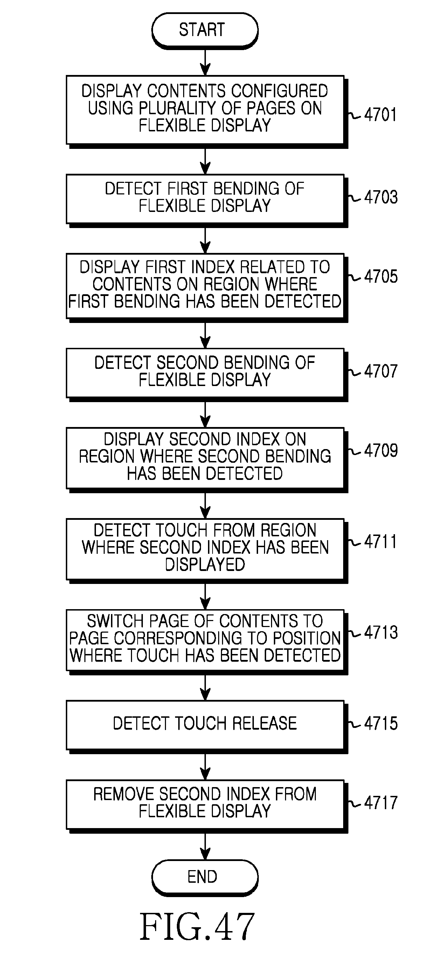

FIG. 47 is a flowchart representing a processing process when a flexible display detects bending and a touch according to an embodiment of the present disclosure. The electronic device is functionally connected to the flexible display and may display a first page among contents configured using a plurality of pages on the flexible display. The electronic device may detect first bending of the flexible display with the first page displayed, and display first contents including connection information for accessing a first item among a plurality of items included in the first page on a bending region where the first bending has been detected in response to the first bending. Also, the electronic device may detect second bending of the flexible display with the first contents displayed, display second contents including connection information for accessing a second item among a plurality of items included in a second page among the contents on a bending region where the second bending has been detected in response to the second bending, and switch the contents to the second page corresponding to the second contents and display the same. The region where the first bending has been detected and the region where the second bending has been detected may overlap each other.

The electronic device may touch a touch on the flexible display and determine a region where the first contents and/or the second contents are displayed based on the touched position. The electronic device may detect a release of a touch, and remove the first contents and/or the second contents from the flexible display based on the release of the touch. After the first contents and the second contents are displayed, the electronic device may maintain displaying of the first contents and/or the second contents even when bending is not detected on the flexible display. The first contents and/or the second contents may include index information related to the contents. The first contents may be a first index. The second contents may be a second index.

Referring to FIG. 47, contents configured using a plurality of pages are displayed on the flexible display operation 4701. The contents may be a phone number list, an address book, and a music file list. Also, the contents may be a thumbnail image list for previewing a photo and a moving picture. The contents may include a plurality of items, and may be configured using a plurality of pages. One page is an item displayed on one screen. For example, in the case where contents include 50 items and the number of items displayed on one screen is 5, one page is configured using 5 items, and the contents is configured using 10 pages.

Also, the contents may be configured using only a plurality of pages. That is, each page may not include a plurality of items. For example, in the case where the contents is an e-book, the contents are configured using a plurality of pages but each page may not include an item.

The detector detects first bending of the flexible display operation 4703. When a user bends the flexible display, the detector detects the bending and outputs a signal. The controller may determine the size of the bending based on the signal output from the detector. In the case where a user additionally bends the flexible display after first-bending the flexible display, the first bending is determined as a first bending, and the additional bending is determined as second bending. For example, when the user bends the flexible display, the controller may determine the first bending has been generated. When the user bends the flexible display again under this state, the controller may determine the second bending has been generated.

When the first bending is generated, the controller displays the first index related to the contents on a bending region where the first bending has been detected in response to the first bending in operation 4705. The controller detects second bending of the flexible display with the first index displayed in operation 4707. The second bending may be the same direction as the first bending. The second bending may have a greater bending angle than the first bending. Also, the second bending may have a direction opposite to that of the first bending. The controller display a second index related to the contents on the bending region where the second bending has been detected in operation 4709. The second index may include a plurality of items. The controller detects a touch on the region where the second index has been displayed in operation 4711. When a user touches one of items in the second index displayed on the flexible display, the controller may determine the item has been selected and display the item such that the item is discriminated from the other items.

The controller switches a page of the contents to a page corresponding to a position where the touch has been detected in operation 4713. For example, when the second index is an alphabet and 'A, B, C, ..., Z' are displayed as the second index on the flexible display, when a user touches and holds 'C', the page of the contents may display from an item starting with 'C'. The controller may continue to display the second index on the flexible display even when bending is not detected while a touch is detected on the flexible display. Also, the controller may continue to display the first index on the flexible display even when bending is not detected while a touch is detected on the flexible display. Also, the controller may perform the same operation even when hovering is detected. For example, even when a user releases his finger's contact from the flexible display with the second index displayed in order to select one of items among the second index, the controller may continue to display at least one of the second index and the first index on the flexible display while hovering is detected even when bending is not detected.

The controller detects whether a touch is released from the flexible display in operation 4715. When a touch signal is not output from a touch sensor included in the detector, the controller may determine that a touch has been released. When a touch release is detected, the controller removes the second index from the flexible display in operation 4717. That is, the second index is not displayed on the flexible display. As the touch is released, the controller removes the second touch that has been displayed on the flexible display in response to the second bending from the flexible display. The controller allows the second index to disappear from the flexible display by removing the second index from the flexible display. Also, as a touch is released, the controller may remove the second index and the first index simultaneously from the flexible display. Also, as a touch is released, the controller may remove only the first index from the flexible display. Also, the controller may remove the second index and/or the first index from the flexible display only when hovering is not detected. For example, when hovering is detected even though a user's finger contact is released from the flexible display, the controller may continue to maintain displaying of the second index and/or the first index on the flexible display. When hovering is not detected, the controller may remove the second index and/or the first index from the flexible display.

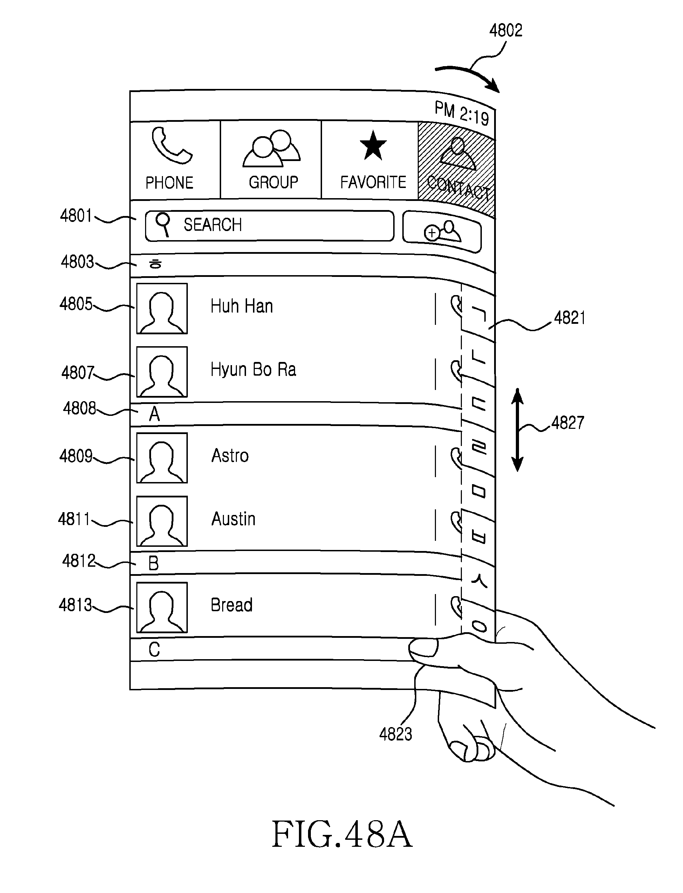

FIGS. 48A to 48E are views illustrating a process where first bending and second bending are generated to a flexible display, and a first index and a second index are displayed in response thereto according to an embodiment of the present disclosure. The electronic device may include a detector for detecting bending of the flexible display. The electronic device may include a controller for displaying a first page among contents configured using a plurality of pages on the flexible display, detecting the first bending of the flexible display from the detector, displaying first contents including connection information for accessing a first item among a plurality of items included in the contents on a region where the first bending has been detected, detecting second bending of the flexible display with the first contents displayed, displaying second contents including connection information for accessing a second item among the plurality of items included in the contents on a bending region where the second bending has been detected in response to the second bending, and switching the contents to a page corresponding to the second item and displaying the same. The controller may determine a region where the first contents are displayed based on a signal output from the detector in displaying the first contents. The controller may detect a touch on a region where the second contents have been displayed, and switch a page of the contents to a page corresponding to an item displayed on a position where the touch has been detected and display the same. The controller may detect a release of the touch, and remove the second contents from the flexible display based on the release of the touch. After the first contents and the second contents are displayed, the controller may maintain displaying of the first contents and the second contents even when bending is not detected on the flexible display.

Referring to FIG. 48A, contents 4801, a plurality of items 4805, 4807, 4809, 4811, 4813, first contents 4821, and a bending direction 4802 are displayed on the flexible display. The first contents 4821 may be a first index. The contents 4801 may be a phone number list, an address book, and a music file list. Also, the contents may be a thumbnail image list for previewing a photo and a moving picture.

The contents may include a plurality of items 4805, 4807, 4809, 4811, 4813. The contents may be configured using a plurality of pages. For example, in the case where the contents include 50 items and the number of items displayed on one screen is 5, one page is configured using 5 items and the contents are configured using 10 pages. The items 4805, 4807, 4809, 4811, 4813 may configure one page.

The first index 4821 may include information related to the contents 4801. For example, the contents 4801 may include the plurality of items 4805, 4807, 4809, 4811, 4813, and the first index 4821 may include ' 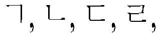 ...' which are initial letters of the plurality of items 4805, 4807, 4809, 4811. When a user 4823 bends the flexible display with the contents 4801 displayed, the detector may detect bending of the flexible display and display the first index 4821 related to the contents 4801 on a bending region. The first index 4821 may be scrolled in the lengthwise direction 4827 of the bending line. For example, the contents 4801 may be a phone number list. The five items 4805, 4807, 4809, 4811, 4813 are displayed on the phone number list. The items 4805, 4807, 4809, 4811, 4813 may be divided to categories. Category names 4803, 4808, 4812 are displayed on the flexible display. The category 4803 is configured using items 4805, 4807. The category 4808 is configured using items 4809, 4811. The category 4812 is configured using an item 4813. The first index 4821 may include a category name. The first index 4821 may include connection information for accessing a first item among the plurality of items 4805, 4807, 4809, 4811, 4813 included in the contents, for example, a Hangul consonant or an English alphabet. When bending is generated to the flexible display, the controller detects the bending and displays the first index 4821 on the flexible display in response to the bending.

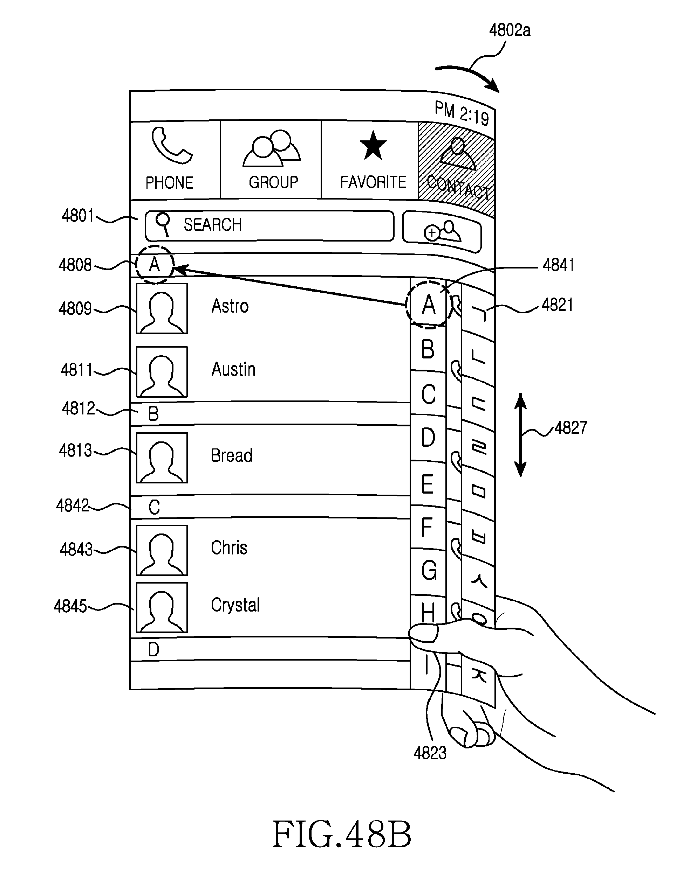

Referring to FIG. 48B, the contents 4801, a plurality of items 4809, 4811, 4813, 4843, 4845, first contents 4821, and a bending direction 4802a are displayed on the flexible display. The first contents 4821 may be the first index. FIG. 48B illustrates a state where bending has been additionally generated to the flexible display under the state of FIG. 48A. When a user additionally bends the flexible display with the first index 4821 displayed, the controller detects second bending. The second bending is bending that has been generated subsequent to the first bending. As the second bending is detected, the controller may display the second contents 4841 on the flexible display 4801. The second content 4841 may be a second index. The second index 4841 may include connection information for accessing a second item among the plurality of items included in the contents. The contents are configured using a plurality of pages, and each page may include a plurality of items. A first item among the plurality of items included in the contents may be displayed on a first page. A second item among the plurality of items included in the contents may be displayed on a second page. The second index 4841 may be displayed side by side beside the first index 4821. Also, the controller may remove the first index 4821 from the flexible display while displaying the second index 4841. The second index 4841 may be scrolled in the lengthwise direction 4827 of the bending line. The controller may switch a page of contents to a page corresponding to a second index 4841 and display the same while displaying the second index 4841 on the flexible display. The controller displays a second index 4841 in response to the second bending, and switches a page of the contents to a page of the second index 4841 and displays the same. For example, in case of 'A' which is a first item of the second index 4841, the controller switches a page of the contents to a category 4833 starting with 'A' and displays the same.

Also, the controller may display the second index 4841 including connection information for accessing a second item among the plurality of items included in the contents on the bending region where the second bending has been detected in response to the second bending, and switch the contents to a page corresponding to the second item and display the same. For example, in the case where the second item is 'Bread 4813', the controller may display the second index 4841 configured using an alphabet on the flexible display in response to second bending, and switch the contents to a page corresponding to the second item (the second item is included in the page) so that the second item may be displayed on the flexible display and display the same.

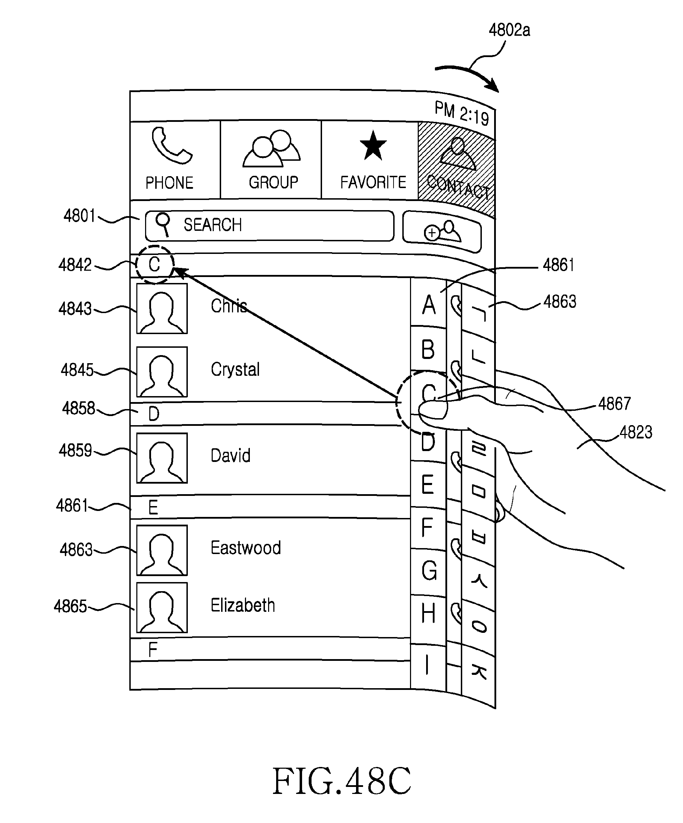

Referring to FIG. 48C, the contents 4801, a plurality of items 4843, 4845, 4859, 4863, 4865, a first index 4863, a second index 4861, and a bending direction 4802a are displayed on the flexible display. FIG. 48C illustrates a state where a touch occurs on one of a plurality of items included in the second index under the state of FIG. 48B. When a user touches one 4867 of items included in the second index with bending maintained in the flexible display, the controller may determine that the item 4867 has been selected. As the item 4867 is selected, the controller may switch a page of the contents to a page corresponding to the position 4867 where the touch has been detected and display the same. For example, when the user touches the point 4867 on which 'C' of the second index has been displayed with his finger, the controller may switch the page of the contents to the page starting with 'C' 4842 in response thereto and display the same.

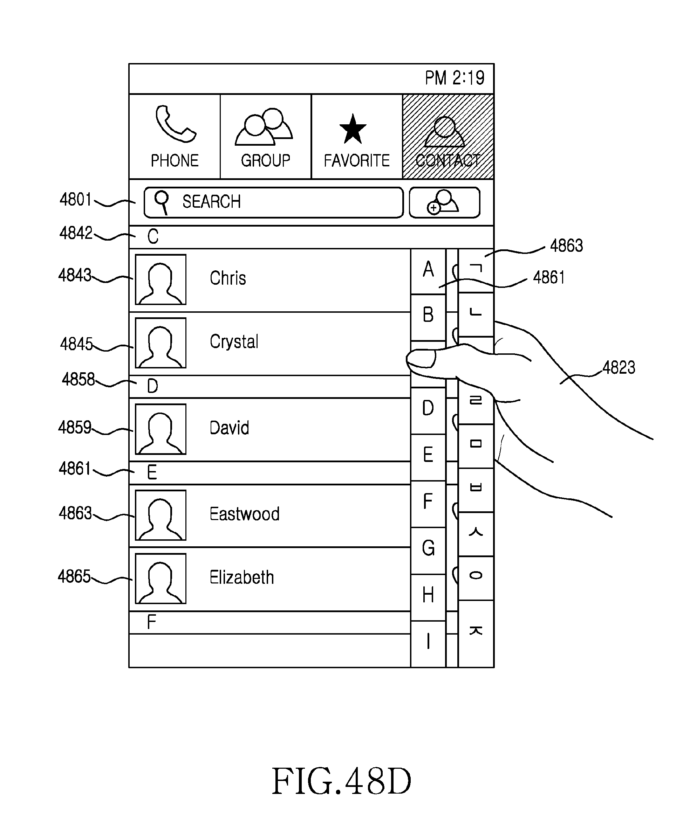

Referring to FIG. 48D, the contents 4801, the plurality of items 4843, 4845, 4859, 4863, 4865, the first index 4863, and the second index 4861 are displayed on the flexible display. FIG. 48D illustrates a state where bending has not been detected in the flexible display under the state of FIG. 48C. The controller may allow the second index 4861 and the first index 4863 to be displayed constantly even when bending is not detected in the flexible display. Even when bending is not detected in the flexible display, the controller may maintain displaying of the first index and the second index while a touch is detected on the flexible display. The user's bending the flexible display constantly in order to maintain displaying of the first index 4863 and the second index 4861 may cause the user's inconvenience. After the first index 4863 and the second index 4861 are displayed on the flexible display, even though bending is not detected in the flexible display, the controller may maintain displaying of the first index 4863 and the second index 4861 while a touch is detected. Also, the controller may maintain displaying of the first index 4863 and the second index 4861 even when hovering is detected.

The controller detects whether a bending or touch signal is output from the detector with the first index 4863 and the second index 4861 displayed. The touch signal is a signal output from the detector when a touch occurs.

Also, the controller may recognize a touched position and maintain displaying of the first index and the second index. The touched position is a position where the touch has occurred. The controller receives a touch signal from the detector to determine the touched position. The controller may maintain displaying of the first index 4863 and the second index 4861 only if the touched position is included in a bending region. That is, when a touch is detected in a region where the first index 4863 and the second index 4861 have been displayed, the controller may maintain displaying of the first index and the second index.

When a touch is released with the first index and the second index displayed on the flexible display 4801, the controller may remove the first index and/or the second index from the flexible display. FIG. 48C illustrates a state where a touch has been released.

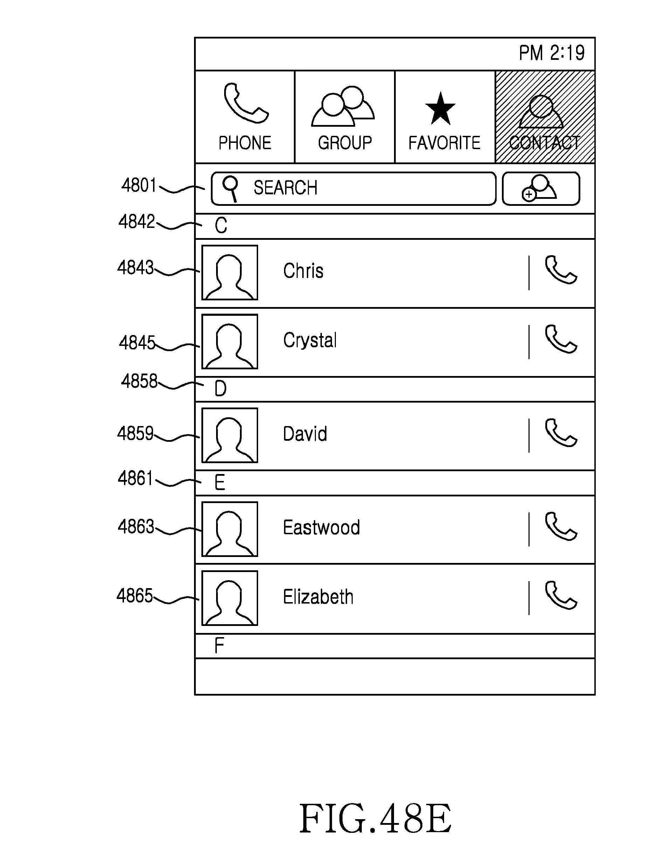

Referring to FIG. 48E, the contents 4801 including the plurality of items 4843, 4845, 4859, 4863, 4865 are displayed on the flexible display. When a touch is released from the flexible display with the first index and the second index displayed, the first index and the second index disappear from the flexible display. When a touch signal is not received from the detector with the first index and the second index displayed, the controller may determine the touch has been released and remove both the first index and the second index from the flexible display. When a touch signal is not received from the detector with the first index and the second index displayed, the controller may determine the touch has been released and remove one of the first index and the second index from the flexible display. Also, the controller may remove the first index and/or the second index from the flexible display only if hovering is not detected. For example, when hovering is detected even though a user's finger contact is released from the flexible display, the controller may maintain displaying of the second index and/or the first index on the flexible display. The controller may remove the second index and/or the first index from the flexible display when hovering is not detected.

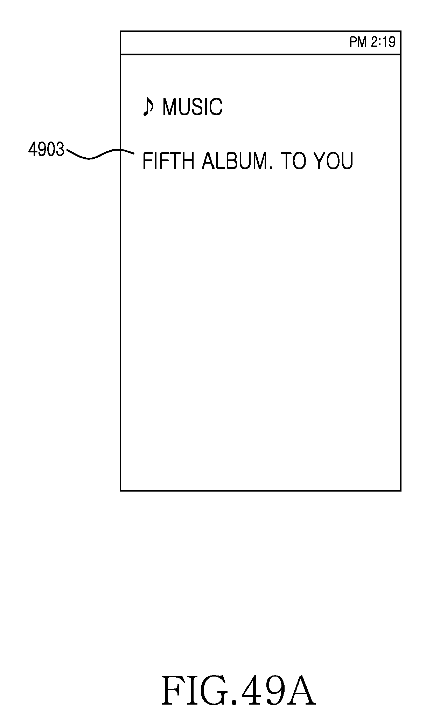

FIGS. 49A to 49D are views illustrating an example of displaying different indexes on a bending region depending on contents displayed on a flexible display and a bending position according to an embodiment of the present disclosure.

The electronic device may display a first page among the contents including a plurality of pages on the flexible display functionally connected to the electronic device, detect bending of the flexible display, and display first contents related to the next page of the first page or second contents related to a previous page displayed on the flexible display on a bending region based on a position where the bending has been detected.

The page may include a plurality of items. When the position where the bending has been detected is a first region of the flexible display, the electronic device may display the first contents on the first region, and when the position where the bending has been detected is a second region of the flexible display, display the second contents on the second region.

The first contents may include connection information for accessing the next page of the page. The first contents may include a plurality of items, and the number of items included in the first contents may change depending on the size of the bending.

The second contents may include connection information for accessing a previous page of the page. The second contents may include a plurality of items, and the number of items included in the second contents may change depending on the size of the bending.

Also, the first contents may include at least partial information of the next page of the page. An amount of the information of the first contents may change depending on the size of the bending.

Also, the second contents may include at least partial information of a previous page of the page. An amount of the information of the second contents may change depending on the size of the bending.

Referring to FIG. 49A, contents 4903 are displayed on the flexible display device.

The contents 4903 may be a phone number list, an address book, and a music file list. Also, the contents may be a thumbnail image list for previewing a photo or a moving picture. Also, the contents may be an e-book. The contents 4903 may include a plurality of items and may be configured using a plurality of pages.

One (a first page) of a plurality of pages included in the contents may be displayed on the flexible display. One page may include a plurality of items. When detecting bending with the contents displayed on the flexible display, the controller may display first contents or second contents related to the contents on a bending region based on the contents and a position where the bending has been detected. When bending is detected on a first region of the flexible display, the controller may display the first contents related to the contents on the first region of the flexible display. When bending is detected on a second region of the flexible display, the controller may display the second contents related to the contents on the second region of the flexible display. For example, when a user bends the lower end of the flexible display, the controller may display the first contents related to the contents on a first bending region generated on the lower end. When the user bends the upper end of the flexible display, the controller may display second contents related to the contents on a second bending region generated on the upper end.

The first contents may include the next item of the contents currently displayed on the flexible display or information of at least a portion of the next page. The second contents may include a previous item of the contents currently displayed on the flexible display or information of at least a portion of a previous page.

Also, the first contents may be an index corresponding to the next item of the contents or may be an index corresponding to the next page. The second contents may be an index corresponding to a previous item of the contents or may be an index corresponding to a previous page. The first contents and the second contents may be sorted sequentially.

For example, in the case where contents is a music album and a 'fifth album' of a music album is displayed on the flexible display, the first contents may be a portion of 'a sixth album' or an index regarding 'the sixth album'. The second contents may be a portion of 'a fourth album' or an index regarding 'the fourth album'.

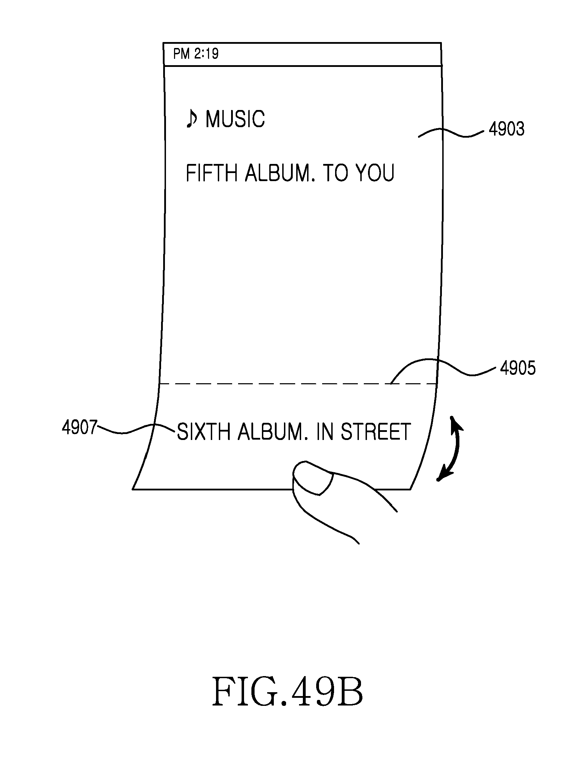

Referring to FIG. 49B, contents 4903, a bending line 4905, and first contents 4907 are displayed on the flexible display. The first contents 4907 may be an index regarding the next item of the contents 4903. For example, when a user bends the lower portion of the flexible display with a music album 'fifth album' displayed on the flexible display, an index regarding 'a sixth album' which is the next item of the 'fifth album' may be displayed on the bending region. Also, the first contents may be an index related to the contents 4903. As the user bends the lower portion of the flexible display, the bending line 4905 may be generated on the lower portion of the flexible display. The bending line 4905 is a line virtually generated by the user's bending, and may be generated at a different portion depending on the position and the size of the bending.

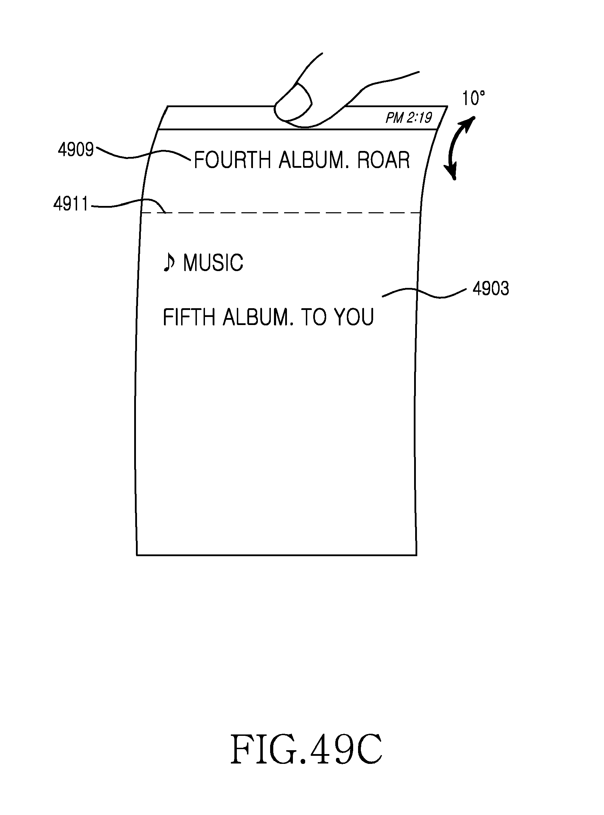

Referring to FIG. 49C, the contents 4903, a bending line 4911, and second contents 4909 are displayed on the flexible display. The second contents 4909 may be an index regarding a previous item of the contents 4903. For example, when a user bends the upper end of the flexible display with a music album 'fifth album' displayed on the flexible display, an index regarding the 'fourth album' may be displayed on the bending region. Also, the second contents may be an index related to the contents 4903. As the user bends the upper portion of the flexible display, the bending line 4911 is generated on the upper portion of the flexible display. The bending line 4911 is a line virtually generated by the user's bending, and may be generated at a different portion depending on the position and the size of the bending. When the size of the bending is greater than a predetermined value, a plurality of items may be displayed on the bending region.

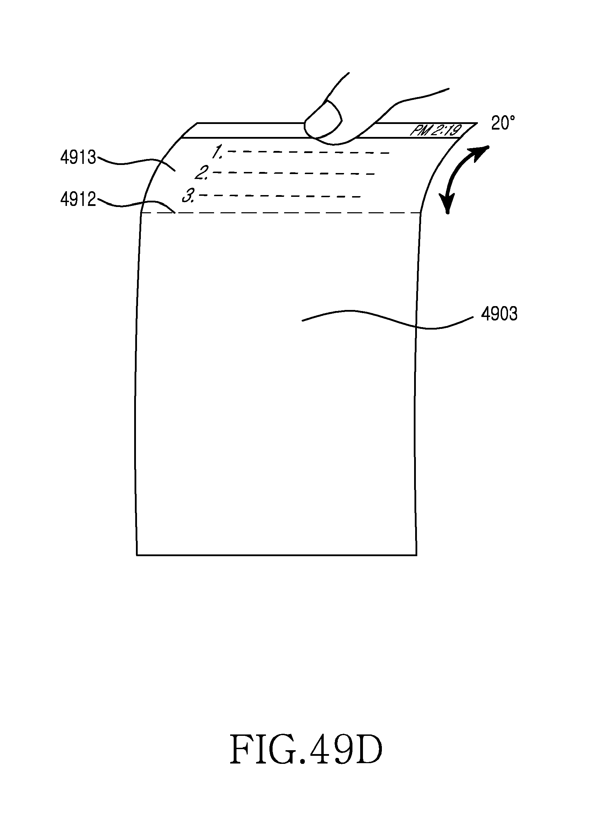

Referring to FIG. 49D, the contents 4903, second contents 4913, and a bending line 4912 are displayed on the flexible display. The second contents 4913 related to the contents 4903 are displayed on a bending region generated in the neighborhood of the bending line 4912. The second contents 4913 may be an index regarding a previous item of the contents 4903, and a plurality of indexes may be displayed. The controller may change the number of items included in the second contents 4913 in response to the size of the bending. For example, when a user bends the flexible display by 10 degrees with a music album 'fifth album' displayed on the flexible display, an index regarding 'a fourth album' which is a previous item of the music album 'fifth album' may be displayed. When the user bends the flexible display by 15 degrees, indexes regarding 'third album, fourth album' which are previous items of the music album 'fifth album' may be displayed.

When the user bends the flexible display by 20 degrees, indexes regarding 'second album, third album, fourth album' which are previous items of the music album 'fifth album' may be displayed. As the user increases the size of the bending, a bending region may increase and the number of items displayed on the bending region may increase.

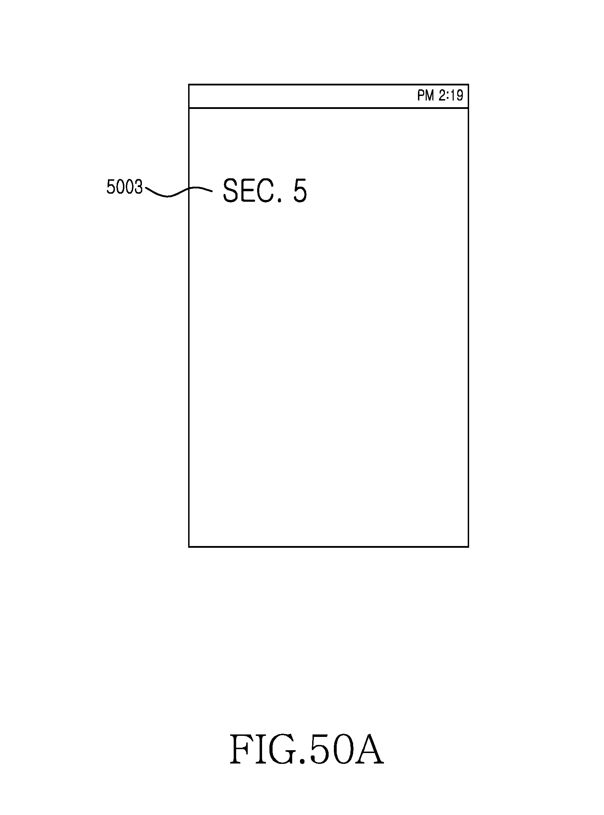

FIGS. 50A to 50C are views illustrating another example of displaying different indexes on a bending region depending on contents and a bending position displayed on a flexible display according to an embodiment of the present disclosure.

Referring to FIG. 50A, contents 5003 are displayed on the flexible display.

The contents 5003 may be a phone number list, an address book, and a music file list. Also, the contents may be a thumbnail image list for previewing a photo or a moving picture. Also, the contents may be an e-book. The contents 5003 may include a plurality of items and may be configured using a plurality of pages.

One (a first page) of a plurality of pages included in the contents may be displayed on the flexible display. One page may include a plurality of items. When detecting bending with the contents displayed on the flexible display, the controller may display first contents or second contents related to the contents on a bending region based on the contents and a position where the bending has been detected. When bending is detected on a first region of the flexible display, the controller may display the first contents related to the contents on the first region of the flexible display. When bending is detected on a second region of the flexible display, the controller may display the second contents related to the contents on the second region of the flexible display. The first contents may include the next item of the contents currently displayed on the flexible display or information of at least a portion of the next page. The second contents may include a previous item of the contents currently displayed on the flexible display or information of at least a portion of a previous page.

Also, the first contents may be an index corresponding to the next item of the contents or may be an index corresponding to the next page. The second contents may be an index corresponding to a previous item of the contents or may be an index corresponding to a previous page. The first contents and the second contents may be sorted sequentially.

For example, when a user bends the right of the flexible display, the controller may display first contents related to the contents on a first bending region generated on the right. When a user bends the left of the flexible display, the controller may display second contents related to the contents on a second bending region generated on the left.

For example, in the case where 'section 5' of an e-book is currently displayed on the flexible display, the first contents may be indexes regarding 'section 6' to 'section 10'. The second contents may be indexes regarding 'section 1' to 'section 4'.

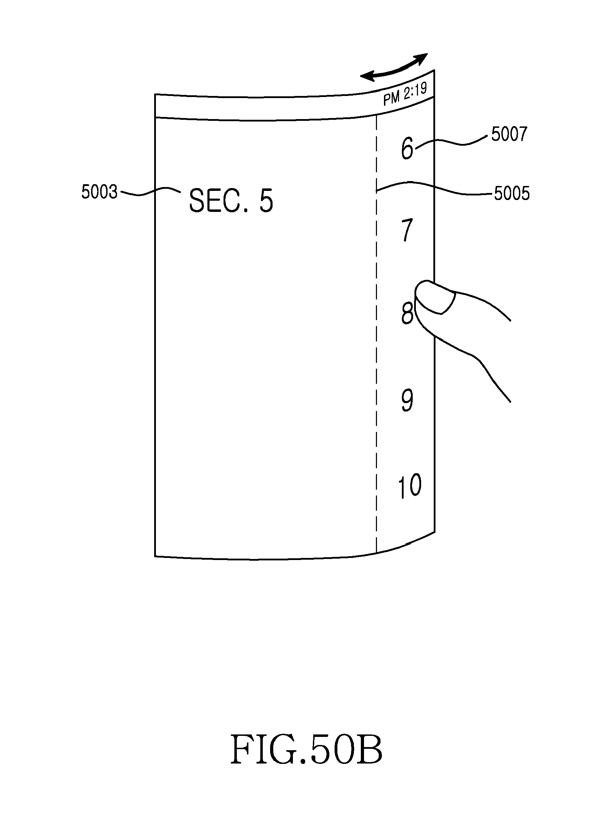

Referring to FIG. 50B, the contents 5003, a bending line 5005, and first contents 5007 are displayed on the flexible display. The first contents 5007 may be an index related to the contents 5003. For example, when a user bends the right of the flexible display with 'section 5' displayed on the flexible display, indexes regarding 'section 6' to 'section 10' may be displayed on a bending region.

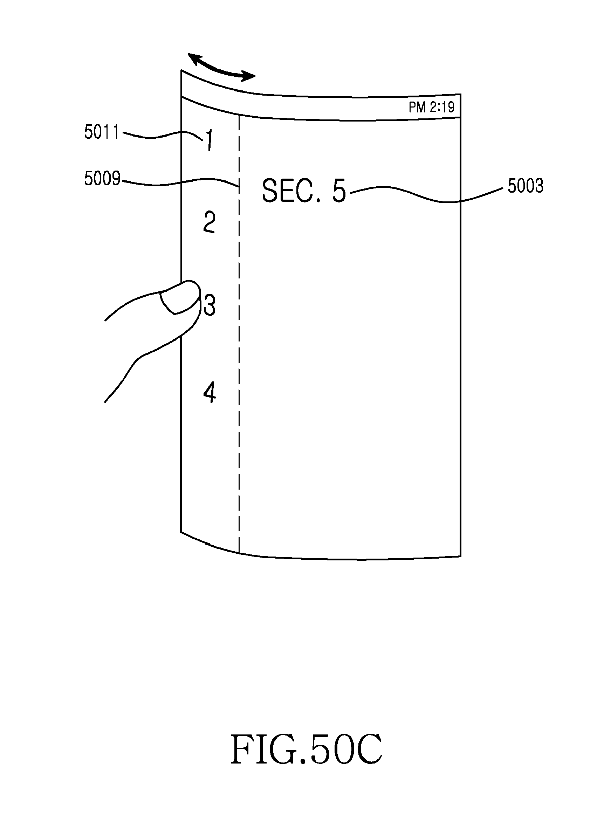

Referring to FIG. 50C, the contents 5003, a bending line 5009, and second contents 5011 are displayed on the flexible display. The second contents 5011 may be an index related to the contents 5003. For example, when a user bends the left of the flexible display with 'section 5' displayed on the flexible display, indexes regarding 'section 1' to 'section 4' may be displayed on a bending region.

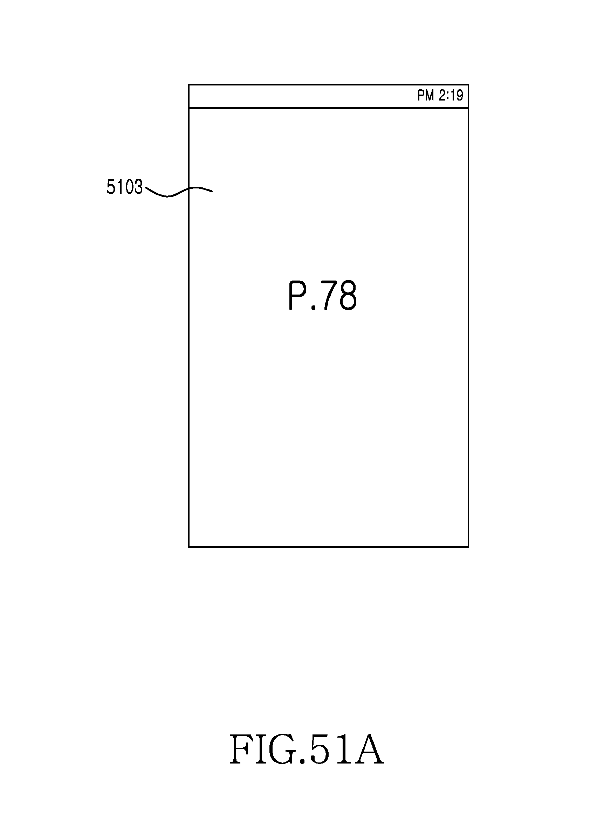

FIGS. 51A to 51C are views illustrating another example of displaying different indexes on a bending region depending on a bending region depending on contents and a bending position displayed on the flexible display according to an embodiment of the present disclosure.

Referring to FIG. 51A, contents 5103 are displayed on the flexible display.

The contents 5103 may be a phone number list, an address book, and a music file list. Also, the contents may be a thumbnail image list for previewing a photo or a moving picture. Also, the contents may be an e-book. The contents 5103 may include a plurality of items and may be configured using a plurality of pages.

One (a first page) of a plurality of pages included in the contents may be displayed on the flexible display. One page may include a plurality of items. When detecting bending with the contents 5103 displayed on the flexible display, the controller may display first contents or second contents related to the contents on a bending region based on the contents and a position where the bending has been detected. When bending is detected on a first region of the flexible display, the controller may display the first contents related to the contents on the first region of the flexible display. When bending is detected on a second region of the flexible display, the controller may display the second contents related to the contents on the second region of the flexible display. For example, when a user bends a corner portion on a right lower end of the flexible display, the controller may display the first contents related to the contents on a first bending region generated on the corner portion on the right lower end. When the user bends a corner portion on a left upper end of the flexible display, the controller may display the second contents related to the contents on a second bending region generated on the corner portion on the left upper end. The first contents may be the next page of the contents. The second contents may be a previous page of the contents. The first contents may be an index corresponding to the next page of the contents. The second contents may be an index corresponding to a previous page of the contents. The first contents and the second contents may be sorted sequentially. For example, in the case where the contents is 'page 78', the first contents may be index regarding 'page 79' to 'page 80'. The second contents may be an index regarding 'page 75' to 'page 77'.

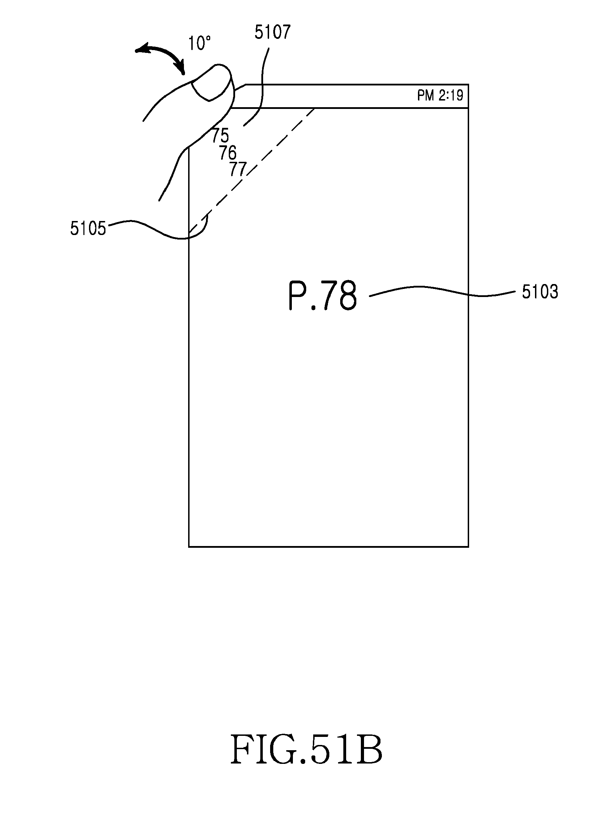

Referring to FIG. 51B, the contents 5103, a bending line 5105, and second contents 5107 are displayed on the flexible display. The second contents 5107 may be an index regarding the contents 5103. For example, when a user bends the left upper end of the flexible display by about 10 degrees with 'page 78' of an e-book displayed on the flexible display, indexes regarding 'page 75' to 'page 77' may be displayed on a bending region.

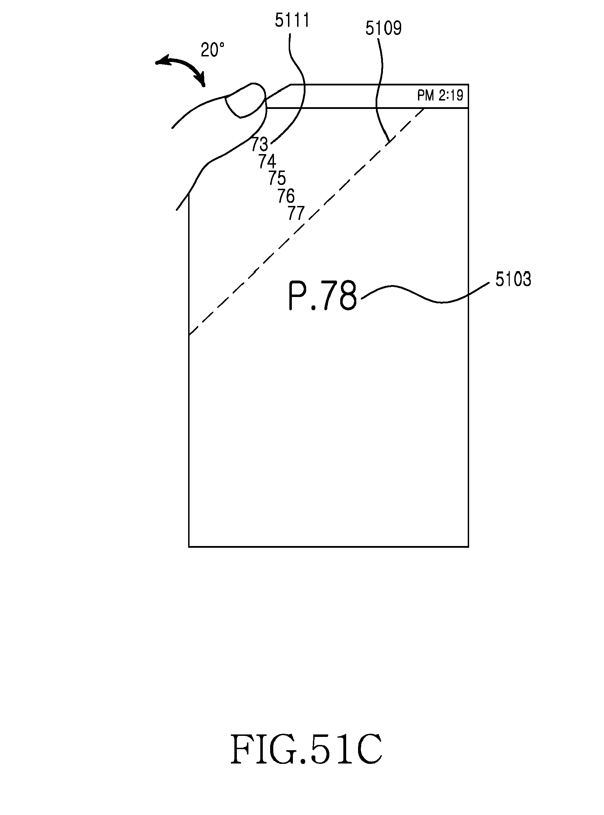

Referring to FIG. 51C, the contents 5103, a bending line 5109, and third contents 5111 are displayed on the flexible display. When a user additionally bends the flexible display under the state of FIG. 51B, an index may be additionally displayed on the flexible display. For example, when the user bends the flexible display by about 20 degrees, a bending region increases even more, and indexes regarding 'page 73' and 'page 74' which have not been displayed in FIG. 51B may be additionally displayed on the bending region.

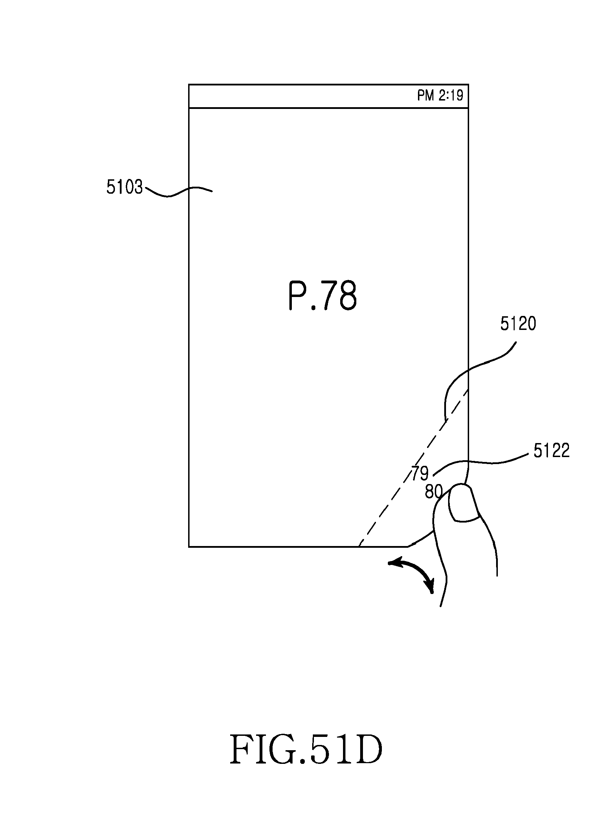

Referring to FIG. 51D, the contents 5103, a bending line 5120, and first contents 5122 are displayed on the flexible display. The first contents may be an index regarding the contents 5103. For example, when a user bends the right lower end of the flexible display with 'page 78' of an e-book displayed on the flexible display, indexes regarding 'page 79' and 'page 80' which are the next pages of 'page 78' may be displayed on the bending region. When the user additionally bends the right lower end portion of the flexible display, the bending region extends and indexes regarding 'page 81' to 'page 83' may be additionally displayed.

As described above, according to various embodiments of the present disclosure, the flexible display device may provide various types of indexes depending on bending of the flexible display. Meanwhile, the above-described various embodiments may be implemented as a program and provided to the flexible display device.

For example, a non-transitory computer readable medium storing a program performing steps of displaying contents on a flexible display, detecting bending of the flexible display, and displaying an index related to contents on a region where the bending has been detected in response to the bending may be provided.

The non-transitory computer readable medium means a medium which stores data semipermanently and which is readable by an apparatus, not a medium that stores data for short moment such as a register, cache, a memory, and the like. Specifically, the above-described applications or programs may be stored in the non-transitory computer readable medium such as a CD, a DVD, a hard disk, a blue ray disk, a USB, a memory card, a ROM, and the like, and provided.

While the present disclosure has been shown and described with reference to various embodiments thereof, it will be understood by those skilled changes in form and details may be made therein without departing from the spirit and scope of the present disclosure as defined by the appended claims and their equivalents.

## Claims

1. A method comprising:
displaying contents comprising a plurality of items on a flexible display functionally connected to an electronic device;
detecting bending of the flexible display; and
displaying first contents related to the contents on a bending region in response to the bending.

2. The method of claim 1, further comprising:
detecting a size of the bending; and
when the size of the bending is greater than a predetermined value, displaying second contents.

3. The method of claim 2, wherein the first contents and the second contents comprise connection information for accessing a specific item among the plurality of items included in the contents.

4. The method of claim 1, further comprising:
detecting additional bending of the flexible display; and
when a direction of the additional bending is changed with respect to a bending direction of a point where the first contents are displayed, displaying second contents.

5. A method comprising:
displaying contents on a flexible display functionally connected with an electronic device;
detecting a first bending at the electronic device;
displaying a plurality of items related to the contents and having a hierarchical structure on a bending region in response to the first bending;
detecting a second bending of the flexible display with one of the plurality of items selected; and
displaying one of an upper layer item or a lower layer item of the selected item in response to a direction of the second bending.

6. A method comprising:
displaying a first page among contents configured using a plurality of pages on a flexible display functionally connected with an electronic device;
detecting first bending of the flexible display;
displaying first contents comprising connection information for accessing a first item among a plurality of items included in the contents on a bending region where the first bending has been detected in response to the first bending;
detecting second bending of the flexible display with the first contents displayed;
displaying second contents comprising connection information for accessing a second item among the plurality of items included in the contents on a bending region where the second bending has been detected in response to the second bending; and
switching the contents to a page corresponding to the second item and displaying the same.

7. The method of claim 6, further comprising:
detecting a touch from a region where the second contents have been displayed; and
switching a page of the contents to a page corresponding to an item displayed on a position where the touch has been detected and displaying the same.

8. The method of claim 6, further comprising:
maintaining, after the first contents and the second contents are displayed, displaying of the first contents and the second contents even when bending is not detected on the flexible display.

9. A method comprising:
displaying a first page among contents comprising a plurality of pages on a flexible display functionally connected with an electronic device;
detecting bending of the flexible display;
displaying, when a position where the bending has been detected is a first region of the flexible display, first contents related to a next page of the first page on the first region; and
displaying, when the position where the bending has been detected is a second region of the flexible display, second contents related to a previous page of the first page on the second region of the flexible display.

10. The method of claim 9, wherein the first contents comprise a plurality of items, and the number of items included in the first contents is changed in response to a size of the bending.

11. An electronic device comprising:
a flexible display;
a detector configured:
to detect bending of the flexible display, and
to output a signal corresponding thereto; and
a controller configured:
to display contents comprising a plurality of items on the flexible display, and
to display first contents related to the contents on a region where the bending has been detected based on the signal.

12. The electronic device of claim 11, wherein the controller is further configured:
to detect a size of the bending based on the signal, and
to display, when the size of the bending is greater than a predetermined value, second contents on the flexible display.

13. The electronic device of claim 11, wherein the controller is further configured
to detect additional bending of the flexible display based on the signal, and
to display, when a direction of the additional bending is changed with respect to a bending direction of a point when the first contents are displayed, second contents.

14. An electronic device comprising:
a bendable flexible display configured to display contents;
a detector configured:
to detect bending on at least a partial region of the flexible display, and
to output a signal corresponding thereto; and
a controller configured:
to determine an attribute comprising at least one of a direction, a pressure, a velocity, and a size related to the bending based on the signal,
to display, when the attribute is a first attribute, first contents related to the contents on the at least partial region or another region of the flexible display, and
to display, when the attribute is a second attribute, second contents related to the contents on the at least partial region or another region.

15. An electronic device comprising:
a flexible display;
a detector configured to detect bending of the flexible display; and
a controller configured
to display a first page among contents configured using a plurality of pages on the flexible display,
to detect first bending of the flexible display with the first page displayed,
to display first contents comprising connection information for accessing a first item among a plurality of items included in the contents on a bending region where the first bending has been detected in response to the first bending,
to detect second bending of the flexible display with the first contents displayed,
to display second contents comprising connection information for accessing a second item among the plurality of items included in the contents on a bending region where the second bending has been detected in response to the second bending, and
to switch the contents to a page corresponding to the second item and displaying the same.
